(19) Europäisches Patentamt
European Patent Office
Office européen des brevets

(11) **EP 4 657 315 A1**

(12) **EUROPEAN PATENT APPLICATION**

(43) Date of publication:
03.12.2025  Bulletin 2025/49

(21) Application number: 25172894.5

(22) Date of filing: 28.04.2025

(51) International Patent Classification (IPC):
*G06N 3/006* (2023.01)      *G06N 3/09* (2023.01)

(52) Cooperative Patent Classification (CPC):
G06N 3/006; G06N 3/044; G06N 3/045;
G06N 3/047; G06N 3/063; G06N 3/08; G06N 3/088;
G06N 5/01; G06N 5/022; G06N 5/041; G06N 5/043;
G06N 7/01; G06N 20/00; G06Q 10/1053;
G06N 3/0455;                                (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 30.05.2024  US 202463653921 P
25.06.2024  US 202418753949

(71) Applicant: **Microsoft Technology Licensing, LLC
Redmond, WA 98052 (US)**

(72) Inventor: **THOMPSON, Ralph Donald, III
Redmond, 98052 (US)**

(74) Representative: **CMS Cameron McKenna Nabarro
Olswang LLP
Cannon Place
78 Cannon Street
London EC4N 6AF (GB)**

(54) **DYNAMIC AGENTS WITH REAL-TIME ALIGNMENT**

(57)   An example may receive at least one input via at least one device. An example may use the at least one input to determine an objective. An example may use the objective, a multi-agent system, and an automated agent to cause at least one first sub-agent of the multi-agent system to generate and execute a first plan including one or more tasks to achieve the objective. An example may cause at least one second sub-agent of the multi-agent system to execute a second plan to supervise the at least one first sub-agent in accordance with a supervision level that indicates a level of supervision of the automated agent by an entity associated with the objective.

FIG. 1

(52) Cooperative Patent Classification (CPC): (Cont.)
G06N 3/0475; G06N 3/048; G06N 3/084;
G06N 3/09; G06N 3/092; G06N 5/02

**Description**

TECHNICAL FIELD

Technical fields to which this disclosure relates include automated agents. Other technical fields to which this disclosure relates include the construction and application of large language model (LLM)-based autonomous agents.

COPYRIGHT NOTICE

This patent document, including the accompanying drawings, contains material that is subject to copyright protection. The copyright owner has no objection to the facsimile reproduction of this patent document, as it appears in the publicly accessible records of the European Patent Office, but otherwise reserves all copyright rights whatsoever.

BACKGROUND

Automated agents can include hardware and/or software components that are capable of performing user-level tasks and actions without direct human instruction. Agents differ from daemons and other computer programs that run as background processes in the level of complexity of the tasks they can execute and the degree to which the agents are capable of interacting with human users.

A device or system can include one or more autonomous and/or semi-autonomous agents. For example, a vehicle may include an autonomous agent that can control the vehicle in response to sensor signals, without asking a human operator whether to, e.g., step on the brake or turn the steering wheel. A semi-autonomous agent of the vehicle may automatically load a map with a navigation plan to get the human driver home to a known destination but then wait for the human driver to confirm the plan and start the vehicle before starting down the road.

BRIEF DESCRIPTION OF THE DRAWINGS

The disclosure will be understood more fully from the detailed description given below and from the accompanying drawings of various embodiments of the disclosure. The drawings are for explanation and understanding only and should not be taken to limit the disclosure to the specific embodiments shown.

> **FIG. 1** is a flow diagram of an example method for configuring and/or operating an automated agent using components of an agent system in accordance with some embodiments of the present disclosure.
> **FIG. 2** is a flow diagram of an example method for creating and configuring an automated agent using components of an agent system in accordance with some embodiments of the present disclosure.
**FIG. 3** is a flow diagram of an example method for operating an automated agent using components of an agent system in accordance with some embodiments of the present disclosure.
**FIG. 4** is a block diagram of an example of architectural components of an automated agent in accordance with some embodiments of the present disclosure.
**FIG. 5** is a flow diagram of an example of communications among components of an automated agent in accordance with some embodiments of the present disclosure.
**FIG. 6** is a block diagram of an example of relationships among registries of an automated agent in accordance with some embodiments of the present disclosure.
**FIG. 7A** is a flow diagram of an example method for dynamically learning a workflow using an automated agent in accordance with some embodiments of the present disclosure.
**FIG. 7B** is a flow diagram of an example method for executing a dynamically learned workflow using an automated agent in accordance with some embodiments of the present disclosure.
**FIG. 8A** is a flow diagram of an example of a layered memory structure for an automated agent in accordance with some embodiments of the present disclosure.
**FIG. 8B** is a flow diagram of an example of a layered memory structure for an automated agent in accordance with some embodiments of the present disclosure.
**FIG. 8C** is a flow diagram of an example of a layered memory structure for an automated agent in accordance with some embodiments of the present disclosure.
**FIG. 9** is a flow diagram of an example of an adaptive machine learning process for an automated agent in accordance with some embodiments of the present disclosure.
**FIG. 10** is a flow diagram of an example of a task decomposition process for an automated agent in accordance with some embodiments of the present disclosure.
**FIG. 11A** illustrates an example of a multi-agent system in accordance with some embodiments of the present disclosure.
**FIG. 11B** illustrates an example of a multi-agent system in accordance with some embodiments of the present disclosure.
**FIG. 12A** illustrates an example of an agent onboarding process, including example depictions of graphical user interface elements, in accordance with some embodiments of the present disclosure.
**FIG. 12B** illustrates an example of a result of the agent onboarding process of **FIG. 12A,** including example depictions of graphical user interface ele-

FIG. 13A1, FIG. 13A2, FIG. 13A3 illustrates an example of a workflow creation process, including example depictions of graphical user interface elements, in accordance with some embodiments of the present disclosure.

FIG. 13B1, FIG. 13B2, FIG. 13B3 illustrates an example of a workflow execution process, including example depictions of graphical user interface elements, in accordance with some embodiments of the present disclosure.

FIG. 14A is a flow diagram of an example method for creating and/or configuring an agent using components of an agent system in accordance with some embodiments of the present disclosure.

FIG. 14B is a flow diagram of an example method for creating and/or configuring an agent using components of an agent system in accordance with some embodiments of the present disclosure.

FIG. 14C is a flow diagram of an example method for creating and/or configuring an agent using components of an agent system in accordance with some embodiments of the present disclosure.

FIG. 14D is a flow diagram of an example method for creating and/or configuring an agent using components of an agent system in accordance with some embodiments of the present disclosure.

FIG. 15 is a block diagram of a computing system that includes an agent system in accordance with some embodiments of the present disclosure.

FIG. 16A is a block diagram of a machine learning model that can be used by and/or included in an agent system in accordance with some embodiments of the present disclosure.

FIG. 16B is a block diagram of a machine learning model that can be used by and/or included in an agent system in accordance with some embodiments of the present disclosure.

FIG. 16C is a block diagram of a machine learning model that can be used by and/or included in an agent system in accordance with some embodiments of the present disclosure.

FIG. 16D is a block diagram of a machine learning model that can be used by and/or included in an agent system in accordance with some embodiments of the present disclosure.

FIG. 16E is a block diagram of a machine learning model that can be used by and/or included in an agent system in accordance with some embodiments of the present disclosure.

FIG. 17 is a block diagram of an example computer system including components of an agent system in accordance with some embodiments of the present disclosure.

## DETAILED DESCRIPTION

A generative artificial intelligence (GAI) model or generative model uses artificial intelligence technology, e.g., machine learning models, e.g., neural networks, to machine-generate digital content based on model inputs and the previously existing data with which the model has been trained. A generative language model is a particular type of GAI model that is capable of generating content in response to model input. The model input includes a task description, also referred to as a prompt. The task description can include instructions (e.g., natural language or multimodal instructions such as "please generate a summary of these search results" or a video recording of a demonstration of how to perform a task) and/or examples of digital content, such as text or multimodal content (e.g., examples of digital images, videos, articles, audio, or other content produced using a particular language, format, writing style, or tone). Portions of the task description can be in the form of natural language text, such as a question or a statement. Alternatively or in addition, a task description or prompt can include non-text forms of content, such as digital imagery and/or digital audio.

A large language model (LLM) is a type of generative language model that is trained in an unsupervised way or self-supervised way on massive amounts of unlabeled data, such as publicly available texts extracted from the Internet, using deep learning techniques. An LLM can be capable of performing multiple different tasks across multiple different domains. A language model (LM) can be similar in function and/or architecture to an LLM except that the LM may be trained on a much smaller dataset, e.g., to perform a domain-specific task. A language model or large language model can be configured to perform one or more natural language processing (NLP) tasks, such as generating content, classifying content, answering questions in a conversational manner, and translating content from one language to another.

GAI models, and more specifically, large language models (LLMs), have demonstrated the ability to perform relatively simple tasks (e.g., single-step tasks or tasks that do not include any sub-tasks) using a conversational natural language question and answer format. However, using LLMs to build autonomous agents that can perform more complex tasks (e.g., multi-step tasks or tasks that have one or more sub-tasks) is much more technically challenging. This is because complex tasks especially require the autonomous agents to perform consistently and generate output in a user-expected and reliable manner, but the inherent nature of LLMs is that the output of the LLMs can be unpredictable. The risk of unpredictable output by LLMs can be a deterrent to the widespread use of LLMs to build autonomous agents.

Various examples seek to mitigate these and/or other technical challenges. Various examples combine generative capabilities of machine learning models, such as language models (LMs) and large language models (LLMs) and/or other artificial intelligence technologies, with adaptive machine learning processes and dynamically structured memory layers. Various examples integrate the memory layers with agent workflows to better align agents and workflows with relevant context data. The context data can include user-, entity- and/or environment-specific preferences pertaining to the agents' roles, capabilities, and/or control (e.g., the agents' level or degree of autonomy). The context data may be derived from data logged or otherwise obtained as a result of users' historical use of agents and/or other software applications such as search engines, social networks, and/or domain applications. Different versions of context data may be stored in different memory levels, and different memory layers can be integrated with different portions of different workflows, such that, for example, examples may customize the selections of context data from different memory levels for different tasks or even for subsequent iterations of the same task.

An additional or alternative benefit of the described multi-layer memory structures include the ability to compress and persist information obtained through machine learning, such as the level of user supervision of the agent preferred by a user and/or other learned preferences. Another additional or alternative benefit of the described multi-layer memory structures is to provide multiple levels of data security, for instance to prevent unauthorized access to user-sensitive data while allowing access to non-sensitive data, in a multi-agent environment. Yet another additional or alternative benefit of the described multi-layer memory structures is to provide multiple different levels of latency, for example so that learned preferences can be stored in lower-latency memory, e.g., real-time data stores, while other data may be stored in higher-latency data stores.

The term role may be used herein to refer collectively to a group or category of tasks, actions, and/or capabilities of, assigned to, or associated with an agent. An agent's role can be controlled, e.g., restricted or expanded, with the permission of an entity such as a user of an online system. For example, a role can include a job title, a skill level, a level of experience, a degree of expertise, one or more task descriptions, or any combination of any of the foregoing, which can be referred to as the agent's scope of capabilities, skills, or tasks. For instance, examples may dynamically configure an agent with a role of "software engineering intern" or "entry level programmer" or "senior software engineer," depending upon the context and/or user preferences. As another example, examples may dynamically configure an agent with a role of "free version" or "premium version" of a software application, or as an "basic" or "economy" or "luxury" or "high end" version of a device, machine, vehicle, or system, in accordance with context data.

As still another example, examples may dynamically configure two different agents with the same role differently depending upon the controlling entity's preferences. For example, different hiring managers may have different ways of performing the same recruiting task, and in that case, examples may dynamically customize the agents associated with each hiring manager according to the particular hiring manager's specific preferences. As another example, different companies may have different tasks associated with the same or similar job description, and examples may dynamically customize the agents associated with each company according to the company's specific preferences for how to perform the role.

The term entity may be used herein to refer to users and/or to other types of entities, such as companies, organizations, institutions, associations, cohorts, or groups of entities. Any aspects of any embodiments that are described in the context of users can also be applied to other types of entities. Any entity can have one more associated automated agents that are dynamically configured for a particular role or task using the approaches described herein.

In more detail, there are specific technical challenges that may limit the performance and usability of conventional large language models (LLMs) for agent-based applications. One challenge is that conventional LLMs lack self-awareness and may not perform well for very specialized roles or newly emerging roles, because the LLMs are usually trained on large web-based corpora that do not reflect the specific context and goals of the agent. Fine-tuning the LLM or carefully designing the agent prompts or architectures may help mitigate this issue. However, these approaches are time consuming and resource intensive. As such, these approaches are not well-suited for dynamic or real-time environments.

Terminology such as "real time" or "dynamic" can refer to a time delay introduced by the use of computer technology, e.g., by back end data processing and/or network transmission, where the time delay is the difference in time, as measured, e.g., by a system clock, between the occurrence of an online event and the use of data processed in response to the event, such as for display, feedback, and/or control purposes. For example, real time or dynamic can refer to a time interval between a user input to a computer system and a presentation of output by the computer system. Dynamic can also or alternatively be used herein to indicate that one or more system components, data structures or data stores, e.g., agents, workflows, databases, vector stores, memory layers, etc., are updated, reconfigured, or refreshed within a time interval that is less than the time interval between two different inputs to a computer system. For example, an agent may access a first workflow w1 and use the first workflow w1 to prepare and present a response r1 to a first input i1 (e.g., a user interaction, sensor signal, etc.) with a computer system at a time t1. The computer system may obtain feedback f1 related to the response r1 at a time t2 which is greater than or equal to the time t1. At a time t3, the first workflow w1 is modified or updated by the computer system based on the feedback f1. If the computer system receives a second input i2 at a time t4, and time t4 is greater than or equal to the time t3, then the first workflow w1 may be said to have been updated dynamically. Agents, data stores, and/or memories may be dynamically updated or reconfigured in similar examples.

As described herein, examples may improve upon alternative approaches by, for example, integrating a structured, layered memory system with the agents and workflows. The memory system includes, for example, contextual, episodic, and collective memories, as described in more detail below. Alternatively or in addition, embodiments use an agent topology that captures and condenses role-specific learning in the layered memory system so that different aspects or levels of learning can be made accessible to the agent in an efficient and scalable way.

Another challenge is that conventional LLMs are usually fine-tuned to align with a "universally correct" or "unified" set of human values, which may not account for the global diversity and variability of human preferences, customs, and expectations. Designing proper prompting strategies may help align the LLMs with diverse human values. However, prompt engineering is a time consuming and resource intensive task, and therefore is not scalable to large populations of diverse users. As described herein, embodiments can, among other things, use observer agents and a Bayesian-inspired adaptive machine learning approach to facilitate user-specific role definition and control. As such, examples may be aligned with the individual user's preferred control criteria alternatively or in addition to a universal set of control parameters. Alternatively or in addition, examples may use a library of "micro-prompts" to reduce the prompt engineering effort.

Still another challenge is that different LLMs may require different types and formats of prompts to generate optimal outputs. Manually crafting prompt elements through trial and error, or automatically generating prompts, are possible but time consuming, resource intensive, and in the case of automatic prompt generation, error-prone. As described herein, embodiments can, among other things, create a library of micro-prompts that are each tailored for a language model that has a well-defined focus (e.g., the model is fine-tuned to a specific task). Alternatively or in addition, embodiments integrate micro-prompts with a hierarchy of memory systems. For example, embodiments associate each micro-prompt with a specific model and a corresponding specific set of model parameters or arguments that may reference different levels of the memory system, allowing for a more nuanced and flexible approach to prompt configuration.

Yet another challenge is that LLMs tend to produce false information with high confidence, also known as AI hallucination. This is a significant concern especially in autonomous agents, as LLM hallucinations may undermine the safety, security and reliability of the agent. Incorporating human corrective feedback into the process of human-agent interaction can help reduce hallucination. However, conventional approaches for updating models based on user feedback may suffer from latency and other technical issues. As described herein, embodiments can, among other things, configure and use one or more observer agents and/or adaptive machine learning processes to regulate the agent's output proactively before the output is presented to the user to reduce the need for corrective user feedback.

Other challenges that are not well addressed by alternative approaches include the knowledge boundary problem, which is how to constrain the utilization of user-unknown knowledge of the LLM, and the efficiency problem, which is how to reduce the number of calls to the LLMs due to their slow inference speeds. As described herein, examples may use Bayesian inferencing, asynchronous distributed coordination, and hierarchical planning to improve efficiency and optimize the number of calls to the LLMs.

Embodiments of automated agents are configured using a distributed multi-agent system architecture. Aspects of the multi-agent system architecture include: agent topology, memory structure, learning processes, and agent control.

Agent topology can refer to the arrangement of agents and distribution of work among a plurality of agents in a system. One of the technical problems in this area is how to balance the load and the performance of an agent system, especially when agents are distributed across different locations and networks, to improve stability and optimize the use of power and/or other resources. Examples may provide a technical solution that involves a distributed network of agents, applications, services, tools, and resources, that can cooperate and coordinate with each other using a hierarchical memory structure and an asynchronous messaging protocol. Having multiple agents poses another technical problem, which is how to ensure that the agents do not cause harm when acting autonomously, especially if one or more of the agents are physical agents, such as robots, cars, or other types of machines. For example, a technical problem is how to prevent agents from interfering with each other or with the devices or systems that they are interacting with or controlling. Examples may provide a technical solution by configuring adaptive machine learning processes and/or observer agents to monitor and regulate the operations of the agents, as well as the communication and the coordination among agents.

Memory structure can refer to the way that the agents store and access information. A technical problem in this area is how to ensure the security and the privacy of information stored in the memory structures used by an agent system, especially when agents are distributed and have different levels of access and authority. Examples may provide a technical solution that involves a layered memory structure with each layer having associated storage criteria, such as an associated access level. For example, the layered memory structure can include secure centralized repositories of information that can be accessed only by authorized agents, and decentralized and distributed repositories of information that can be accessed by potentially any agent of the system.

Another technical problem is how to use limited resources of the agent system more efficiently, especially when the agents have to process large amounts of complex information. Examples may provide a technical solution that involves having different types of memories, such as working memory, episodic memory, and collective memory, that can store and process information in different ways using learning processes and workflows that can create compact representations of information and move the representations of information into different memory layers according to one or more criteria such storage capacities, latency requirements, and/or agent context.

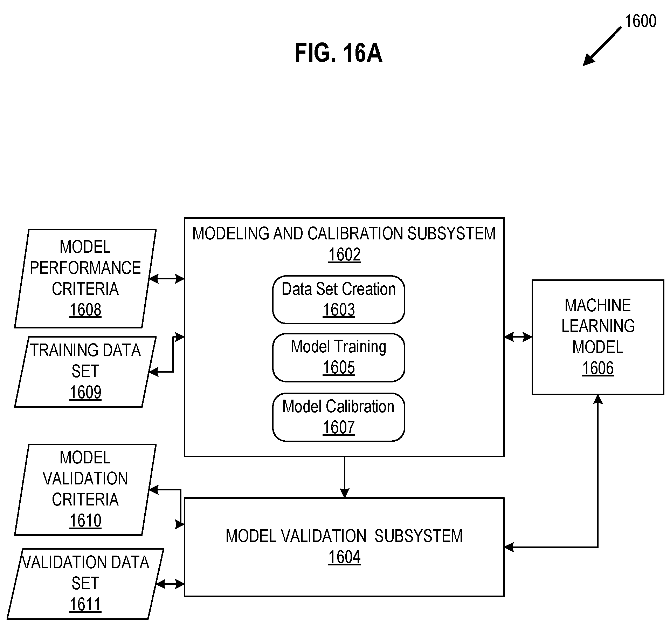

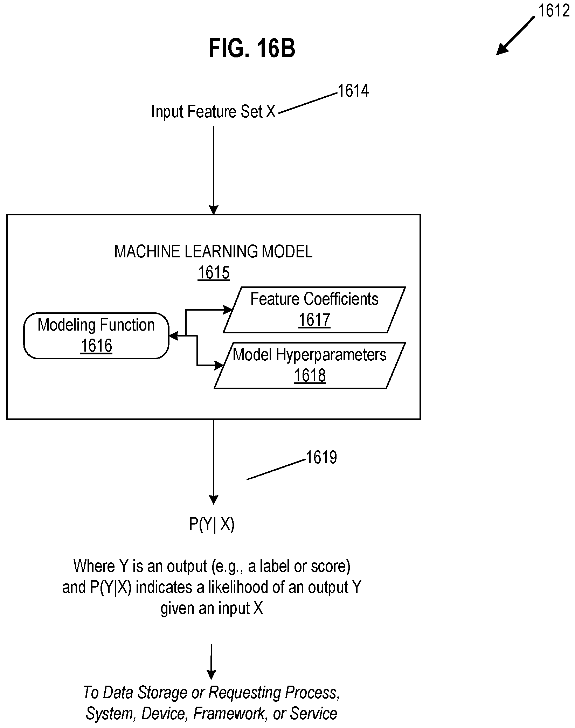

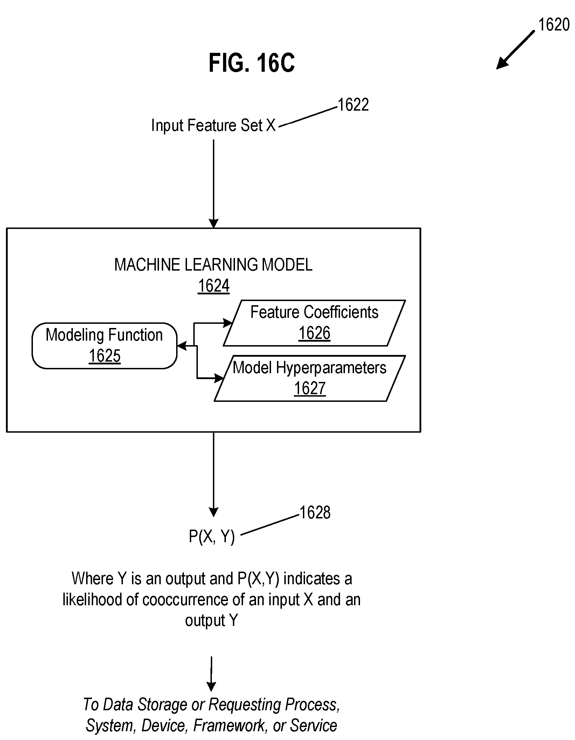

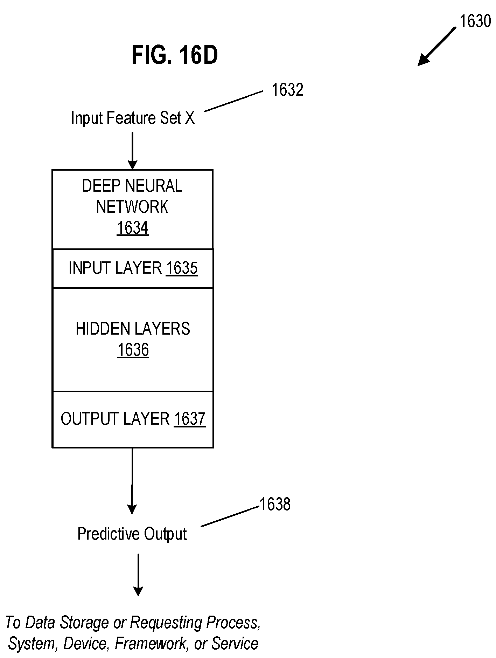

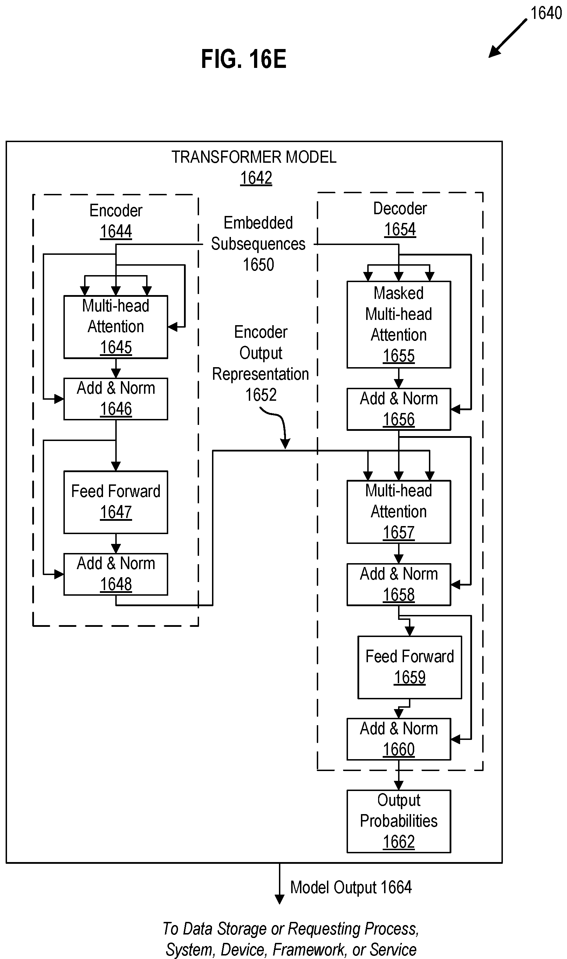

Learning, machine learning, or training can refer to machine learning-based processes that the agents use to improve their performance of tasks and achievement of goals. Examples of machine learning-based processes include processes used to configure, train, pre-train, or fine tune machine learning models, such as but not limited to supervised machine learning, semi-supervised machine learning, unsupervised machine learning, prompt engineering, reinforcement learning, in context learning, retrieval-augmented generation (RAG), retrieval-augmented fine tuning (RAFT), Chain-of-Thought reasoning, and/or Bayesian-style inference learning. For example, RAG or RAFT can be used to perform domain-specific fine tuning of a pre-trained machine learning model using, e.g., samples of digital content that represent the desired domain-specific knowledge. Using RAG, digital content can be stored in and retrieved from a data store, e.g., a database such as a vector database, using queries that are configured to measure the similarity between the digital content in the vector database and the query, question, or request being asked. For example, embedding-based retrieval can be used to match vector representations of digital content stored in a vector database with a vector representation of a query, question, or request. With in-context learning, the retrieved content is used as input to an LM or LLM, which generates a response to the input including the RAG content. In fine tuning, the RAG content can be paired with an expected output to produce a training input-output pair, which is used to fine tune the LM or LLM. Approaches such as RAFT can be used, for example, to customize an LM or LLM according to a particular entity's preferences for performing a task. For example, RAFT can retrieve context data from multi-layer memory structures and use the retrieved context data to fine tune a machine learning model. Additional examples of machine learning models and machine learning-based processes are described with reference to **FIG. 16A, FIG. 16B, FIG. 16C, FIG. 16D, FIG. 16E.**

A technical problem in this area is how to adapt an agent to changes in the agent's environment, including changes in user preferences or application context, while still ensuring reliable output. Examples may provide a technical solution that involves using an adaptive machine learning approach that can dynamically reconfigure agents and workflows in response to context changes.

Agent control can refer to the way that agents interact and communicate with human users and/or operators of the system and/or the frequency of such communications and interactions. A technical problem in this area is how to determine when and how to involve the human user/operator in decision making and the execution of the system. Examples may provide a technical solution that uses adaptive machine learning processes to evaluate and adjust the level of human control over the agents based on the preferences or the expectations of the human user as well as the objectives and the constraints of the system. Another technical problem in this area is how to provide the human with the appropriate information and feedback about the state and the behavior of the agent. Examples may provide a technical solution that includes configuring user interfaces to display and explain the actions of the agent and to interact with the user in a collaborative manner to increase the transparency and the trust of the system.

Certain aspects of the disclosed technologies are described in the context of generative artificial intelligence models that receive text input and output text. However, the disclosed technologies are not limited to generative models that receive text input and produce text output. For example, aspects of the disclosed technologies can be used to receive input and/or generate output that includes non-text forms of content, such as digital imagery, videos, multimedia, audio, hyperlinks, and/or platform-independent file formats.

Certain aspects of the disclosed technologies are described in the context of electronic dialogs conducted via a network with at least one application system, such as a message- or chat-based application system or a search interface of an online system such as a social network system. However, aspects of the disclosed technologies are not limited to message- or chat-based systems or social network services, but can be used to improve various types of applications, machines, devices, and systems.

The disclosure will be understood more fully from the detailed description given below, which references the accompanying drawings. The detailed description of the drawings is for explanation and understanding, and should not be taken to limit the disclosure to the specific embodiments described.

In the drawings and the following description, references may be made to components that have the same name but different reference numbers in different figures. The use of different reference numbers in different figures indicates that components having the same name can represent the same embodiment or different embodiments of the same component. For example, components with the same name but different reference numbers in different figures can have the same or similar functionality such that a description of one of those components with respect to one drawing can apply to other components with the same name in other drawings, in some embodiments.

Also, in the drawings and the following description, components shown and described in connection with some examples may be used with or incorporated into other embodiments. For example, a component illustrated in a certain drawing is not limited to use in connection with the embodiment to which the drawing pertains, but can be used with or incorporated into other embodiments, including embodiments shown in other drawings.

As used herein, dialog, chat, or conversation may refer to one or more conversational threads involving a user of a computing device and an application. For example, a dialog or conversation can have an associated user identifier, session identifier, conversation identifier, or dialog identifier, and an associated timestamp. Thread as used here may refer to one or more rounds of dialog involving the user and an application. A round of dialog as used herein may refer to a user input and an associated system-generated response, e.g., a reply to the user input that is generated at least in part via a generative artificial intelligence model. Any dialog or thread can include one or more different types of digital content, including natural language text, audio, video, digital imagery, hyperlinks, and/or multimodal content such as web pages.

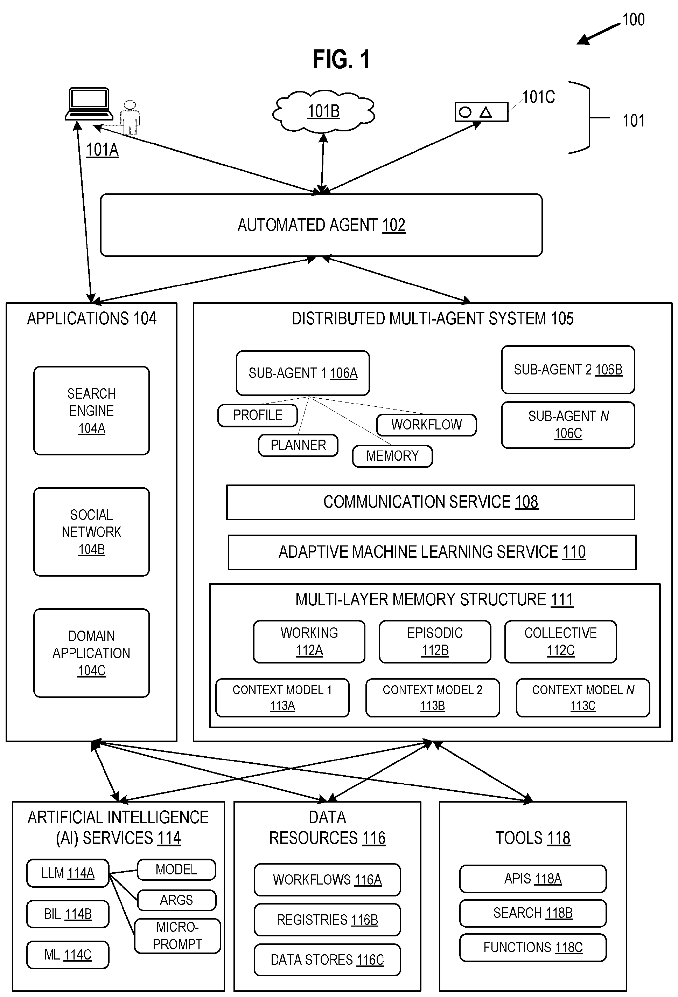

FIG. 1 is a flow diagram of an example method for configuring and/or operating an automated agent using components of an agent system in accordance with some embodiments of the present disclosure.

The method is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method is performed by components of distributed multi-agent system 105, including, in some embodiments, components or flows shown in **FIG. 1** that may not be specifically shown in other figures and/or including, in some embodiments, components or flows shown in other figures that may not be specifically shown in **FIG. 1**. Although shown in a particular sequence, arrangement, or order, unless otherwise specified, the order and/or arrangement of the components and/or processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

In **FIG. 1,** an example computing system 100 is shown, which includes an automated agent 102. The automated agent 102 is in communication with various elements of an environment 101, including a user device 101A, a network 101B, and/or one or more sensing devices 101C. Examples of user devices 101A include computing devices, such as laptop computers, smart phones, mobile computing devices, smart appliances, wearable devices, game controls, vehicle controls, etc. Examples of networks 101B include wireless, optical, and wired communication networks. Examples of sensors include motion sensors, load cells, force sensors, temperature sensors, and network sensors.

The user device 101A can be in communication with one or more applications 104 directly and/or via the automated agent 102. The automated agent 102 is supported by and in communication with one or more of the applications 104 and/or a distributed multi-agent system 105. For example, responsive to receiving input via one or more components of the environment 101, the automated agent 102 can be dynamically configured or reconfigured to perform a task or a series of tasks, via one or more components of the distributed multi-agent system 105.

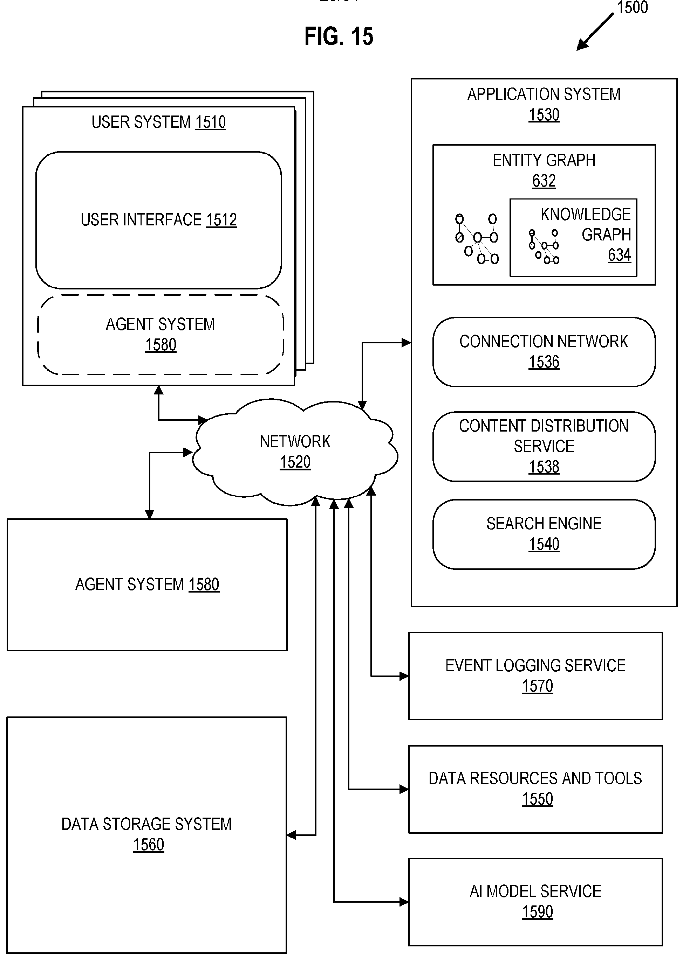

In the example of **FIG. 1,** the components of the computing system 100 are implemented using at least one application server or server cluster, which can include a secure environment (e.g., secure enclave, encryption system, etc.) for the processing of data. In other implementations, one or more components of the computing system 100 are implemented on a client device, such as a user system 1510, described herein with reference to **FIG. 15.** For example, some or all of computing system 100 is implemented directly on a user's device or within an embedded system, in some implementations, thereby avoiding the need to communicate with servers over a network such as the Internet.

In some implementations, the distributed multi-agent system 105 is in bidirectional communication with one or more applications 104, e.g., directly or via a computer network. The one or more applications 104 can include user interface functionality that, in some embodiments, is considered part of or is in communication with automated agent 102 and/or distributed multi-agent system 105. Illustrative, nonlimiting examples of applications that can be included in the applications 104 include search engines 104A, social networks 104B, and/or domain applications 104C. Examples may include other applications alternatively or in addition to search engines 104A, social networks 104B, and domain applications 104C. Search engines 104A can include general-purpose search engines such as Internet search engines and/or domain-specific search engines, for example search engines configured specifically for job searching or entity profile searching. Social networks 104B can include general purpose social networks and/or domain-specific social networks such as professional or job-related social networks. Examples of domain applications 104C include user-facing applications such as job posting services, content distribution services, recruiting tools, ecommerce systems, email and messaging systems, and enterprise applications. Other examples of domain applications include embedded systems such as device control systems, e.g., navigation systems and robotic systems, as well as other types of sensor-based systems such as augmented reality and mixed reality systems.

In the embodiment of **FIG. 1,** the distributed multi-agent system 105 includes a plurality of sub-agents 106A, 106B, ... , *106N,* a communication service 108, an adaptive machine learning service 110, and a multi-layer memory structure 111. Any reference to *N* herein can refer to an *N*th element of a device, component, system, or process, where *N* is a positive integer and the value of *N* can vary depending on the context. For example, in **FIG. 1,** the computing system 100 can include *N* applications 104, *N* sub-agents 106, *N* memory layers, *N* context models, *N* artificial intelligence services 114, *N* data resources 116, and *N* tools 118, where the value of *N* can be the same or different in each case.

The sub-agents 106A, 106B, ... , 106N cooperate and coordinate with each other to perform tasks on behalf of the user. Each sub-agent 106A, 106B, ... , 106N can have a specific role or function, such as a profile sub-agent, a planner sub-agent, a workflow sub-agent, a memory sub-agent, or any other sub-agent that can assist the automated agent 102 in executing tasks and fulfilling user requests or goals.

Any sub-agent 106A, 106B, ... , 106N can include or be defined by a combination of computer code, data, memory, AI services 114, data resources 116, and/or tools 118, which are arranged or configured to perform a specific task or action. For example, a sub-agent 106A, 106B, ... , 106N can have or include an associated agent profile, planner, workflow, and memory. The sub-agent's memory is allocated to the sub-agent via the multi-layer memory structure 111. The sub-agent's profile can be pre-defined or configured dynamically using data obtained from one or more data resources 116. For example, the sub-agent's profile can reference one or more registries 116B, which identify one or more of the workflows 116A, memories 112, AI services 114 and/or tools 118 that are accessible to the sub-agent and can be used by the sub-agent to perform the task identified in the sub-agent's profile.

Portions of each or any of the sub-agents 106A, 106B, ... , 106N can communicate with each other and/or adaptive machine learning service 110, multi-layer memory structure 111, artificial intelligence services 114, data resources 116, tools 118, and with the automated agent 102, via a communication service 108. Communication service 108 facilitates data exchange and message passing among the components of the distributed multi-agent system 105 and/or components of the computing system 100. Embodiments of communication service 108 can include asynchronous messaging capabilities, which can be implemented, for example, using a publish and subscribe messaging protocol. Embodiments of communication service 108 can be implemented using, e.g., an agent framework or GAI application having dockerized endpoints such as REST (representational state transfer) or gRPC (remote procedure call) that are capable of messaging. Use of asynchronous messaging can help with error handling by, for example, preventing infinite loops and enabling agent processes to be stopped at any time.

The automated agent 102 or any sub-agent 106A, 106B, ... , 106N can also access and interface with an adaptive machine learning service 110. For example, a sub-agent can invoke adaptive machine learning service 110 to determine whether a task, request, goal, or objective has been fulfilled and/or to determine whether to dynamically modify a task, workflow or plan. Embodiments of adaptive machine learning service 110 can include or interface with one or more machine learning models that are configured using a Bayesian inference learning technique. For instance, a Bayesian model can be constructed that predicts a user's likely responses to output produced by the automated agent 102, using historical examples of the user's online activity to generate a prior probability distribution. The automated agent 102 can use predictions of user behavior obtained via the Bayesian model to determine how to perform a task, which output to present to the user, and/or how to present output to the user. After the automated agent 102 performs a task and/or presents output to the user, based on the predictions obtained from the Bayesian model, the automated agent 102 monitors the user's actual response to the task performed and output produced by the automated agent 102. The user's actual response is used to update the Bayesian model, e.g., to generate a posterior probability distribution of the user's likely response. On the iteration or use of the sub-agent, the posterior probability distribution becomes the prior distribution from which updated predictions of user behavior are obtained.

Embodiments of the automated agent 102 or any sub-agent 106A, 106B, ... , 106N can be implemented as a stateful, LM- and/or LLM- based multi-actor application with built-in persistent memory. Examples may use LMs and/or LLMs in different contexts. For example, Examples may use LMs to enable agents to perform discrete tasks. References to LLM herein are representative of some embodiments; in other embodiments, LMs can be used alternatively or in addition to the LLMs.

Examples of tools that can be used to construct the automated agent 102 or any sub-agent 106A, 106B, ... , 106N include directive acyclic graph (DAG)-based frameworks and cycle-based frameworks such as LANGGRAPH. For example, portions of multi-layer memory structures described herein can be implemented using the persistent memory features of LANGGRAPH or other frameworks that enable the integrating of persistent memory with application processes and workflows.

Embodiments of the automated agent 102 or any sub-agent 106A, 106B, ... , *106N* include semi-autonomous cognitive artificial intelligence that learns through interactions with human users. Embodiments are data-driven and can include hierarchical planners, automatic prompt engineering, code generation, and API discovery. Embodiments use a layered memory system implemented using persistent memory structures that can be integrated into agents and workflows. In some embodiments, document databases, document-oriented databases, column-oriented data stores, or document stores, such as NOSQL document stores, can be used to implement portions of the multi-layered memory structures. In some embodiments, portions of the multi-layer memory structure can be accessed, referenced, read from or written to using an abstract interface using, e.g., JSON path expressions. Embodiments operate asynchronously and are distributed, as described in more detail herein.

Task or action as used herein can refer to an atomic action or operation that an agent or sub-agent is configured to perform, either alone or in combination with other tasks. Workflow as used herein can refer to an arrangement, sequence, or series of possible tasks that can be used by an agent to respond to a request or complete a goal or objective, from which an agent can select one or more specific tasks to complete the request, goal, or objective. For example, given the same or similar request, goal, or objective, a workflow can include multiple different tasks that may be selected to complete the request, goal, or objective, depending upon the applicable context data. In other words, a workflow can provide an agent with multiple different options for how to complete a request, goal, or objective and the agent can use the currently provided context data to select from among those options in a given instance.

Workflows can be generalized or task-specific. Examples of generalized workflows include workflows that can build or update a context model, workflows that can build or update an agent profile, workflows that can read and write data to and from portions of multi-layer memory structures (e.g., to store user feedback in procedural memory). Another example of a generalized workflow is a workflow that can obtain the inputs required to invoke an agent, e.g., to obtain relevant context, interaction history, learned preferences, etc., to parameterize an action (e.g., a specific task of a workflow performed by an agent). The parameterization of actions enables the actions to be configured and customized dynamically using the most current relevant information. For example, when an action is invoked, a workflow is executed that obtains the relevant context, historical data, and learned preferences from memory and parameterizes the action with that information. Other examples of generalized workflows include workflows for performing adaptive machine learning processes to build context models (e.g., models of users and environments), updating semantic memory, and translating interaction experiences into procedural memory.

Plan as used herein can refer to a specific arrangement, sequence, or series of tasks that have been selected by an agent from among one or more available workflow options to complete a task, goal, or objective. For example, given the same or similar request, goal, or objective, an agent may select one set of tasks to complete the request, goal, or objective in a first context and a different set of tasks to complete the same or similar request, goal, or objective in a second, different context. A plan can include a specific ordering of tasks, i.e., instructions as to which task the agent is to perform first, second, third, etc.

The automated agent 102 or any sub-agent 106A, 106B, ... , 106N can access and interface with one or more layers of multi-layer memory structure 111. In the embodiment of **FIG. 1,** multi-layer memory structure 111 includes a plurality of layers, such as a working memory 112A, an episodic memory 112B, and a collective memory 112C. In other embodiments, other types of memory layers may be used and/or the number of memory layers is configurable depending upon the requirements of a particular design or implementation.

In some embodiments, each of automated agent 102 and every sub-agent 106A, 106B, ... , 106N has its own multi-layer memory structure 111 (e.g., keyed off the agent's unique agent identifier).

The different layers of multi-layer memory structure 111 can store and manage different types of context models 113A, 113B, ... , 113N according to their scope, duration, relevance, and/or other criteria. For example, the working memory 112A can store context models 113A, 113B, ... , 113N that are related to the current dialog or task, the episodic memory 112B can store context models 113A, 113B, ... , 113N that are related to previous dialogs or tasks, and the collective memory 112C can store context models 113A, 113B, ... , 113N that are related to general or domain knowledge.

A context model as used herein may refer to a representation of the state or situation of the automated agent 102, the user, the application 104, or the dialog between the user and the automated agent 102, or a combination of any of the foregoing, at a particular instance, timestamp, or time interval associated with operation of the computing system 100 or automated agent 102, which is created with and/or includes context data. A context model can include various types of information, such as preferences, policies, profile data, historical user activity data, sensor data, network data, model parameters, and/or any other data that can be used to configure an agent, workflow, plan, or task. For example, examples may create, initialize and/or update a context model for a user associated with an automated agent 102 by extracting information from the user's online profile (e.g., a profile page and/or the user's online activity history on a social network). In the case of physical devices that are controlled by the automated agent 102, a context model can include sensor data collected via sensors associated with the physical devices and control signals generated by components of the devices.

Examples of context data include data logged during a user's use of an automated agent 102 and/or one or more applications 104, such as data input, output, or interacted with, the timestamp at the user's login in to the application, and actions taken by the user during the login session, including implicit and/or explicit user interactions with the application's user interface elements. Alternatively or in addition, context data may refer to historical data logged during the user's prior uses of one or more applications and/or aggregate data that represents usage statistics across a group or population of users of the application. For example, context data can include implicit signals such as a count of the number of times content has been presented to the user, the number of times users interacted with content provided by the system, or the latency in the user's response to content. As another example, context data can include explicit signals such as explicit reactions (e.g., thumbs-up, thumbs-down, comments, shares, follows) and/or other explicit or implicit feedback signals. Context data can be used to dynamically configure agents, workflows, tasks, and plans.

The number of context models is not limited and can be configured depending upon the requirements of a particular design or implementation. Any portions of any one or more of context models 113A, 113B, 113C can be stored in any one or more of the memory layers 112A, 112B, 112C. For example, a first context model including data from device 101A may be stored in working memory 112A while a second context model including data from network 101B and/or one or more sensors 101C may be stored in episodic memory 112B and a third context model including data from one or more automated agents 102 or sub-agents 106A, 106B, ... , 106N may be stored in collective memory 112C.

As another example, a first context model including a first combination of data obtained from device 101A, network 101B, and/or sensors 101C over a first time interval may be stored in working memory 112A while a second context model including a second combination of data obtained from device 101A, network 101B, and/or sensors 101C over a second time interval may be stored in episodic memory 112B and a third context model including a third combination of data obtained from device 101A, network 101B, and/or sensors 101C over a third time interval may be stored in collective memory 112C, where the first, second, and third context models, combinations of data, and/or time intervals may be different.

Also or alternatively, different portions of the multi-layer memory structure 111can be used to store context data for different automated agents 102 and/or sub-agents 106A, 106B, ... , 106N. For example, different portions of the working memory 112A and/or episodic memory 112B can be used to store context data for different automated agents 102 and/or different portions of the collective memory 112C can be used to store context data and/or output generated by one or more sub-agents 106A, 106B, ... , 106N. For instance, if an action performed by a first sub-agent 106A, 106B, ... , 106N is dependent upon output of an action of a second sub-agent 106A, 106B, ... , 106N, collective memory 112C can be used to store the output of the second-sub-agent in a memory layer that is accessible by the first sub-agent.

Any one or more of automated agent 102, applications 104 and/or portions of distributed multi-agent system 105 can interface or communicate with any one or more of artificial intelligence (AI) services 114, data resources 116, and/or tools 118 either directly or via a communication service 108 that provides artificial intelligence (AI) services 114 and data resources 116 to the automated agent 102. Any of the AI services 114, data resources 116, and/or tools 118 can be part of the distributed multi-agent system 105 or a separate component, such as a hosted service.

The AI services 114 can include various types of machine learning models and/or algorithms that can enhance the capabilities and performance of the automated agent 102, such as but not limited to one or more large language models (LLMs) 114A, Bayesian inference learning (BIL) models 114B, and machine learning (ML) models 114C, or any other AI service that can provide, for instance, natural language understanding, natural language generation, dialog management, task execution, intent classification, entity extraction, information extraction, code generation, embedding generation models, similarity prediction, scoring, and/or any other function related to the operation of the automated agent 102 or any sub-agent.

A large language model 114A has an associated model type, architecture, and configuration, associated arguments, and associated micro-prompts, where the arguments are placeholders for information, such as context data, to be inserted into the micro-prompts. Micro-prompts are LLM prompts that are tailored for domain- or task-specific (e.g., fine-tuned) language models. For example, a micro-prompt can include a particular combination or arrangement of instructions, constraints, examples, and/or parameters or arguments that is configured specifically to cause a particular domain- or task-specific language model to produce a particular type of output while avoiding or reducing the risk of AI hallucination. For instance, a micro-prompt can be configured to cause a language model to perform a specific atomic action such as to generate a query to access one or more layers of a layered memory structure, or to map data retrieved from a layered memory structure to arguments of another prompt.

A language model or large language model type, architecture, and configuration can include one or more neural network-based machine learning models. In some implementations, a large language model 114A is constructed using a neural network-based deep learning model architecture. In some implementations, the neural network-based architecture includes one or more input layers that receive model inputs, generate one or more embeddings based on the model inputs, and pass the one or more embeddings to one or more other layers of the neural network. In other implementations, the one or more embeddings are generated based on the model input by a pre-processor, the embeddings are input to the neural network model, and the neural network model generates output based on the embeddings.

In some implementations, the neural network-based machine learning model architecture includes one or more self-attention layers that allow the model to assign different weights to portions of the model input. Alternatively or in addition, the neural network architecture includes feed-forward layers and residual connections that allow the model to machine-learn complex data patterns including relationships between different portions of the model input in multiple different contexts. In some implementations, the neural network-based machine learning model architecture is constructed using a transformer-based architecture that includes self-attention layers, feed-forward layers, and residual connections between the layers. The exact number and arrangement of layers of each type as well as the hyperparameter values used to configure the model are determined based on the requirements of a particular design or implementation of the distributed multi-agent system 105.

In some examples, the neural network-based machine learning model architecture includes or is based on one or more generative transformer models, one or more generative pre-trained transformer (GPT) models, one or more bidirectional encoder representations from transformers (BERT) models, one or more language models (LMs), one or more large language models (LLMs), one or more XLNet models, and/or one or more other natural language processing (NL) models. In some examples, the neural network-based machine learning model architecture includes or is based on one or more predictive text neural models that can receive text input and generate one or more outputs based on processing the text with one or more neural network models. Examples of predictive neural models include, but are not limited to, Generative Pre-Trained Transformers (GPT), BERT, and/or Recurrent Neural Networks (RNNs). In some examples, one or more types of neural network-based machine learning model architectures include or are based on one or more multimodal neural networks capable of outputting different modalities (e.g., text, image, sound, etc.) separately and/or in combination based on textual input. Accordingly, in some examples, a multimodal neural network implemented in the agent system is capable of outputting digital content that includes a combination of two or more of text, images, video or audio.

In some implementations, a large language model 114A is trained on a large dataset of digital content such as natural language text, images, videos, audio files, or multi-modal data sets. For example, training samples of digital content such as natural language text extracted from publicly available data sources are used to train one or more generative models used by the agent system. The size and composition of the datasets used to train one or more models used by the agent system can vary according to the requirements of a particular design or implementation of the agent system. In some implementations, one or more of the datasets used to train one or more models used by the agent system includes hundreds of thousands to millions or more different training samples.

In some embodiments, one or more models used by the agent system include multiple generative models trained on differently sized datasets. For example, an agent system can include a comprehensive but low capacity generative model that is trained on a large data set, and the same generative model also can include a less comprehensive but high capacity model that is trained on a smaller data set, where the high capacity model is used to generate outputs based on examples obtained from the low capacity model. In some implementations, reinforcement learning is used to further improve the output of one or more models used by the agent system. In reinforcement learning, ground-truth examples of desired model output are paired with respective inputs, and these input-example output pairs are used to train or fine tune one or more models.

Prompt as used herein may refer to one or more instructions that are readable by a GAI model, such as a large language model 114A, along with the input to which the GAI model is to apply the instructions, and a set of parameter values that constrain the operations of the GAI model during the processing of the prompt and generating and outputting a response to the prompt. The input can include user input and/or context data. The input can be specified explicitly in the prompt or as a reference that is processed at execution time. The instructions can include one or more statements, questions, conditions, constraints, or examples. The examples can include examples of the types of output to be produced by the GAI model and/or examples of the types of processing steps the large language model is to perform in order to generate output.

The parameter values contained in the prompt can be specified by the GAI model and may be adjustable in accordance with the requirements of a particular design or implementation. Examples of parameter values include the maximum length or size of the prompt and the temperature, or degree to which the model produces deterministic output versus random output. The way in which the elements of the prompt are organized and the phrasing used to articulate the prompt elements can significantly affect the output produced by the GAI model in response to the prompt. For example, a small change in the prompt content or structure can cause the GAI model to generate a very different output.

As used herein, zero-shot prompt may refer to a type of large language model prompt that does not include any examples, e.g., the prompt only includes an input and a task description that does not include any examples to guide the large language model as to how to perform the task. An example of a zero-shot prompt is "classify the user input [input1] into action_a, action_b, or action _c," where [input1] is a placeholder for the user input and/or associated context data and action_a, action_b, and action_c are possible intents into which the large language model may classify input1. A few-shot prompt includes examples along with an instruction to cause the large language model to follow the examples provided when processing an input. An example of a few-shot prompt is "'software engineering' → job_search; 'fill' → job_candidate_search; what is the intent of [input1]?" where 'software engineering' → job_search and 'fill' → job_candidate_search are examples of how to classify inputs into search categories, and input1 includes user input and/or context data.

A chain-of-thought prompt as used herein may refer to a type of large language model prompt that includes an input and an example of the types of steps the large language model is to perform; for example, intermediate steps or reasoning. For example, the chain-of-thought prompt can include a series of steps that illustrate to the large language model a process for how to select functions or logical groupings of functions to be included in a plan.

The data resources 116 can include various types of data or information that can be used by the automated agent 102, any sub-agent 106A, 106B, ... , 106N, any of the AI services 114, or any of the tools 118. Examples of data resources 116 include but are not limited to workflows 116A, registries 116B, data stores 116C, and/or any other data resource that can provide knowledge, facts, rules, policies, preferences, or any other information related to the applications 104, the user, the environment 101, and/or the domain of the automated agent 102.

Registries 116B can include, e.g., files, lookup tables, or databases that store information about which AI services 114, data resources 116, and/or tools 118 are accessible to a particular automated agent 102. For example, different automated agents 102 may have different associated registries 116B and the contents of the same type of registry may be different for different automated agents (e.g., the contents of respective workflow registries may be different for different agents). Data stores 116C can include but are not limited to embedding data stores or vector stores (e.g., data stores that store embeddings, i.e., compressed or vector representations of data) and/or other kinds of searchable data stores.

The data resources can include, alternatively or additionally, entity profile data (e.g., user profiles data, company profiles, job postings, etc.), activity data (e.g.,

historical interaction data such as search histories, chat histories, and/or interaction histories associated with the user's use of applications 104), digital content, including documents and other content items that are accessible via Internet search engines, such as web pages and multimedia content, taxonomies, data stores, services, or artificial intelligence models, entity graphs and knowledge graphs, applications 104, such as other vertical applications and/or external applications which may be in communication with the automated agent 102, and metrics, such as performance metrics associated with an AI service, such as a large language model, or any of the data resources or tools. Entity profile data can include example, current and/or historical attribute data associated with the user (e.g., user preferences and/or biographical data such as skills, work experiences, and education history) or another entity associated with the user (such as a company or a computing resource).

The tools 118 can include various types of software and/or hardware components that can facilitate operation of the automated agent 102 and/or the interaction of the automated agent 102 with the AI services 114 and/or the data resources 116. Examples of tools 118 include but are not limited to application programming interfaces (APIs) 118A, search tools 118B, functions 118C, or any other software and/or hardware component that can provide access, retrieval, processing, or manipulation of data or information for the automated agent 102.

In operation, the distributed multi-agent system 105 creates and initializes an instance of the automated agent 102 in response to one or more inputs, signals, or events obtained from the environment 101, in cooperation with one or more applications 104, if applicable, and using one or more AI services 114, data resources 116, and/or tools 118. The automated agent 102 can receive input expressed as structured language and/or conversational natural language, such as text, speech, or gesture. The input can indicate a request, a command, a query, feedback, or any other type of input. The input can be associated with context data, such as a timestamp, a geographic location, a device, network, or session identifier, a topic, a goal, or any other information that can affect the interpretation of the input by the automated agent 102 or the response generated by the automated agent 102 to the input.

To generate a response to the input, the automated agent 102 can invoke one or more sub-agents of the distributed multi-agent system 105. For example, a planner sub-agent of the distributed multi-agent system 105 can be invoked to generate a plan for responding to the input using as input a workflow, a profile, and a context model obtained from one or more of the memory layers. The plan can include a plurality of actions that need to be performed (e.g., in sequence or in parallel), where each action has an associated action sub-agent. Each action sub-agent can operate in a similar manner as the planner sub-agent. For example, an action sub-agent can generate a sub-plan for performing its assigned action in a similar manner as the planner sub-agent generates the plan. In this way, the distributed multi-agent system 105 can provide hierarchical planning in which any plan can be expanded to include a plurality of sub-plans, where each sub-plan is performed by a sub-agent and the output is returned to the planner agent or the calling sub-agent, as the case may be. At any level of the planning hierarchy, the respective agent 102 or sub-agent 106 can coordinate the generation and execution of the respective plan and any sub-plans.

The examples shown in **FIG. 1** and the accompanying description, above are provided for illustration purposes. This disclosure is not limited to the described examples. Additional or alternative details and implementations are described herein.

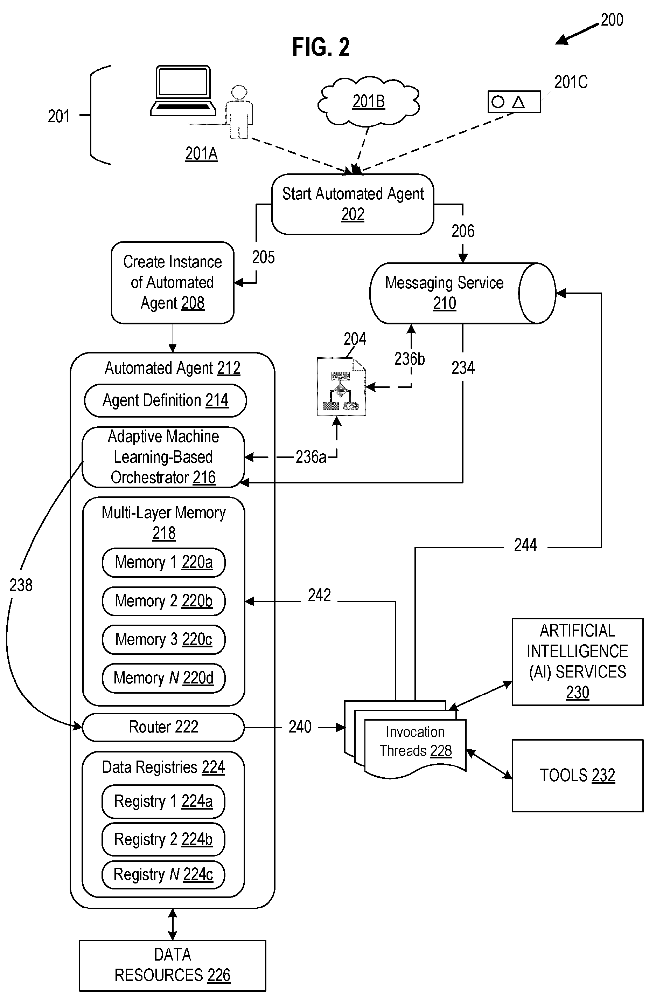

**FIG. 2** is a flow diagram of an example method for creating and configuring an automated agent using components of an agent system in accordance with some embodiments of the present disclosure.

The method is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method is performed by components of distributed multi-agent system 105, including, in some embodiments, components or flows shown in **FIG. 2** that may not be specifically shown in other figures and/or including, in some embodiments, components or flows shown in other figures that may not be specifically shown in **FIG. 2**. Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

In **FIG. 2,** the example method is performed by components of an automated agent system 200. The automated agent system 200 can include one or more components of an environment 201, such as a user device or system 201A, a network 201B, and one or more sensors 201C, one or more messaging services 210, one or more data resources 226, artificial intelligence (AI) services 230, and tools 232.

The one or more messaging services 210 can be or include portions of communication service 108. For instance, the one or more messaging services 210 can facilitate data exchange and message passing among the components of the automated agent system 200. Embodiments of the one or more messaging services 210 can include asynchronous messaging capabilities, which can be implemented, for example, using a publish and subscribe messaging protocol. Embodiments the one or more messaging services 210 can be implemented using, e.g., an agent framework or GAI application having dockerized endpoints such as REST (representational state transfer) or gRPC (remote procedure call) that are capable of messaging. Use of asynchronous messaging can help with error handling by, for example, preventing infinite loops and enabling agent processes to be stopped at any time.

The one or more data resources 226 can be or include portions of data resources 116. For example, the data resources 226 can include various types of data or information that can be used by the automated agent 212, any sub-agent, any of the AI services 230, or any of the tools 232. Examples of data resources 226 include but are not limited to workflows, registries, data stores, and/or any other data resource that can provide knowledge, facts, rules, policies, preferences, or any other information related to one or more applications, the user, the environment 201, and/or the domain of the automated agent 212.

The artificial intelligence (AI) services 230 can be or include portions of AI services 114. For example, the AI services 230 can include various types of machine learning models and/or algorithms that can enhance the capabilities and performance of the automated agent 102, such as but not limited to one or more large language models (LLMs), Bayesian inference learning (BIL) models, machine learning (ML) models, or any other AI service that can provide, for instance, natural language understanding, natural language generation, dialog management, task execution, intent classification, entity extraction, information extraction, code generation, embedding generation models, similarity prediction, scoring, and/or any other function related to the operation of the automated agent 212 or any sub-agent.

The tools 232 can be or include portions of tools 118. For example, the tools 232 can include various types of software and/or hardware components that can facilitate operation of the automated agent 212 and/or the interaction of the automated agent 212 with the AI services 230 and/or the data resources 226. Examples of tools 232 include but are not limited to application programming interfaces (APIs), search tools, functions, or any other software and/or hardware component that can provide access, retrieval, processing, or manipulation of data or information for the automated agent 212.

In the automated agent 200, planner agents, such as adaptive machine learning-based orchestrator 216, each can be interwoven with a multi-layer memory structure 218, which allows the planner agents to maintain their own state (where a state includes a pointer or reference to a portion of the multi-layer memory 218). When a planner agent generates a plan, micro-prompts represent actions within the state of the plan.

One or more signals generated by the environment 201 can trigger a start automated agent process 202. For example, a login to an application 104 can generate a session identifier (ID). The session ID can provide continuity across multiple interactions involving one or more of the components of the environment 201. The start automated agent process 202 can be launched by, e.g., a sub-agent of the distributed multi-agent system 105, in response to a session ID. For example, if input from the environment 201 satisfies a condition or threshold criteria, which can be stored in and retrieved from the multi-layer memory 218, the start automated agent process 202 obtains or creates an agent identifier (e.g., the agent ID can be or include the session ID). The process 202 passes the agent ID to a create instance of automated agent process 208 via flow 205 and also passes the agent ID to messaging service 210 via flow 206.

The process 208 creates and launches an instance of an automated agent, e.g., automated agent 102, which is dynamically configured based on the signal(s) from the environment 201 and/or context data obtained via the multi-layer memory 218. The create instance of automated agent process 208 can include one or more sub-processes that, e.g., load data into data registries 224, initialize messaging service 210, and create the instance of the automated agent based on the data loaded into the data registries 224. For example, the process 208 uses the agent ID obtained from the process 202 to look up the sub-agents, models, micro-prompts, planners, skills, etc., that are accessible to that agent ID, and loads that information into the registries 224. The registry data can be organized according to data type; for example, a registry 1 224a can store model identifiers of LLMs and/or other AI services 230 or tools 232 that are accessible to the agent ID, a registry 2 224b can store micro-prompt identifiers of micro-prompts that are accessible to the agent ID, and one or more additional registries N 224c can store skill identifiers, planner identifiers, or identifiers of data resources 226 that are accessible to the agent ID. Accessible to as used herein can mean that a particular instance of an automated agent (e.g., the instance identified by the agent ID) has permission to access and use the components identified in the registry. Whether the instance has permission can be determined by querying one or more policies, portions of which can be stored in data resources 226 and/or multi-layer memory 218. Since the registries are populated at the time of instance creation, the contents of the registries is dynamic and can be changed or updated from one instance to the next, e.g., based on the then-current signals from the environment 201 and/or data obtained from the multi-layer memory 218 and/or data resources 226.

Automated agent 212 is a representation of the automated agent instance created by process 208. The automated agent 212 is defined by and includes an agent definition 214, adaptive machine learning-based orchestrator 216, multi-layer memory 218, router 222, and data registries 224. The agent definition 214 can include information used to initialize the instance, such as an initial LLM prompt, an agent identifier of an agent that is configured to execute an initialization routine (e.g., an onboarding process), a user identifier, e.g., a user ID that identifies a user profile page, an initial workflow identifier (e.g., an onboarding workflow), an action type (e.g., onboarding), and one or more action identifiers, which can identify actions in the initial workflow. Examples of identifiers or IDs include unique identifiers, such as numeric or alphanumeric codes and URIs (uniform resource identifiers).

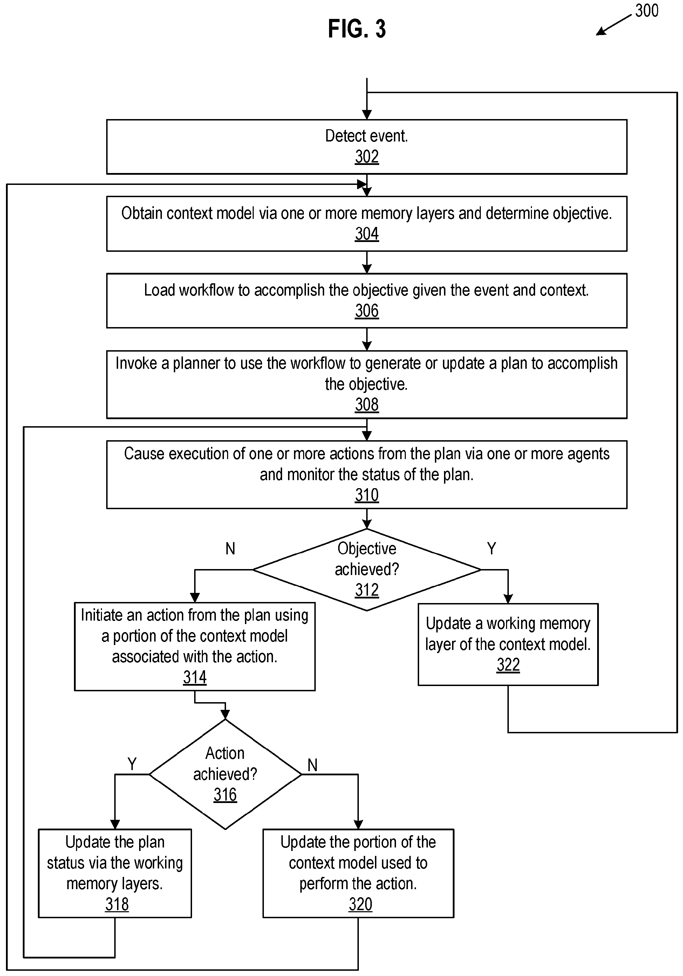

Adaptive machine learning-based orchestrator 216 includes or invokes an AI service 230, such as an LLM, that controls the operation of the automated agent 212 during the instance created by process 208. For example, the orchestrator 216 generates and executes a plan that manages the execution of actions, workflows, and adaptive machine learning processes by automated agent 212 to accomplish a goal, perform a task, or achieve an objective. The plan generated and executed by the orchestrator is based on one or more workflows 204, which are accessible to the orchestrator 216 via flows 236a, 236b, and messaging service 210. The dashed lines in flows 236a and 236b indicate that the one or more workflows 204 can be dynamically retrieved, queried or updated during the operation of automated agent 212. The flow shown in **FIG. 3,** described below, is an example of a process or plan that can be executed by orchestrator 216. In the course of executing a plan, the orchestrator 216 can communicate requests for tools 232 and/or AI services 230 to router 222.

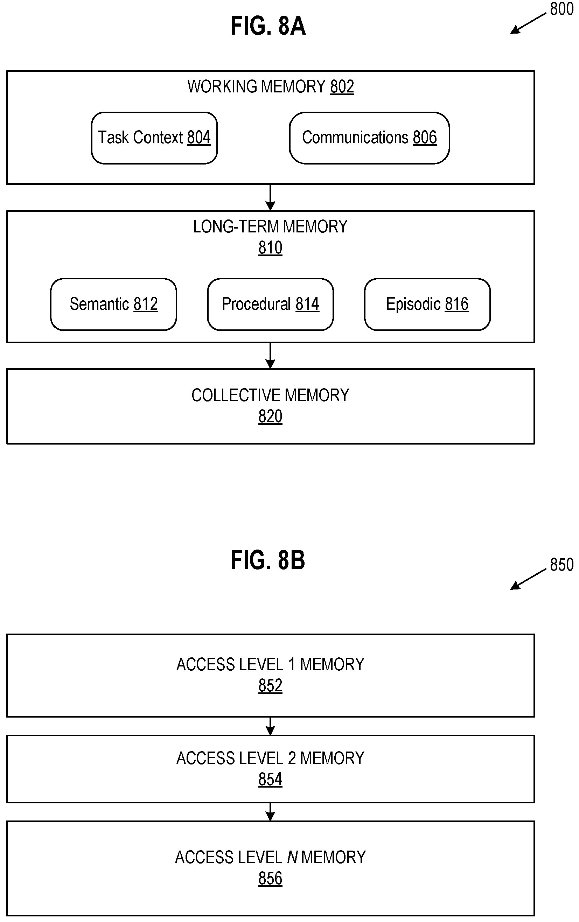

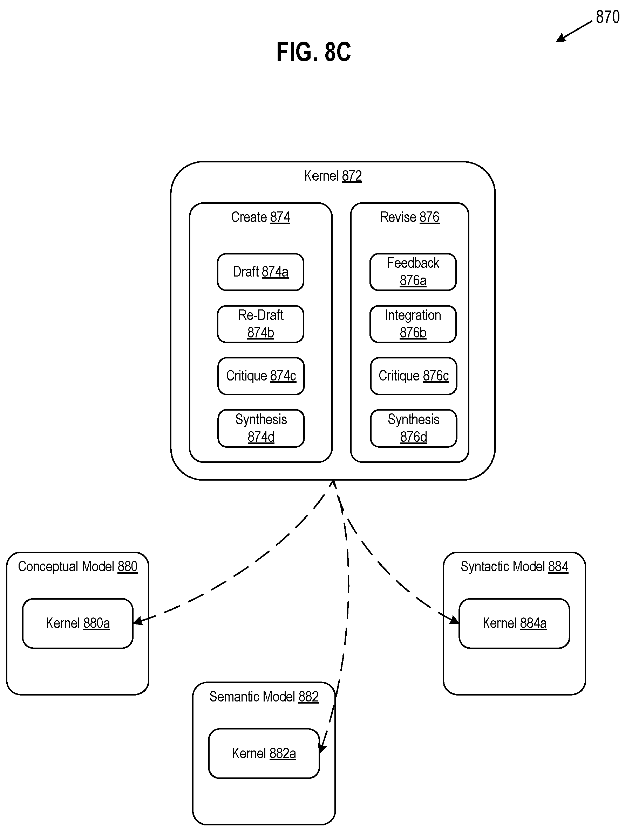

Multi-layer memory 218 includes a multi-layer memory structure that includes, for example, memory 1 220a, memory 2 220b, memory 3, 220c, and memory N 220d. Each of these memories or memory layers can be configured to store different types of data. For example, memory 1 220a can be configured as a working memory, memory 2 220b can be configured as an episodic memory, memory 3 can be configured as a long-term memory, and memory N 22d can include various types of collective memory, such as swarm collective memory, host collective memory, and global collective memory. Various types and configurations of multi-layer memory structures are shown in **FIG. 8A, FIG. 8B,** and **FIG. 8C,** described below. Each or any of the layers or memories of the multi-layer memory 218 is configured to obtain data from one or more data resources 226, such as content databases and/or embedding stores or vector databases. Because the memories or memory layers are integrated with the planners and workflows, the memory accesses occur in the context of those planners and respective workflows.

Router 222 controls access to and invocation of tools 232 and/or AI services 230 by the automated agent 212. For example, in operation, router 222 can receive requests for tools and/or AI services from orchestrator 216 via flow 238. Router 222 validates the requests (e.g., by checking the message type of the request against a policy or directory of valid message types). If the request is valid, router 222 checks to make sure the that tool and/or AI services requested by the request is accessible to the automated agent 212. For example, router 222 queries one or more of the data registries 224 to see if the tool and/or AI service identified in the request matches a tool and/or AI service listed in the registries 224. If the request is valid and the requested tool or AI service is accessible to the automated agent 212, the router 222 invokes the requested tool or AI service via flow 240, e.g., by including the tool or AI service identifier in an invocation thread 228, along with any necessary arguments and micro-prompts.

When an AI service 230 or tool 232 completes its execution in response to an invocation thread 228, portions of the tool or AI service response are stored in a memory or memory layer of multi-layer memory 218 via flow 242, e.g., via a memory path, which may be identified by a reference or pointer embedded within the respective invocation thread 228, for example. Alternatively or in addition, portions of the tool or AI service response are communicated back to orchestrator 216 via flow 244, messaging service 210, and flow 234.

The examples shown in **FIG. 2** and the accompanying description, above are provided for illustration purposes. This disclosure is not limited to the described examples. Additional or alternative details and implementations are described herein.

**FIG. 3** is a flow diagram of an example method for operating an automated agent using components of an agent system in accordance with some embodiments of the present disclosure.

The method is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method is performed by components of distributed multi-agent system 105, including, in some embodiments, components or flows shown in **FIG. 3** that may not be specifically shown in other figures and/or including, in some embodiments, components or flows shown in other figures that may not be specifically shown in **FIG. 3**. Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

In **FIG. 3,** the method 300 can be performed, for example, by the adaptive machine learning-based orchestrator 216 in coordination with the multi-layer memory 218, the messaging service 210, the AI services 230, the tools 232, the data resources 226, and/or any other component or service of the automated agent system 212. The method can begin at block 302, where an event is detected. The event can be any trigger or input that initiates or updates a task, objective or goal for the automated agent. For example, the event can be a user request, a signal from the environment 201, a message from another agent, a notification from an application 104, a change in the data resources 226, or any other event that affects the state or behavior of the automated agent.

At block 304, the adaptive machine learning-based orchestrator 216 can obtain a context model via one or more memory layers of the multi-layer memory 218 and determine an objective for the automated agent based on the event and the context model. For example, at block 304, the orchestrator 216 can load the context model from a working memory layer of the multi-layer memory 218. The context model can represent the current situation, environment, and/or knowledge of the automated agent and can include various types of information, such as user preferences, user history, user goals, data sources, AI services, workflows, plans, actions, results, feedback, or any other information relevant to the task or the goal of the automated agent. The objective can be a desired outcome, result, or state that the automated agent aims to achieve or maintain. The objective can be specified by the user, inferred by the adaptive machine learning-based orchestrator 216, or derived from the event and the context model.

At block 306, the adaptive machine learning-based orchestrator 216 can load a workflow to accomplish the objective given the event and the context model. The workflow can be a sequence or an arrangement of steps, tasks, actions, or functions that the automated agent can perform (alone and/or via delegation to one or more sub-agents) to achieve the objective. The workflow can be predefined, customized, or generated by the adaptive machine learning-based orchestrator 216 based on the event, the context model, and/or the available AI services 230, tools 232, and data resources 226. The workflow can include various parameters, conditions, constraints, dependencies, or rules that govern the execution of the workflow. The workflow can also include various micro-prompts, which are small units of interaction or communication that the automated agent 200 can use to invoke an AI service.

At block 308, the adaptive machine learning-based orchestrator 216 can invoke a planner to use the workflow to generate or update a plan to accomplish the objective. The planner can be an AI service 230, such as an LLM, which can create, modify, or optimize a plan based on the workflow, the event, the context model, and/or feedback from the user or another agent. The plan can be a representation of the workflow that specifies the order, timing, frequency, duration, priority, or concurrency of the steps, tasks, actions, or functions in the workflow. The plan can also include various information, such as inputs, outputs, resources, agents, tools, or results associated with each step, task, action, or function in the workflow. Individual steps, tasks, actions or functions in the plan can include one or more references to memory layers of the multi-layer memory 218.

At block 310, the adaptive machine learning-based orchestrator 216 can monitor the status of the plan generated or updated at block 308, and initiate or cause execution of one or more actions from the plan via one or more agents, using a portion of the context model associated with the action. The action can be a step, a task, a function, or a communication that the automated agent 212 can perform or delegate to one or more other agents, tools, or services as part of the plan. The portion of the context model used in association with a given action or agent can include any information that is relevant or necessary for performing or delegating the action, such as user preferences, user history, user goals, data sources, AI services, workflows, plans, actions, results, feedback, or any other information related to the action. For instance, in some embodiments, the plan can include an ordered sequence of sub-actions or sub-tasks that the orchestrator assigns or delegates to one or more sub-agents.

The adaptive machine learning-based orchestrator 216 can use the messaging service 210 to send or receive messages to or from the user (e.g., messages that contain or reference input, context data, feedback, etc.), another agent, or another device or service to perform or delegate one or more actions and/or to monitor the performance of actions and/or the plan as a whole.

At block 312, the adaptive machine learning-based orchestrator 216 can determine whether the objective has been achieved based on the event, the context model, the plan, and/or the result of the action. In cases where sub-actions of a plan are assigned or delegated by orchestrator 216 to respective sub-agents, the performance of each sub-action or sub-task by a respective sub-agent is evaluated by the orchestrator 216 at operation 312. For example, at block 312, the objective can include multiple sub-objectives, e.g., an objective associated with each sub-action or sub-task, alternatively or in addition to an overall plan objective, such that operation 312 involves monitoring the performance of each sub-objective as well as or alternatively to monitoring the performance of an overall objective. In such cases, the orchestrator 216 can at operation 310 cause multiple agents or sub-agents to execute multiple actions of the plan generated at operation 308 to accomplish the objective determined at operation 304 and/or execute multiple performance monitoring actions at operation 312 in determining whether the objective and/or sub-objectives have been achieved.

In some embodiments, at block 312, an adaptive-learning based process is used to compare the result of executing the action to a predicted expected result and analyze the difference between the predicted expected result and the actual result using, e.g., a Bayesian-style model. If, using the Bayesian-style analysis or another technique for measuring the agent's progress toward the objective, it is determined that the objective is achieved, the method can advance to block 322. [ suggested addition: A Bayesian-style model is a model that uses Bayes rule. ] At block 322, the orchestrator 216 updates a working layer of the context model with the actual result and an indication that the objective has been achieved. The flow can end at block 322 or return to block 302 to wait for another event.

If at block 312 it is determined that the objective and/or sub-objectives has not been achieved, the method can continue to block 314, where the adaptive machine learning-based orchestrator 216 initiates another action from the plan using a portion of the context model associated with the action. Different portions of the context model, or different context models, can be used to perform different actions or tasks within the plan. The portion of the context model that is associated with the action can be identified via a reference to a specific memory or memory layer of the multi-layer memory that is embedded in the plan or dynamically inserted into the plan via an argument (e.g., via parameterization).

At block 316, the adaptive machine learning-based orchestrator 216 can determine whether the action has been achieved based on the event, the context model, the plan, and/or the result of the action. In some embodiments, at block 316, an adaptive machine learning-based process is used to compare the result of executing the action to a predicted expected result and analyze the difference between the predicted expected result and the actual result using, e.g., a Bayesian-style model. If, using the Bayesian-style analysis or another technique for measuring the agent's progress toward the objective, it is determined that the objective is achieved, the method can advance to block 318. At block 318, the orchestrator 216 updates the plan status via the working memory layers of the context model, with the actual result and an indication that the action has been achieved. The flow can end at block 318 or return to block 310 to execute another action of the plan. The plan status can indicate the progress, completion, failure, or interruption of the plan or any of its steps, tasks, actions, or functions.

If at block 316 it is determined that the action has not been achieved, the method can continue to block 320, where the adaptive machine learning-based orchestrator 216 can update the portion of the context model used to perform the action (e.g., to adjust the weights applied to different portions of the context model) and then return to block 304 to obtain the updated context model and re-determine the objective (e.g., determine whether the objective remains the same or needs revision). If the objective is modified based on the updated context model, the orchestrator 216 can regenerate or update the plan at block 308 and begin executing actions of the regenerated or updated plan at block 310.

The method described above can be repeated, iterated, or modified until the objective is achieved or the plan is terminated. Actions of the plan can be performed in parallel, concurrently, or sequentially with other methods or processes by the adaptive machine learning-based orchestrator 216, the multi-layer memory 218, the messaging service 210, the AI services 230, the data resources 226, and/or any other component or service of the automated agent system 200.

The examples shown in **FIG. 3** and the accompanying description, above are provided for illustration purposes. This disclosure is not limited to the described examples. Additional or alternative details and implementations are described herein.

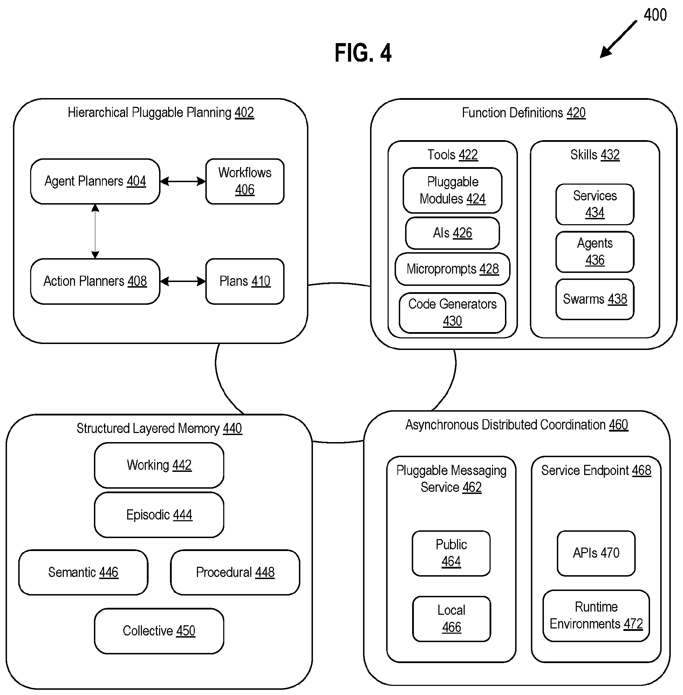

**FIG. 4** is a block diagram of an example of architectural components of an automated agent in accordance with some embodiments of the present disclosure.

In **FIG. 4,** an example architecture 400 for hierarchical pluggable planning 402 using function definitions 420, structured layered memory 440, and asynchronous distributed coordination 460 is shown. The architecture 400 can include various components or modules that can be used by one or more agent planners 404 to generate or update workflows 406 and by one or more action planners to generate or update plans 410.

The architecture 400 can include agent planners 404, which can use workflows 406 and action planners 408 to create, modify, or optimize plans 410. The agent planners 404 and action planners 408 can be associated with different levels of abstraction, such as high-level, intermediate-level, or low-level, depending on the granularity or complexity of the workflows 406 and the plans 410. For example, a high-level agent planner 404 can use a high-level workflow 406 that specifies the overall objective and the main steps or tasks to achieve it, while a low-level agent planner 404 can use a low-level workflow 406 that specifies the detailed functions or actions to perform each step or task. The agent planners 404 and action planners 408 can communicate and coordinate with each other to align their workflows and plans 410 and resolve any conflicts or dependencies.

The action planners 408 can be components or modules that can define the functions or actions that can be performed by agents or other tools 422 as part of plans 410. The action planners 408 can include or reference function definitions 420, which can specify the inputs, outputs, parameters, constraints, preconditions, postconditions, or effects of each function or action. The action planners 408 can also provide information or instructions on how to invoke, execute, monitor, or evaluate functions or actions using the tools 422, including the pluggable modules 424, the AIs 426, the micro-prompts 428,and/ or the code generators 430.

The architecture 400 can further include structured layered memory 440, which can be an instance of the multi-layer memory 218 (**FIG. 2**) that can store and provide various information related to the planning and execution of plans 410. The structured layered memory 440 can include working memory 442, which can store the current state, status, or context of plans 410. The structured layered memory 440 can also include episodic memory 444, which can store compressed versions of the history, events, or results of the previous or current executions of the plans 410, which may have been stored initially in the working memory 442. For example, an agent can be specially configured to create a compressed version of the existing contents of the working memory and store the compressed version in episodic memory 444 as part of an agent's start-up or initialization process. To create a compressed version of the contents of the working memory, one or more embedding or vectorization models may be used to generate an embedding or vector representation of the working memory contents. After the contents of the working memory 442 is compressed and moved to episodic memory 444, the working memory 442 can be cleared or otherwise made available for the next session or instance of the automated agent.

The structured layered memory 440 can include knowledge memory 446, which can store learned concepts, meanings, or relationships of the entities, objects, or terms used in the plans 410 and/or the actions of the plan. The structured layered memory 440 can also include procedural memory 448, which can store learned rules, procedures, or methods for performing the plans, functions or actions using the tools 422, the AIs 426, the micro-prompts 428, or the code generators 430. The contents of either or both of knowledge memory 446 and procedural memory 446 can be learned via the active learning processes described herein (e.g., Bayesian-style inference models) and/or other machine learning techniques.

The structured layered memory 440 can also include collective memory 450, which can store the shared or common knowledge, data, or information among agents or other tools, services or resources involved in the plan and/or actions.

The function definitions 420 include definitions of tools 422, which can be components or modules that can provide various functionalities or capabilities for performing the functions or actions as part of the plans 410. The function definitions 420 can include skills 432, which can include specialized or domain-specific components that can perform specific tasks or operations. The skills 423 can include services 434, which can be external or third-party modules that can provide additional functionalities or capabilities that are not available in the automated agent system 200. The skills 423 can also include agents 436, which can be other instances of an automated agent or sub-agents that can perform functions or actions autonomously or semi-autonomously. The skills 423 can also include swarms 438, which can be groups or clusters of agents that can cooperate or collaborate to perform the functions or actions of a plan.

The pluggable modules 424 can be components or modules that can enhance or augment the functionalities or capabilities of the action planners 408 or the agent planners 404. The AIs 426 can be artificial intelligence or machine learning modules that can provide various features or abilities, such as natural language processing, computer vision, speech recognition, knowledge representation, reasoning, planning, learning, or decision making. micro-prompts 428 can be small or concise prompts or queries that can elicit specific responses or feedback from an AI, agent or service. The micro-prompts 428 can be used to obtain information, confirm assumptions, resolve ambiguities, or validate results related to the plans 410 or actions of the plan. The code generators 430 can be modules that can generate prompts, executable code or scripts for performing the functions or actions using the tools 422, the AIs 426, or the micro-prompts 428.

The architecture 400 can enable asynchronous distributed coordination 460 among multiple agent planners 404 and action planners 408. For example, the architecture 400 can support a pluggable messaging service 462 that can facilitate public 464 and/or local 486 communication between the agents and other services, tools, and/or resources.

The asynchronous distributed coordination 460 can be a component or module that can facilitate the coordination or synchronization of the agents or other services or resources involved in the plans 410 or actions. The asynchronous distributed coordination 460 can enable the agents or other services or resources to operate independently, concurrently, or parallelly without blocking or waiting for each other to complete a process or provide output. The asynchronous distributed coordination 460 can also enable the agents or other services or resources to communicate or exchange information, data, or messages with each other using the pluggable messaging service 462.

The pluggable messaging service 462 can be a component or module that can provide various features or functionalities for sending or receiving messages between the agents or other services or resources involved in the plans 410 or actions. The pluggable messaging service 462 can support different types or formats of messages, such as text, audio, video, images, or graphics. The pluggable messaging service 462 can also support different modes or channels of communication, such as email, chat, voice, or video call. The pluggable messaging service 462 can also support different protocols or standards for communication, such as HTTP, TCP/IP, MQTT, XMPP, or WebSockets.

The asynchronous distributed coordination 460 can also include service endpoints 468, which can be interfaces or connectors that can enable the communication between the agents or other services or resources and the pluggable messaging service 462. The service endpoints 468 can include APIs 470, which can be application programming interfaces that can enable the interaction or integration of the tools 422, the action planners 408, the agent planners 404, or the pluggable messaging service 462 with the automated agent system 200 or other external or third-party systems or services.

The service endpoints 468 can include runtime environments 472, which can be components or modules that can provide the necessary infrastructure or resources for executing the plans 410 or actions. The runtime environments 472 can include hardware, software, or network components or modules that can support the operation of the tools 422, the action planners 408, the agent planners 402, the pluggable modules 424, or the asynchronous distributed coordination 460.

Embodiments of the architecture 400 enable fluid integration of memory systems, planning, decision-making, and action to produce intelligent agent operations in dynamic settings. Embodiments of the architecture 400 facilitate the construction of AI-based agents capable of operating semi-autonomously and intelligently within human settings.

Embodiments of the architecture 400 incorporate a hierarchical pluggable planning system, which enables agents to break down complex tasks into manageable sub-tasks and execute them in a structured manner. These planners can drive an agent's cognitive workflows. The hierarchical pluggable planning system is designed to facilitate the efficient execution of tasks, enabling agents to manage intricate workflows and adapt to changing environments.

Embodiments of the architecture 400 support pluggable planning mechanisms (e.g., goal-oriented action planning (GOAP), task management (TODO), and planning domain definition language (PDDL)) that can be configured to drive the agent's coarse-grained behavior. Each step of the plan can be an action (i.e., a tool or a skill) or a sub-plan (of the same type or a different type as the plan). This hierarchical planning system allows agents to manage complex tasks effectively, breaking them down into smaller, more manageable components and executing them in a structured manner using the most appropriate strategy.

Plans themselves are generated from workflows, which can vary based on the planning system. Workflows include data stored in the agent's memory system and can be modified or deleted by the agent. For example, an agent can rewrite any one or more of the agent's workflows.

To generate a plan, an agent can draft a list of tasks in order of priority (e.g., a to-do list). Each task can be tagged with a status, a deadline, and any resource requirements. The agent can periodically review tasks and update tasks based on the task status and any new information. Each task is or includes an action, including a tool or a skill, which can include one more other workflows. For more complex workflows, the agent can formulate a plan with well-defined goals and concrete actions required to achieve them. These plans consider:

Preconditions: Conditions that must be met before an action is taken.
Effects: The expected state after an action is performed.
Utility: The learned value of an action in achieving the goal.

The workflows and/or plans are stored in the agent's memory system, such that the agent can access the workflows and/or plans by making direct references to its working memory. For example, a planner agent can be given a "view" (e.g., read access) over this memory and is able to safely modify this state as it hypothesizes potential outcomes. The planner agent can perform a utility-maximizing backtracking search to find an optimal sequence of actions to perform from the current state to the desired goal state.

Embodiments of the architecture 400 can unify all actions under a single, coherent abstraction of a "function," which takes typed inputs and produces typed outputs. These functions can be represented by, for example, OPENAI Function Definitions (with return types), e.g., a variant of PYDANTIC's JSON serialization schema.

Tools as used herein can be relatively simple and local to the agent's execution context. Examples of tools can include: micro-prompts, internal or plugin functions, or code-generated (e.g., lambda) functions. Skills as used herein can be more complex and remote from the agent. Examples of skills can include: APIs, data systems, other agents, swarms of agents, or even humans.

Actions (e.g., tools or skills) can be performed, for example, by a planner agent explicitly or through an LLM selection. For instance, a tool can be configured to, given some context (e.g., task to be performed), select and invoke the most appropriate action, including argument population and self-repairing retries.

Tools can include simple, local operations that the agent can perform. Tools are typically implemented as (e.g., PYTHON) functions that take typed inputs and produce typed outputs. The agent can use tools to perform tasks that require little to no external interaction.

Pluggable functions as used herein can be tools (e.g., via LANGCHAIN) that are typically implemented as (e.g., PYTHON) functions that take typed inputs and produce typed outputs. Pluggable functions can be used to perform a wide variety of tasks, such as copying memory, sending messages, running micro-prompts, or any specialized logic in a plug-in. An agent can use tools to perform tasks that require little to no external interaction, such as generating micro-prompts or executing code.

Agent subsystems (e.g., memory, messaging, planning, reasoning, actions) can be exposed as tools, allowing the agent to incorporate them into its cognitive workflow. This enables the agent to integrate these subsystems into its decision-making process, enabling it to perform complex tasks and interactions, including the creation of new tools (through, e.g., codegen), new skills (e.g., through API discovery), new plans (e.g., through workflow generation), and new micro-prompts (e.g., through automatic prompt engineering). A plugin system allows other (e.g., PYTHON) modules to be registered and available for use in the action space.

Micro-prompting as used herein includes a technique that involves using specialized large and small language models (e.g., xLMs) to generate precise, focused prompts with minimal context to produce more accurate results. This approach can surpass large language models (LLMs) in performance, especially in complex tasks and professional settings. Instead of associating a single model with an agent, each micro-prompt is associated with a specific model and model parameters, allowing for a more nuanced and targeted approach to language generation.

Micro-prompts can be exposed as actions (e.g., OPENAI function definitions) and can used as a callable within the agent's action space. This allows for the integration of micro-prompting into the agent's cognitive workflow, enabling the use of specialized language models for specific tasks and interactions.

If an agent does not have access to the capability it requires or it needs to encode an existing capability in a more efficient manner, the agent can generate new tools or skills through code generation. This is a powerful feature that allows the agent to adapt to new environments and tasks, as well as to improve its existing capabilities. The agent can generate new tools or skills by specifying the desired functionality and the required inputs and outputs, and the code generation system can produce the necessary code to implement the new capability and register it with the agent's action space. For example, both local (e.g., PYTHON) code "snippets" and remote "lambdas" can be generated.

Skills as used herein include complex, remote operations that the agent can perform. Skills are typically implemented as APIs, data systems, other agents, groups or teams of agents, or human users. The agent can use skills to perform tasks that require external interaction, such as querying a database, invoking an API, or communicating with another agent(s) or humans.

Embodiments of the architecture 400 include various types of memory for storing, processing, and utilizing information, as well as processes for memory management and memory retrieval.

Long-Term Memory can serve as a repository for learned information, and can be divided into:

> Semantic Memory: a type of declarative memory that contains general knowledge across different scenarios, managed alongside an external database for dynamic updates.
> Episodic Memory: a type of declarative memory that stores event-specific experiences, with mechanisms to simulate natural memory decay over time unless revisited.
> Procedural Memory: a type of declarative memory that stores skill-oriented knowledge, enabling agents to perform automated actions through APIs.

Working Memory functions as a real-time processing center, holding information currently relevant from long-term memory and new observations. Working memory is designed for temporary storage and cognitive processing to assist agent decision-making.

Collective Memory is a shared repository within a multi-agent system that stores information from a group or team of agents. Collective memory adheres to social and privacy norms, with all assertions being propositional and fully contextualized.

The management of information across different types of memory can involve one or more stages, including:

Encoding: Data is converted into a structured format for integration within the agent system.

Storage: Insights are merged into the established knowledge network within long-term memory.

Recall: Techniques such as logic programming searches, vector similarity searches, and keyword searches retrieve needed information from long-term memory.

Memory retrieval methods can include

CRUD: Create, Read, Update, Delete (CRUD) operations to manage the memory system can be implemented using, e.g., JSON path expressions.

Vector Similarity Search: Can match self-ask questions with question-answer pairs in episodic memory.

Keyword Extraction and Search: Can extract keywords from self-ask questions for semantic retrieval.

Logic Programming Search: Can generate predicate logic statements from self-ask questions, and can query a knowledge base for rules and facts.

Embodiments of the storage system can be pluggable and need only provide an implementation of an abstract interface, which can be defined using, e.g., JSON path expressions.

Knowledge Representation can be implemented using a systematic approach in which entities and concepts are categorized within a hierarchical category system, applying JSON path expressions to map knowledge accurately. By structuring and understanding information in this manner, the architecture 400 can enhance its ability to recall, process, and utilize information effectively, adhering to a model that reflects both the intricate nature of memory and the systematic approach to knowledge representation and retrieval.

Embodiments of the messaging service enable message passing between distributed services. The messaging service can support asynchronous communication. A message can include a structured set of data fields, which can be defined as follows:

Message Schema:

id: A unique identifier for the message.

timestamp: The time at which the message was created.

session: A unique string that associates messages as part of a continuous interaction across the distributed system over a number of exchanges.

source: The originating URI of the message.

target: The destination URI of the message.

content: The message payload, varying from a basic string to complex structures like a dictionary.

error: An optional field that contains error information if the message is an error message.

The described design of the message schema can promote consistency in data exchange without relying on the implementation specifics of the communicating entities, which can improve the agent system's modularity and cross-compatibility. To communicate, an agent can use a sender function and a handler function.

Embodiments of the architecture 400 are data-driven. For example, the architecture 400 can include a small service that is deployed and acts as a factory for agent instances. Since the agents maintain their state in memory storage, any agent instance can be spawned to take over, which helps for horizontal scaling and fault tolerance.

A cognitive workflow as used herein can be or include a sequence of processes that an AI agent [perhaps change AI agent to agent throughout?] undergoes to perceive, understand, and respond to its environment. The cognitive workflows of the architecture 400 are designed to enable agents to process incoming information, make decisions, and take actions in a structured and efficient manner. Such workflows are implemented as planning workflows, which are maintained in the agent's long-term memory and associated with a particular planner. The agent can switch between workflows or enter into sub-flows. In some embodiments, the agent can develop its own workflows and select them when contextually appropriate, or rewrite its own workflow if allowed.

The OODA loop, which stands for Observe, Orientate, Decide, and Act, is a dynamic decision-making framework that includes rapidly cycling through four stages: observing a situation to gather information, orienting oneself in the context of that information (including updating mental models and assumptions), determining a course of action based on the understood reality, and taking actions that advance objectives. Examples may adapt the OODA loop for real-time analytics, autonomous decision-making, or adaptive machine learning capabilities. For example, the OODA loop can be realized stepwise via an asynchronous message-passing system. In some embodiments, the OODA loop is initiated by an incoming message, which is then processed by the agent. The agent then decides on a course of action, and then acts on that decision by generating an outgoing message. The outgoing message is then processed by a recipient agent, which then decides on a course of action, and so on. This process continues until the agent decides that the loop is complete, at which point the agent can either terminate or wait for another incoming message to initiate a new loop.

Agent as used herein can refer to an automated agent, a sub-agent, or a group of agents that programmatically execute one or more automated or semi-automated processes via a computer system. For example, an agent can include a combination of one or more programmatic, computer-readable instructions and associated multi-layer memory structure storing associated data (e.g., parameter values, arguments), where the one or more instructions invoke, call, or access one or more AI services, tools, and/or data resources. An automated agent may refer to an agent that is dynamically configured to perform one or more tasks in response to an input such as a user request, potentially invoking one or more other agents or sub-agents to do so. An agent system as used here can refer to a system that is capable of being used to create an agent, configure an agent, and/or cause one or more agents to execute one or more actions, tasks, sub-actions, or sub-tasks. For example, an agent system can include a combination of components described with reference to **FIG. 1** or **FIG. 4.**

A workflow within the architecture 400 can use a structured approach, beginning as messages are received and processed by active planning and decision-making functions, and culminating with communication outputs and memory updates. Each or any phase of this process can be informed by the agent's profile, memory, planning, and action mechanisms, allowing the agent to manage complex tasks effectively. The communication outputs may comprise an instruction or trigger sent to another entity in the environment to trigger an action at the other entity.

For example, an agent can begin by receiving an incoming message. Depending on the message type, e.g., observation, human feedback, or skill/agent response, the cognitive workflow is initiated.

In embodiments of the architecture 400, the term session can be interpreted as an episode. While a session denotes a continuous period of interaction from the viewpoint of messaging, providing a technical boundary and context, an episode in the cognitive workflow represents a cognitively significant event or series of events, akin to a chapter within a broader narrative that the agent experiences. Throughout the episode, the agent processes information, updates its memory, makes decisions, and learns, thereby refining its capabilities and understanding. This perspective aligns the messaging system's session with the cognitive architecture's approach to learning and experience.

When a message arrives with a session identifier unfamiliar to the system, indicating an unrecognized session, the agent can treat this as the beginning of a new episode. In response, the system can initiate a new working memory instance corresponding to this episode to capture and process pertinent interactions and cognitive activities associated with the sequence of events.

When a message is received with a session identifier that matches one from an ongoing session already identified by the system, the agent can treat this as a continuation of an existing episode. In this case, the agent system can retrieve the relevant working memory associated with the episode, ensuring access to previously established context, ongoing cognitive processes, and any incremental learning that has transpired within the episode. This enables coherent and contextually informed progression within the ongoing interaction.

When a message is received, the agent can identify the incoming message type. Each message type-Observation, Human Feedback, or Skill/Agent Response-can trigger a unique processing pathway. In some embodiments, only an Observation message type can serve as a trigger for the inception of a new episode. Examples of types of messages that can be received include:

Observations: Messages containing data about the agent's environment.
Human Feedback: Inputs from human users that can include directives, preferences, or evaluative comments to guide the agent's operations.
Skill/Agent Responses: Outcomes or information from interconnected skills or other AI agents, potentially completing a loop in a multi-agent task or collaborative process.

Reconcile Incoming Information: When reconciling incoming information, the agent can differentiate its approach based on the message type, for example:
For Observation messages which offer new data about the agent's environment, the agent can establish an initial context for a new episode or update its understanding within an existing episode.

Human Feedback and Skill/Agent Response messages can be associated with existing episodes; these messages can contribute adjustments or progressions to the ongoing narrative.

Plan / Decide: Utilizing reconciled information, the agent can engage in planning and decision-making processes. This includes developing strategies for new tasks, generating responses, or identifying information needs that must be met to proceed effectively.

Decide Next Step: Once a plan or course of action is established, the agent can determine its subsequent action. For example:

Generating a Human Feedback Request: If the agent determines it needs further human input, guidance, or approval, the agent can generate a request for additional feedback.
Generating a Skill/Agent Request: If the agent identifies the need for information or action from other skills or AI agents, the agent can formulate a corresponding request.
Completing the Plan: If the plan has reached completion, the agent can initiate clearing its working memory in preparation for future messages and tasks.
Publish Message: Depending on the decision in the previous step, the agent can push out a message into the system. The message can be a feedback request to humans, a request sent to skills or other AI agents, or an indication of action completion.

Clear Working Memory: Following the completion of a plan and the relevant action outcomes, the agent can clear its working memory to make space for incoming tasks and data.

End: Upon sending out messages or clearing the working memory, the cognitive workflow is concluded for the current cycle, ready to restart as new messages come in.

The agent's profile can influence how messages are interpreted and how requests are formulated. The agent's memory can be engaged for recall during reconciliation and clearing processes.

The examples shown in **FIG. 4** and the accompanying description, above are provided for illustration purposes. This disclosure is not limited to the described examples. Additional or alternative details and implementations are described herein.

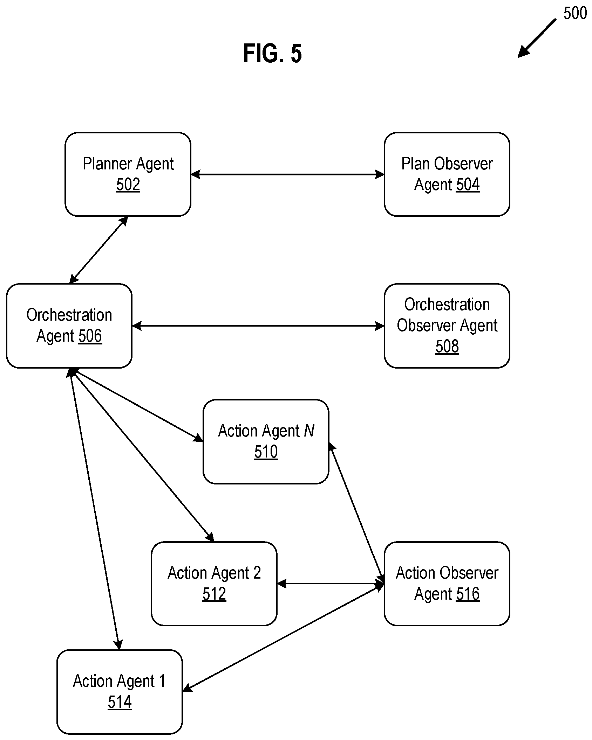

**FIG. 5** is a flow diagram of an example of communications among components of an automated agent in accordance with some embodiments of the present disclosure.

The method is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method is performed by components of distributed multi-agent system 105, including, in some embodiments, components or flows shown in **FIG. 5** that may not be specifically shown in other figures and/or including, in some embodiments, components or flows shown in other figures that may not be specifically shown in **FIG. 5.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

The flow diagram 500 of **FIG. 5** can show how different types of agents can interact and collaborate to perform plans 410 (**FIG. 4**) that involves multiple actions. The multi-agent arrangement can include a planner agent 502, a plan observer agent 504, an orchestration agent 506, an orchestration observer agent 508, one or more action agents 510, 512, 514, and one or more action observer agents 516.

The planner agent 502 can be an agent that can create, update, or modify plans based on an objective, a workflow, and a context model. The planner agent 502 can use one or more tools and/or AI services to perform the planning functions. The planner agent 502 can communicate with the plan observer agent 504, the orchestration agent 506, and the action agents 510, 512, 514 via, e.g., the asynchronous distributed coordination 460 (FIG. 4).

The plan observer agent 504 can be an agent 612 that can monitor, evaluate, or validate the plans 410 created or updated by the planner agent 502. The plan observer agent 504 can use one or more AI services or tools 422 to query policies or otherwise perform the observation functions. The plan observer agent 504 can communicate with the planner agent 502 via, e.g., the asynchronous distributed coordination 460.

The orchestration agent 506 can be an agent that can coordinate, schedule, or execute the actions involved in the plans. The orchestration agent 506 can use one or more tools 422 and/or AI services to perform the orchestration functions. The orchestration agent 506 can communicate with the planner agent 502, the orchestration observer agent 508, and the action agents 510, 512, 514 via, e.g., the asynchronous distributed coordination 460.

The orchestration observer agent 508 can be an agent that can monitor, evaluate, or validate the orchestration of the actions performed by the orchestration agent 506. The orchestration observer agent 508 can use one or more AI services or tools to query policies or otherwise perform the observation functions. The orchestration observer agent 508 can communicate with the orchestration agent 506 via, e.g., the asynchronous distributed coordination 460.

The one or more action agents 510, 512, 514 can be agents that can perform one or more actions as part of the plans generated by the planner agent. The action agents 510, 512, 514 can use one or more AI services and/or tools to perform the action functions. The action agents 510, 512, 514 can communicate with the orchestration agent 506 via, e.g., the asynchronous distributed coordination 460.

The one or more action observer agents 516 can be agents that can monitor, evaluate, or validate the actions performed by the action agents 510, 512, 514. The action observer agent(s) 516 can use one or more AI services or tools to query policies or otherwise perform the observation functions. The action observer agent(s) 516 can communicate with the action agents 510, 512, 514 via, e.g., the asynchronous distributed coordination 460.

The examples shown in **FIG. 5** and the accompanying description, above are provided for illustration purposes. This disclosure is not limited to the described examples. Additional or alternative details and implementations are described herein.

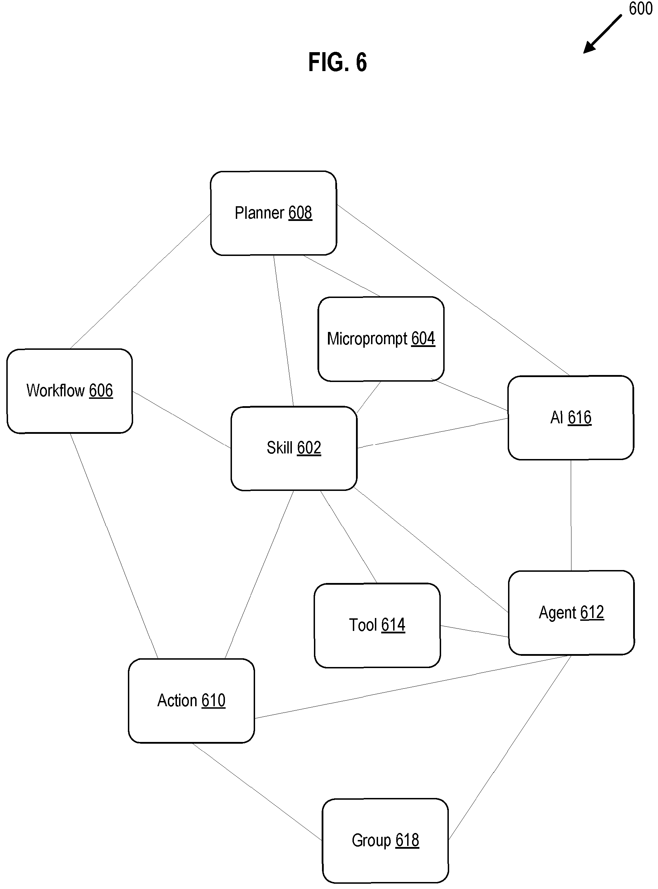

**FIG. 6** is a block diagram of an example of relationships among registries of an automated agent in accordance with some embodiments of the present disclosure.

In **FIG. 6,** an entity relationship diagram is used to illustrate registries that can be used to create and define an automated agent and relationships among the information in the registries. In general, a registry has a schema that defines the attributes, parameters, inputs, outputs, or constraints that specify how a function or capability is to be made accessible to a particular automated agent. For example, a planner registry 608 contains a list of planners that are accessible to an automated agent along with, for each planner, associated attributes, parameters, inputs, outputs, or constraints that specify how the planner is to be made accessible to the agent. For example, a planner can be associated with a particular skill 602 (e.g., job search), a particular workflow 606 (e.g., a series of steps to perform a job search), a particular micro-prompt 604 (e.g., an LLM prompt configured to cause the LLM to generate a plan to execute a job search using the workflow 606, a particular tool 614, and/or a particular AI 616 (e.g., a large language model or another AI service). Associations between or among registries can be implemented using, e.g., keys, pointers, arguments, or other referential mechanisms.

Similarly, other types of agents 612 can be associated with task- or action-specific AIs and/or tools 614 and/or actions 610. Actions 610 can be associated with one or more skills 602 or groups 618 of agents. Each action 610 can have an associated workflow.

Registries and the entries in each registry can be specifically configured for individual automated agents 102. For example, two different users of an application 104 can have different registries included in their respective automated agents[one agent per user?]. Also, or alternatively, the registries of an individual user can be reconfigured as the agent system learns more about the user's activity and preferences, or as the user's context changes. For example, the set of registries included in a first instance of a user's automated agent may be different than the set of registries included in a second, later instance of the user's automated agent.

The examples shown in **FIG. 6** and the accompanying description, above are provided for illustration purposes. This disclosure is not limited to the described examples. Additional or alternative details and implementations are described herein.

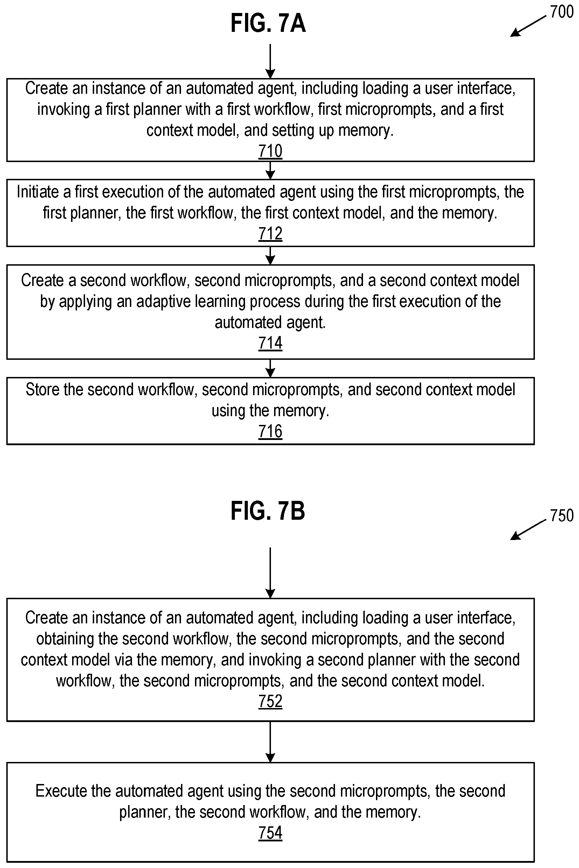

**FIG. 7A** is a flow diagram of an example method for dynamically learning a workflow using an automated agent in accordance with some embodiments of the present disclosure.

The method is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method is performed by components of distributed multi-agent system 105, including, in some embodiments, components or flows shown in **FIG. 7A** that may not be specifically shown in other figures and/or including, in some embodiments, components or flows shown in other figures that may not be specifically shown in **FIG. 7A.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

In **FIG. 7A,** the example method 700 can be performed by one or more agents, such as a planner agent, orchestration agent, and/or one or more action agents. The method 700 can also involve the access and use of one or more micro-prompts, workflows, etc., which may be identified in one or more data registries and accessed via one or more memory layers.

At operation 710, a processing device creates an instance of an automated agent, including loading a user interface, invoking a first planner with a first workflow, first micro-prompts, and a first context model, and setting up memory. For example, the processing device initializes an instance of an automated agent as described with reference to **FIG. 2.** The instance of the automated agent can be created in response to, for example, a user input, a network event, or a sensor signal. The user interface can provide an audio, visual, and/or haptic interface for the user to interact with the automated agent. The first planner can be an agent that can create, update, or modify plans based on an objective, task, or goal. For example, the first planner can include an LLM. The first workflow can define a sequence, order, or hierarchy of tasks or actions that can be performed by one or more agents to achieve the objective. The first micro-prompts can be, e.g., LLM prompts that define small, discrete, and specific tasks or actions that can be performed by one or more agents. The first context model can be a representation of the relevant information, data, or knowledge that can be used by the automated agent to perform tasks or actions. For example, the first context model can include user preferences extracted from an online profile and/or interaction log of the user at or prior to the operation 710. The memory can be a multi-layer memory that includes one or more memory layers, such as working memory, episodic memory, semantic memory, procedural memory, or collective memory.

At operation 712, the processing device initiates a first execution of the automated agent (e.g., the instance of the automated agent created at operation 710). The first execution is initiated using the first micro-prompts, the first planner, the first workflow, the first context model, and the memory. For example, at operation 712, the first planner generates a first plan using the first workflow, first micro-prompts, and first context model, and the first execution of the automated agent includes the automated agent executing at least one action of the first plan.

At operation 714, the processing device creates a second workflow, second micro-prompts, and a second context model by applying an adaptive machine learning process during the first execution of the automated agent. The adaptive machine learning process can include observing, predicting, evaluating, assessing, refining, reconciling, and updating one or more of the models used by the automated agent. The adaptive machine learning process can use one or more tools, AIs, micro-prompts, code generators, or other components to perform the learning functions.

For example, the adaptive machine learning process can include modeling a predicted user response to output of the first execution of the automated agent, measuring an actual user response to the output of the first execution of the automated agent, comparing the actual user response to the predicted user response, and updating one or more of the first workflow, the first micro-prompts, and the first context model based on the comparison of the actual user response to the predicted user response.

For instance, a Bayesian model constructed using historical user interactions as priors can be used to generate a probability distribution that represents the likelihood of occurrence of each potential user response to the output of the first execution, and the predicted response is selected from the probability distribution (e.g., the potential response with the highest probability is selected). The actual user response can be used to generate a posterior distribution, thereby incorporating real time feedback into the Bayesian model and updating the user response predictions in an efficient way.

The second workflow can be a modified version of the first workflow that is based on the output of the adaptive machine learning process (e.g., the posterior distribution of the Bayesian model). Similarly, the second micro-prompts can be modified versions of the first micro-prompts that are based on the output of the adaptive machine learning process (e.g., the posterior distribution of the Bayesian model), and the second context model can be a modified version of the first context model that that is based on the output of the adaptive machine learning process (e.g., the posterior distribution of the Bayesian model).

Any one or more of the workflow, micro-prompts and context models may be dynamically updated in response to the adaptive machine learning process while any one or more others of the workflow, micro-prompts, and context models are not updated in response to the adaptive machine learning process, depending upon the output of the adaptive machine learning process. For example, if the posterior distribution does not differ from the prior distribution by at least a threshold amount, which may be determined based on the requirements of a particular design or implementation, then any one or more of the workflow, micro-prompts, and context models are not updated in response to the adaptive machine learning process. The threshold amount of difference between the prior distribution and the posterior distribution required to trigger an update is configurable and can be different for different workflows, micro-prompts, and/or context models.

At operation 716, the processing device stores the second workflow, second micro-prompts, and second context model using the memory. The memory can store the second workflow, second micro-prompts, and second context model in one or more memory layers, such as working memory, episodic memory, semantic memory, procedural memory, or collective memory. For example, the second workflow, second micro-prompts, and second context model can store in one or more memory layers that are different from the memory layers that store the first workflow, first micro-prompts, and first context model. Alternative or in addition, a compressed version of the first workflow, first micro-prompts, and first context model and the second workflow, second micro-prompts, and second context model can be created and stored in a different memory layer. For instance, the second workflow, second micro-prompts, and second context model may be stored in working memory (e.g., overwrites, replaces, or supplements the first workflow, first micro-prompts, and first context model) while the compressed version of the first and second workflows, first and second micro-prompts, and first and second context models is stored in an episodic memory or collective memory.

The examples shown in **FIG. 7A** and the accompanying description, above are provided for illustration purposes. This disclosure is not limited to the described examples. Additional or alternative details and implementations are described herein.

**FIG. 7B** is a flow diagram of an example method for executing a dynamically learned workflow using an automated agent in accordance with some embodiments of the present disclosure.

The method is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method is performed by components of distributed multi-agent system 105, including, in some embodiments, components or flows shown in **FIG. 7B** that may not be specifically shown in other figures and/or including, in some embodiments, components or flows shown in other figures that may not be specifically shown in **FIG. 7B.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

At operation 752, a processing device creates an instance of an automated agent, including loading a user interface (e.g., the same or similar user interface as in operation 710 of **FIG. 7A**), obtaining a second workflow (e.g., the second workflow of operation 714 of **FIG. 7A**), second micro-prompts (e.g., the second micro-prompts of operation 714 of **FIG. 7A**), and a second context model (e.g., the second context model of operation 714 of **FIG. 7A**) via the memory (e.g., the memory of operation 716 of **FIG. 7A**). At operation 752, the processing device invokes a second planner (e.g., the first planner of operation 710 of **FIG. 7A** or a different planner) using the second workflow, the second micro-prompts, and the second context model. For example, the method of **FIG. 7A** is invoked in response to a user's first interaction or login session with a computing system, and the method of **FIG. 7B** is invoked in response to a subsequent interaction or login session with the computing system by the same user or a different user, where the first and subsequent interactions or login sessions can be, but do not have to be, contiguous.

At operation 754, the processing device executes the automated agent (e.g., the automated agent instance created at operation 752) using the second micro-prompts, the second planner, the second workflow, and the memory. For example, the instance of the automated agent is executed instead of the instance of the automated agent created at operation 710 of **FIG. 7A.** As a result, the instance of the automated agent that is executed at operation 754 incorporates the results of the learning performed during the first execution of the automated agent at operation 712 and operation 714 of **FIG. 7A.** For example, the instance of the automated agent of **FIG. 7B** operates using learning (e.g., preferences regarding the control, level of autonomy, or method of performing a task) that occurred automatically and was "remembered" by the computing system via the adaptive machine learning process during the method 700.

The examples shown in **FIG. 7B** and the accompanying description, above are provided for illustration purposes. This disclosure is not limited to the described examples. Additional or alternative details and implementations are described herein.

**FIG. 8A** is a flow diagram of an example of a layered memory structure for an automated agent in accordance with some embodiments of the present disclosure.

The method is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method is performed by components of distributed multi-agent system 105, including, in some embodiments, components or flows shown in **FIG. 8A** that may not be specifically shown in other figures and/or including, in some embodiments, components or flows shown in other figures that may not be specifically shown in **FIG. 8A.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

The layered memory structure 800 of **FIG. 8A** includes a working memory 802, a long-term memory 810, and a collective memory 820. In the example of **FIG. 8A,** working memory 802 is capable of storing and managing information such as task context 804 and communications 806. Context models, described above, are examples of task context 804. Messages, such as inter-process messages and other communications between components of the computing system (e.g., computing system 100) are examples of communications 806. Additionally or alternatively, working memory 802 can store and manage other types of data alone or in combination with one or more of task context 804 or communications 806.

Long-term memory 810, in the example of **FIG. 8A,** includes a knowledge memory 812, a procedural memory 814, and an episodic memory 816. Additionally or alternatively, long-term memory 810 can include other types of memory alone or in combination with one or more of knowledge memory 812, procedural memory 814, or episodic memory 816.

Long-term memory 810 is capable of storing and managing information such as compressed versions of data stored in working memory 802. For example, episodic memory 816 can store and manage, e.g., embeddings or other compressed forms of task context 804, communications 806, and/or other information stored in working memory. For instance, if a user updates their online profile multiple times during the course of a time interval, those updates may be summarized and stored in episodic memory 816.

As another example, long-term memory 810 can store and manage learnings resulting from agent executions of adaptive machine learning processes. These learnings can be grouped into different memory layers, such as knowledge memory 812 and procedural memory 814. Portions of long-term memory 810 that store and manage semantic information and procedural information may be referred to as knowledge memory and procedural memory, respectively.

An example of semantic information is a synonym, definition or explanation of a word or phrase. For instance, the job title "senior software engineer" may be associated by a particular user with a certain group of skills, such as Java, PYTHON, data science, neural networks, etc. The semantic information can be customized for each individual user. For example, two users who work for two different companies may have different meanings or definitions for "senior software engineer," and these different meanings or definitions can be stored and maintained in respective long-term memories 810.

An example of procedural information is a sequence of steps associated with a particular task. For example, two users who are both recruiters may each prefer a different sequence of steps for performing a job search or other recruiting task. These different task definitions, which can be different in terms of the types of steps that are included and/or the order of the steps, can be stored and maintained in respective long-term memories.

The arrows between the working memory 802, long-term memory 810, and collective memory 820 indicate one potential method of moving data between the memories 802, 810, 820. For example, context data such as user preference and/or activity information may be initially stored in working memory 802, then moved from working memory 802 to long-term memory 810, then moved from long-term memory 810 to collective memory 820, in accordance with memory processing workflows. Other process flows are possible; for example, some information may be moved directly from working memory 802 to collective memory 820, in some embodiments.

Specialized agents (e.g., one or more sub-agents 106) can be configured to perform memory management operations, such as an operation to compress data obtained from working memory 802 and store the compressed data in another memory layer (e.g., long-term memory 810 or collective memory 820), and/or an operation to search one or more of the memory layers for information and extract data that matches the search criteria from the respective memory layers in which the information matching the query is stored. A specialized agent for a memory management operation can be defined by a specialized memory management workflow that contains only the tasks required to perform the particular memory management operation and/or a specialized micro-prompt that, for example, contains an instruction that instructs an LLM to generate and output a plan that can be executed to perform the particular memory management operation.

The examples shown in **FIG. 8A** and the accompanying description, above are provided for illustration purposes. This disclosure is not limited to the described examples. Additional or alternative details and implementations are described herein.

**FIG. 8B** is a flow diagram of an example of a layered memory structure for an automated agent in accordance with some embodiments of the present disclosure.

The method is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method is performed by components of distributed multi-agent system 105, including, in some embodiments, components or flows shown in **FIG. 8B** that may not be specifically shown in other figures and/or including, in some embodiments, components or flows shown in other figures that may not be specifically shown in **FIG. 8B.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

In the example of **FIG. 8B,** a multi-layered memory structure 850 includes N memory layers, each of which may be associated with a different access level. Access level as used herein may refer to the ability of various systems, components, resources, models, users, processes, devices, etc. to read and/or write data to and/or from a particular memory layer of the multi-layered memory structure 850. The assignment of access levels to the various systems, components, resources, models, users, processes, devices, etc., can be customized based on the requirements or design of a particular implementation of the computing system. For example, access level 1 memory 852 may have an associated access level 1 that is the most restrictive and therefore acts as a gateway for one or more other memory layers, such that permission is granted to read and/or write to access level 2 memory 854 and/or access level N memory 856 only to systems, components, resources, models, users, processes, devices, etc., that satisfy the access level 1 requirements. As another example, access level $N$ memory 856 may have an associated access level N that is least restrictive in that many different agents and not just a single agent may be granted permission to access that memory.

The arrows between the access level 1 memory 852, access level 2 memory 854, and access level N memory 856 indicate one potential method of moving data (e.g., context data) between the memories. For example, information may be initially stored in access level 1 memory 852, then moved from access level 1 memory 852 to access level 2 memory 854, then moved from access level 2 memory 854 to access level N memory 856. Other process flows are possible; for example, some information may be moved directly from access level 1 memory 852 to access level N memory 856, in some embodiments.

Specialized agents (e.g., one or more sub-agents 106) can be configured to perform memory management operations, such as an operation to compress data obtained from access level 1 memory 852 and store the compressed data in another memory layer (e.g., access level 2 memory 854 and/or access level N memory 856), and/or an operation to search one or more of the memory layers for information and extract data that matches the search criteria from the respective memory layers in which the information matching the query is stored. A specialized agent for a memory management operation can be defined by a specialized memory management workflow that contains only the tasks required to perform the particular memory management operation and/or a specialized micro-prompt that, for example, contains an instruction that instructs an LLM to generate and output a plan that can be executed to perform the particular memory management operation.

Layered memory structures such as those shown in **FIG. 8A** and **FIG. 8B** can be allocated or assigned to specific agents. For example, when an instance of an automated agent is created, such as described in connection with **FIG. 2,** a multi-layered memory structure (or a portion thereof) is allocated for use by that instance of the automated agent, and that memory structure is initialized, populated or updated at instance creation and/or during or as a result of execution of the automated agent in that instance. When a different instance of an automated agent is created, whether associated with the same user or a different user, a different multi-layered memory structure (or a portion thereof) is allocated for use by that instance of the automated agent, and that memory structure is initialized, populated or updated at instance creation and/or during or as a result of execution of the automated agent in that instance.

The examples shown in **FIG. 8B** and the accompanying description, above are provided for illustration purposes. This disclosure is not limited to the described examples. Additional or alternative details and implementations are described herein.

**FIG. 8C** is a flow diagram of an example of a layered memory structure for an automated agent in accordance with some embodiments of the present disclosure.

The method is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method is performed by components of distributed multi-agent system 105, including, in some embodiments, components or flows shown in **FIG. 8C** that may not be specifically shown in other figures and/or including, in some embodiments, components or flows shown in other figures that may not be specifically shown in **FIG. 8C.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

The example of **FIG. 8C** shows multiple data structures, e.g., a conceptual model 880, a semantic model 882, and a syntactic model 884, each of which includes or is created and maintained using a respective kernel. For example, conceptual model 880 has an associated kernel 880a, semantic model 882 has an associated kernel 882a, and syntactic model 884 has an associated kernel 884a. Each of the kernels 880a, 882a, 884a includes the components and/or processes shown in a reference kernel 872. The conceptual model 880, semantic model 882, and syntactic model 884 can be stored and managed by the same memory layer or one or more different layers of a multi-layer memory structure. For instance, conceptual model 880, semantic model 882, and syntactic model 884 can be stored in long-term memory 810 of **FIG. 8B,** and/or different portions of one or more of conceptual model 880, semantic model 882, and syntactic model 884 can be stored across two or more of working memory 802, long-term memory 810, or collective memory 820. For instance, a raw or real-time version of any of conceptual model 880, semantic model 882, and syntactic model 884 can be stored in working memory 802, while a compressed version of any of conceptual model 880, semantic model 882, and syntactic model 884 can be stored in long-term memory 810, while an access-controlled or restricted version of any of conceptual model 880, semantic model 882, and syntactic model 884 can be stored in collective memory 820.

The conceptual model 880 can be used by the automated agent to represent, for example, relationships between entities and/or other data. For example, the conceptual model 880 can include and model relationships between skills, tasks, and agents. The semantic model 882 can include and model definitions or descriptions of particular words or phrases. The syntactic model 884 can define rules, structures, or patterns, such as grammar and syntax, that the automated agent can refer to when formulating output. Each or any of the conceptual model 880, semantic model 882, and syntactic model 884 can be customized for a particular user and any such customization can be updated dynamically based on the user's interactions with the automated agent and/or other applications or computing systems. For example, different users can associate different skills with different tasks or agents, depending, for example, the user's own skill level. As another example, different users can have different preferences or norms for grammar and syntax that they use to communicate, e.g., different accents, communication styles, tones, etc. As another example, different users can have different definitions for the same word or phrase. For example, "design" can have different meanings depending upon whether the user is a computer programmer or fashion designer.

The reference kernel 872 specifies procedural elements used to create and maintain any of conceptual model 880, semantic model 882, or syntactic model 884. In the example of **FIG. 8C,** the reference kernel 872 includes a create element 874 and a revise element 876. Each of these procedural elements contains specifications, e.g., instructions. For instance, create 874 specifies a modeling procedure that can be used to create any of conceptual model 880, semantic model 882, or syntactic model 884, which includes sub-procedures draft 874a, re-draft 874b, critique 874c, and synthesis 874d. Revise 876 specifies a modeling procedure that can be used to revise or update any of conceptual model 880, semantic model 882, or syntactic model 884, which includes sub-procedures feedback 876a, integration 876b, critique 876c, and synthesis 876d.

In some implementations, the procedural elements specified by the reference kernel 872 align with the Hegelian synthesis or dialectical approach to modeling. For instance, an instruction, such as an LLM prompt or micro-prompt, or programming code, or model, or plan, or other output, is generated using the create process 874 and then revised using the revise process 876. During the create process 874, an initial draft is produced by draft process 874a. A re-draft process 874b re-drafts the initial draft. A critique process 874c critiques the re-draft, for example by testing it during agent execution or using a Bayesian model to predict the user response. A synthesis process 874d synthesizes the results of the critique process 874c to produce the final output (e.g., a prompt, micro-prompt, model, programming code, or other output).

In response to feedback, such as feedback from the environment 101 obtained during agent execution, the revise process 876 obtains the feedback via feedback process 876a. Integration process 876b integrates the feedback with the final output previously generated by the create process 874. The critique process 876c critiques the feedback-modified final output, for example by testing it during agent execution or using a Bayesian model to predict the user response. The synthesis process 876d synthesizes the results of the critique process 876c to produce a final revised output.

Each or any of the processes shown in **FIG. 8C** and described above can be implemented using one or more LLM prompts or micro-prompts. For instance, a planner agent can use the processes contained in the reference kernel 872 to generate a plan that can be executed by one or more sub-agents. For example, the planner agent can issue a first instruction to an LLM to cause the LLM to draft a plan based on a workflow, a second instruction to the LLM to cause the LLM to re-draft the plan, a third instruction to the LLM to cause the LLM to critique the plan, and a fourth instruction to the LLM to cause the LLM to synthesize the results of the critique and/or the previous steps. Once the plan has been created using the create process 874, it can be executed by the automated agent (e.g., by invoking one or more sub-agents). During or after plan execution by the automated agent, feedback can be collected, analyzed using e.g., an adaptive machine learning process, and used to invoke the revise process 876. For example, the planner agent can issue a fifth instruction to an LLM to cause the LLM to obtain the feedback, a sixth instruction to the LLM to cause the LLM to integrate the feedback, a seventh instruction to the LLM to cause the LLM to critique the results of the integration or previous steps, and an eighth instruction to the LLM to cause the LLM to synthesize the results of the critique or previous steps. The overall approach shown in **FIG. 8C,** including the use of the critiques 874c, 876c, can improve the quality and reliability of the resulting output, e.g., a plan, prompt, workflow, programming code, or other output.

Multi-layer memory structures such as the examples shown in **FIG. 8A, FIG. 8B,** and **FIG. 8C** can be implemented using, e.g., one or more storage trees, storage stacks, and/or path templates with, for example, a higher-order resolver, where the path templates can be resolved at runtime. Multi-layer memory structures such as the examples shown in **FIG. 8A, FIG. 8B,** and **FIG. 8C** can be queried using, e.g., argument names and/or strings and a semantic search or a RAG (retrieval-augmented generation) approach. Policies can specify whether the contents of one memory layer overrides another memory layer in a given instance, task, or workflow. For example, a policy (e.g., a corporate policy) can instruct the query to use information obtained from a collective memory instead of information obtained from a personal or private memory, in the context of an action whose output is accessible to a team of agents. In some examples, memory is queried across all layers and then the most relevant portions of the retrieved information are selected and extracted from the query results and mapped to their respective arguments in the action call. An LLM or other type of model or tool can be used to map the relevant portions of the retrieved information to their respective arguments. For example, the information retrieved by querying can be included in an LLM prompt (e.g., a micro-prompt) that has been specially configured to cause an LLM to perform the specific task of function calling, and then the prompt is passed to the LLM which maps the information to arguments and generates the function call.

Embodiments of the layered memory structure of **FIG. 8C** can be used to convert high-level descriptions of complex tasks into detailed plans that can be executed by an agent, using a workflow that can include iterative refinement through human (or agent) feedback and that progresses from a high-level plan (or specification) through to an operationalized artifact. For example, the workflow can include planning, code generation, and micro-prompt engineering.

In some embodiments, the kernel of the process is a repeating pattern that starts by taking an initial idea or proposal and refining it through a set of stages: formulation, which expands and details the idea; criticism, which identifies and addresses potential issues; and synthesis, which incorporates feedback and makes improvements. The result is then sent back to the originator (e.g., human or agent) for review. The reviewer can instruct the agent to proceed (approve), cancel (terminate), or implement feedback recommendations. This process can repeat until the originator approves (or terminates) the result.

In a conceptual stage, an initial idea or proposal can be formulated into a detailed plan, identifying risks, managing complexity, providing alternative perspectives and considerations, etc. Criticism at this stage attempts to identify all the ways the idea or proposal could fail, omissions, or conceptual inconsistencies. The output of the conceptual stage can be a requirements document, for example, such as natural language text.

In a semantic stage, the conceptual plan is decomposed into its logical components, identifying the necessary data, operations, and interfaces. Criticism at this stage performs a semantic analysis, identifying logical inconsistencies, ambiguities, or incompleteness. Output of the semantic stage can be a technical design document, for example, such as pseudo code or sketches of data structures.

In a syntactic stage, the semantic plan is translated into a concrete plan, generating the necessary code, data structures, and interfaces. Criticism at this stage performs syntactic checks and sandboxed testing. The output of the syntactic stage can be a software implementation, for example, which can be ready for the execution phase.

Memory structures and/or processes described with reference to **FIG. 8A, FIG. 8B, FIG. 8C** can be used to determine and manage memory operations using an order of precedence. An order of precedence can be determined by, for example, querying a policy or a registry associated with an agent. For example, a first order of precedence can be specified for an agent that is included in a group of agents that collectively performs a task, and a second order of precedence can be specified for an agent that is not part of a group of agents. As another example, the order of precedence can be implemented as weight values that are applied to data retrieved from different memory layers. For instance, data retrieved from working memory can be weighted more highly than data retrieved from episodic or long-term memory or collective memory depending on its relevance to the current task, objective, goal, or intent. Conversely, data retrieved from episodic or long-term memory or collective memory can be weighted more highly than data retrieved from working memory depending on its relevance to the current task, objective, goal, or intent. As another example, order of precedence can be determined using access levels. For instance, agents that are part of a group may only have access to collective memory of an individual agent, while the individual agent itself may have access to all of its respective memory layers.

The examples shown in **FIG. 8C** and the accompanying description, above are provided for illustration purposes. This disclosure is not limited to the described examples. Additional or alternative details and implementations are described herein.

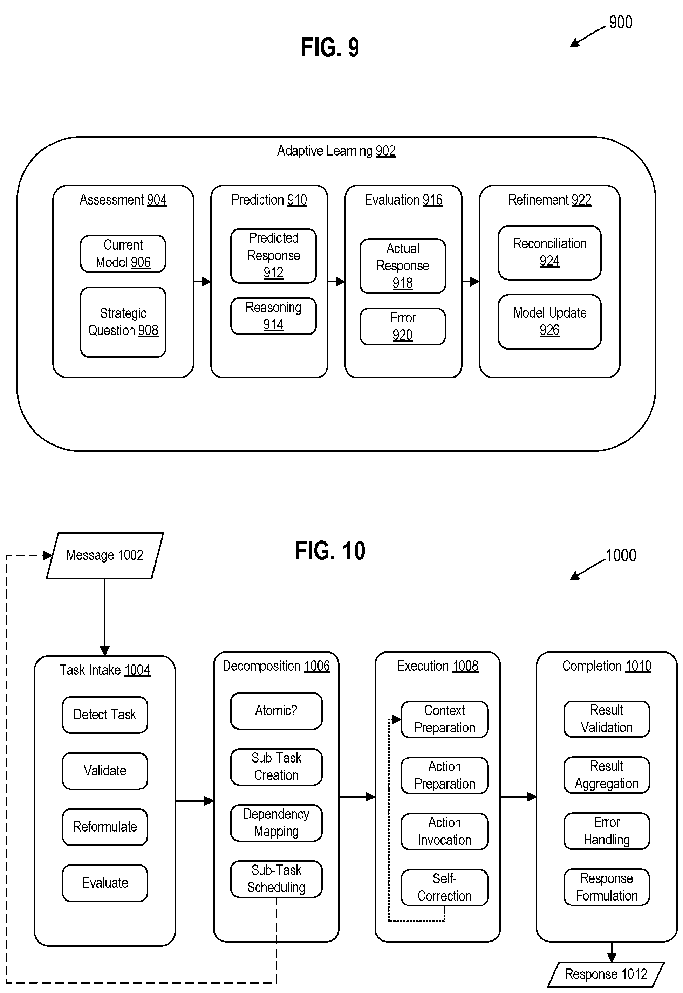

**FIG. 9** is a flow diagram of an example of an adaptive machine learning process for an automated agent in accordance with some embodiments of the present disclosure.

The process is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method is performed by components of distributed multi-agent system 105, including, in some embodiments, components or flows shown in **FIG. 9** that may not be specifically shown in other figures and/or including, in some embodiments, components or flows shown in other figures that may not be specifically shown in **FIG. 9.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

The adaptive machine learning process 902 can be used to, for example, create or update a workflow, a plan, an agent, a model (e.g., a context model, conceptual model, semantic model, or syntactic model), a memory layer, a micro-prompt, or any combination of any of the foregoing. The adaptive machine learning process 902 can be incorporated into any execution of any instance of the automated agent.

In the example of **FIG. 9,** the adaptive machine learning process 902 includes an assessment sub-process 904, a prediction sub-process 910, an evaluation sub-process 916, and a refinement sub-process 922. The assessment sub-process 904 includes or uses a current model 906 and a strategic question 908. The current model 906 can be or include a probabilistic (e.g., Bayesian) inference model that takes as input a prospective system action (e.g., a prospective system output) and outputs a probability distribution representing the likelihood of each prospective user response. Alternatively or in addition, the current model 906 can be or include a neural network or another type of machine learning model. The current model 906 can be created or trained using historical data, e.g., interaction data logged during use of the automated agent, pertaining to system actions and associated user responses. The strategic question 908 can be or include a prospective system output that is designed to elicit a user response or a particular type of user response. For example, strategic questions can be presented to the user and the user's responses logged, and those pairs of data (e.g., question and actual response) can be used to build the current model 906.

The prediction sub-process 910 includes or uses a predicted response 921 and reasoning 914.

The predicted response 921 is generated using the current model 906 and a strategic question 908. For example, after the current model 906 is built or trained, the current model 908 is used to predict the likely user responses to subsequent or previously unseen prospective strategic questions or other prospective system output. The predicted response 912 can take the form of a probability distribution over a range, set, or group of potential user responses, from which the potential user response with the highest probability may be selected. The reasoning 914 can include an explanation of how the predicted response 912 is generated. For example, the reasoning 914 can include a set of steps performed to generate the predicted response 912, the probability distribution output by the current model 906, and/or an explanation of how the predicted response 912 was selected from the probability distribution.

The evaluation sub-process 916 includes or uses an actual response 918 and an error 920. The actual response 918 is or includes the user's actual response to the strategic question 908. The error 920 is or is based on a difference between the user's actual response 918 and the predicted response 912. For example, the error 920 can be or include a difference between a prior probability distribution and a posterior probability distribution.

The refinement sub-process 922 includes or uses a reconciliation function 924 and a model update 926. The reconciliation function 924 propagates the error 920 back through the current model 906. In the Bayesian model example, the reconciliation function 924 uses the error 920 to generate a posterior probability and/or incorporate the posterior probability into the current model 906. In neural network implementations of the current model 906, the reconciliation function 924 can involve the use of backpropagation or adjustments of weight values at different layers or nodes of the neural network. The model update 926 is or includes a subsequent, modified, or supplemental version of the current model 906 that has been updated via reconciliation function 924. The model update 926 can be used in place of the current model 906 (e.g., can replace or supplement the current model 906) on the next iteration or any subsequent of the adaptive machine learning process 902.

Examples of techniques that can be used to implement aspects of adaptive machine learning 902 include reinforcement learning, Bayesian inference-based learning, and modular layered personal analogs (MLPA).

The MLPA is a nuanced model of human psychology and behavior that is learned through continuous observation and refinement. Each human interaction allows the agent to revise its internal simulation of human behavior, leveraging the Bayesian principle to adjust beliefs in the likelihood of a particular response or action given new observations. Embodiments refine the MLPA human model via Bayesian-based processes such as:

Predict: Predictions are made about a human user's likely behaviors or decisions, reinforced with explanatory rationales grounded in accumulated psychological and environmental data.
Observe: The agent compares these predictions against actual human responses (over different time intervals or horizons) during ongoing interactions.
Update Beliefs: Using the Bayesian approach, agents revise their internal models' confidence levels based on the concordance or discrepancy of predictions with observations.
Synthesize Improvements: Learnings from the belief updating process directly inform the refinement of the MLPA model, enhancing future behavioral predictions' accuracy.

Embodiments also or alternatively use a Bayesian iterative process to update context models that model aspects of the environment (e.g., as distinct from the user) allowing agents to build a richly informative and adaptive understanding of their operational surroundings. This method enables the agent's environmental perception to remain current and actionable, fostering more informed and timely decision-making.

The adaptive machine learning cycle as applied to the environment model proceeds through observation of new environmental data, belief updating using Bayesian methods, and model refinement to incorporate updates consistently. By employing these Bayesian-based adaptive processes, the described agent framework ensures that both human and environment context models can remain robust, contextually aware, and attuned to the subtleties of human-AI interaction.

The examples shown in **FIG. 9** and the accompanying description, above are provided for illustration purposes. This disclosure is not limited to the described examples. Additional or alternative details and implementations are described herein.

**FIG. 10** is a flow diagram of an example of a task decomposition process for an automated agent in accordance with some embodiments of the present disclosure.

The method is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method is performed by components of distributed multi-agent system 105, including, in some embodiments, components or flows shown in **FIG. 10** that may not be specifically shown in other figures and/or including, in some embodiments, components or flows shown in other figures that may not be specifically shown in **FIG. 10.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

In the example of **FIG. 10,** a task decomposition process 1000 includes a task intake sub-process 1004, a decomposition sub-process 1006, an execution sub-process 1008, and a completion sub-process 1010. The task decomposition process 1000 can be performed by one or more automated agents. For example, the task decomposition process 1000 can be performed in response to receipt by an agent or another component of the computing system (e.g., computing system 100) of a message 1002. The message 1002 can be or include input, such as data or one or more signals, from a user, another agent, or a tool or model. In response to the message, the agent, alone or in combination with one or more other agents, tools, models, etc., executes the task decomposition process 1000 and generates and outputs a response 1012 based on the message 1002. The message 1002 can include, for example, a request, a query, a command, feedback, or any other type of communication that explicitly or implicitly initiates, modifies, or terminates a task or an action.

The task intake sub-process 1004 performs functions including task detection, task validation, task reformulation, and task evaluation. The task detection function can detect a task from the message 1002 using, for example, a natural language processing (NLP) technique, a semantic analysis technique, a syntactic analysis technique, or a combination of any of the foregoing and/or other suitable techniques. The task can be defined as or include an intent, a goal, an objective, or an action that the user or another agent or tool wants the automated agent to achieve, perform, or satisfy. The task can be expressed in natural language, a formal language, a graphical language, or any other type of language that can be understood by the automated agent. The task can be implicit or explicit, depending on the level of specificity, clarity, or ambiguity of the message 1002.

The task validation function can validate the task using a validation technique. The validation technique can verify the validity, the feasibility, the consistency, or the completeness of the task given the message 1002, alone or in combination with other information such as one or more context models, workflows, and/or plans. The reformulation function can modify, adjust, or refine the task to make it more effective or efficient for the automated agent, or another agent or tool, to perform. The evaluation function can assess, for example, the complexity of the task or reformulated task, or the feasibility of accomplishing the task successfully. For example, the evaluation function can generate a predicted user reaction to the response 1012, and if the predicted user reaction has a low probability of satisfying the intent, goal, or objective, use the reformulation function to reformulate the task.

The decomposition process 1006 includes an atomic task checking function, a sub-task creation function, a dependency mapping function, and a sub-task scheduling function, or a combination of any of the foregoing and/or other suitable techniques. The atomic task checking function can determine whether the task is already in an atomic form (e.g., no decomposition is needed). The sub-task creation function can decompose the task into one or more sub-tasks using, for example, a decomposition technique, a segmentation technique, a partitioning technique, or a combination of any of the foregoing and/or other suitable techniques. The decomposition function can divide the task into smaller, discrete, atomic, or more manageable pieces that can be performed by the automated agent or delegated to one or more other agents. The dependency mapping function can create, map, or schedule the dependencies, the relationships, the order, or the sequence of the sub-tasks using a dependency technique, a relationship technique, an ordering technique, or a combination of any of the foregoing and/or other suitable techniques. The sub-task scheduling function can assign or delegate sub-task to respective agents or tools. After all sub-tasks are scheduled, the sub-task scheduling function can return to the task intake process 1004 to await receipt of another message 1002.

The execution sub-process 1008 can execute the task or the sub-tasks. The execution process can perform the task or the sub-tasks using one or more context models, workflows, the planners, agents, tools, AIs, or any other component, service, or resource available to the automated agent. The execution process includes a context preparation function, an action preparation function, an action invocation function, and a self-correction function. The context preparation function can access one or more layers of a multi-layer memory structure to obtain one or more context models. The action preparation function can map portions of the context models to corresponding arguments in LLM prompts, micro-prompts, commands, or API calls, for example, that are used to invoke and execute action agents. For example, a retrieval augmented generation (RAG) technique can use an LLM to generate a query that can be used to query one or more memory layers of the multi-layer memory structure to obtain context data and map or assign portions of the retrieved context data to respective arguments. The action invocation function applies the prepared prompts, micro-prompts, commands, or API calls to their respective targets (e.g., LLMs, models, tools, or other resources), thereby invoking the respective action agents. The self-correction function can evaluate the output of agent executions and, if the output of the agent executions does not exceed threshold criteria, return to the context preparation function. For example, using a combination of self-critique based on anticipated human alignment and a risk assessment model based on probability and severity, an agent can auto-regulate its actions, starting with low-confidence and requiring greater supervision. Over time, the agent's internal models can improve and the human user's confidence in the agent's ability to perform correctly and reliably can increase, allowing the agent to operate increasingly autonomously, with the permission and approval of the human user.

The task completion sub-process 1010 can verify, or confirm that the task or the sub-tasks have been successfully performed, achieved, or satisfied by the automated agent or other agents using, e.g., a completion criterion, a verification criterion, or other criteria. The task completion process 1010 includes a result validation function, a result aggregation function, an error handling function, and a response formulation function. The validation function can validate, evaluate, or assess the results or the outputs of the task or the sub-tasks, e.g., the output of the execution process 1008. The result aggregation function can aggregate, combine, or integrate the results or the outputs of the task or the sub-tasks produced by multiple agents or sub-agents into a single result or output, or a plurality of results or outputs, using an aggregation technique, a combination technique, an integration technique, or a combination of any of the foregoing and/or other suitable techniques.

The error handling function can handle any errors, exceptions, or failures that may occur during the decomposition process 1006, the execution process 1008 or the completion process 1010, using an error handling technique, an exception handling technique, a failure handling technique, or other suitable techniques. The error handling function can detect, identify, or classify the errors, the exceptions, or the failures and resolve, recover, or mitigate the errors, the exceptions, or the failures. For example, if an output of the execution 1008 or result aggregation deviates from an expected output by more than a threshold amount, the error handling function can skip the response formulation or modify the response formulation to, e.g., request more input from the user and/or obtain more context data. The response formulation function can formulate the response 1012 to the message 1002. For example, the formulation function can formulate, generate, or present the response 1012 in natural language, a formal language, a graphical language, or any other type of language or format that can be understood by the user or another agent.

The response formulation function can formulate, generate, or present the response 1012 using text, machine-generated speech, haptic output, imagery, video, audio, or any other type of modality that can be perceived by the user or another agent. The formulation function can formulate, generate, or present the response 1012 using a style, a tone, a mood, a personality, or any other type of characteristic that can convey the intention, the emotion, or the attitude of the user associated with the automated agent 212.

The examples shown in FIG. 10 and the accompanying description, above are provided for illustration purposes. This disclosure is not limited to the described examples. Additional or alternative details and implementations are described herein.

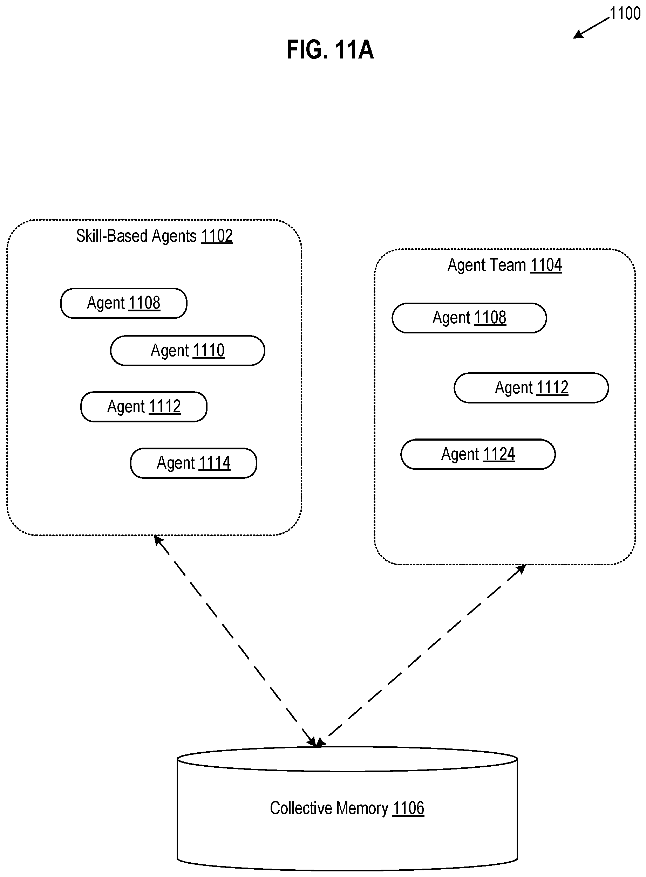

FIG. 11A illustrates an example of a multi-agent system in accordance with some embodiments of the present disclosure.

In the example of **FIG. 11A,** a multi-agent system 1100 includes N skill-based agents 1102, at least one agent team 1104, and at least one collective memory 1106. Each skill-based agent 1102 is associated with at least one skill. For example, a skill-based agent 1102 is assigned to a skill type or category in the agent definition or the skill-based agent's associated skills are identified or determined by reference to the agent's particular skill registry. For example, an agent 1108 can be associated with a skill of software engineer, an agent 1110 can be associated with a skill of project manager, an agent 1112 can be associated with a skill of data scientist, and an agent 1114 can be associated with a skill of validation coordinator.

A skill can be defined as a capability, a competency, a proficiency, or a qualification that an agent has or acquires to perform one or more actions. A skill can also be defined as a combination of knowledge, experience, expertise, intelligence, or training that an agent possesses or develops to perform one or more actions.

To be associated with a skill can mean that an agent is trained or configured to perform at least one task associated with the skill. For example, if the agent 1108 is associated with the skill of software engineer, the agent 1108 can include a tool for code generation or can have an associated micro-prompt that is specially configured to cause an LLM to generate programming code. As another example, if the agent 1110 is associated with the skill of project manager, the agent 1110 can include a tool for generating tasks, workflows, or plans, or can have an associated micro-prompt that is configured to cause an LLM to generate one or more tasks, workflows, or plans. Skills can be assigned to agents via information extraction from a user profile. For example, if a user profile identifies a particular skill, an agent associated with the user profile can be trained or configured to perform the skill identified in the user profile.

As shown in **FIG. 11A,** one or more of the skill-based agents 1102 can be assigned to an agent team 1104, alone or in combination with one or more other agents, to perform a particular task, workflow, or plan. An agent team 1104 can be created dynamically, e.g., in response to a user input and/or other data or signal from the environment 101. For instance, a skill-based agent team 1104 includes skill-based agents 1108, 1112 as well as another agent 1124. The agent 1124 can be, for example, a planner agent that can coordinate the execution of tasks by the skill-based agents 1108, 1112. As another example, agent 1124 or another agent assigned to the agent team 1104 (not shown) can perform memory access and management functions (e.g., reading and/or writing data to and/or from memory layers of a multi-layer memory structure), which may be needed to dynamically configure the skill-based agents for a particular task, workflow, or plan.

The skill-based agents 1102 and/or agents of the agent team 1104 can be classified into different types or categories based on their skills, functions, roles, or responsibilities. Each of these agents can have different skills that can be used to perform different actions or portions of actions. For example, agent 1108 can have a skill to analyze data, agent 1110 can have a skill to write text or generate digital content, etc.

The skill-based agents 1102 and/or agents of the agent team 1104 can communicate, interact, or exchange information with each other using a collective memory 1106. The collective memory 1106 can be a shared memory, a distributed memory, a decentralized memory, or any combination of any of the foregoing and/or other memories, which can store, retrieve, and/or update information related to a workflow, plan, task or sub-task. The collective memory 1106 can also store, retrieve, and/or update information related to the skill-based agents 1102, such as their identities, skills, statuses, results, or outputs. The collective memory 1106 can facilitate, enable, or enhance the coordination among the skill-based agents 1102 and/or agents of the agent team 1104 by providing a common, consistent, or coherent representation of a workflow, plan, task or sub-task and its associated information.

The skill-based agents 1102 and/or agents of the agent team 1104 can also communicate, interact, or exchange information with other agents using the collective memory 1106 or any other communication mechanism, protocol, or service. These other agents can be external, remote, or independent agents that can provide or receive information, resources, or services to or from the skill-based agents 1102 and/or agents of the agent team 1104.

The skill-based agent team 1104 and/or agents of the agent team 1104 can operate in a dynamic, flexible, or adaptive manner to perform a workflow, plan, task or sub-task. For example, the skill-based agent team 1104 and/or agents of the agent team 1104 can create, modify, or update the composition, the configuration, the structure, or the topology of the skill-based agents 1102 based on the requirements, the specifications, the constraints, or the preferences of user, workflow, plan, task or sub-task. The skill-based agent team 1104 and/or agents of the agent team 1104 can also create, modify, or update a workflow, plan, task, sub-task, or method of performing a task or sub-task based on context, environment, or feedback. The skill-based agent team 1104 and/or agents of the agent team 1104 can also create, modify, or update skills, functions, roles, or responsibilities of the skill-based agents 1102 and/or agents of the agent team 1104 based on actions, dependencies, or relationships of tasks to other tasks or of agents to other agents.

The examples shown in **FIG. 11A** and the accompanying description, above are provided for illustration purposes. This disclosure is not limited to the described examples. Additional or alternative details and implementations are described herein.

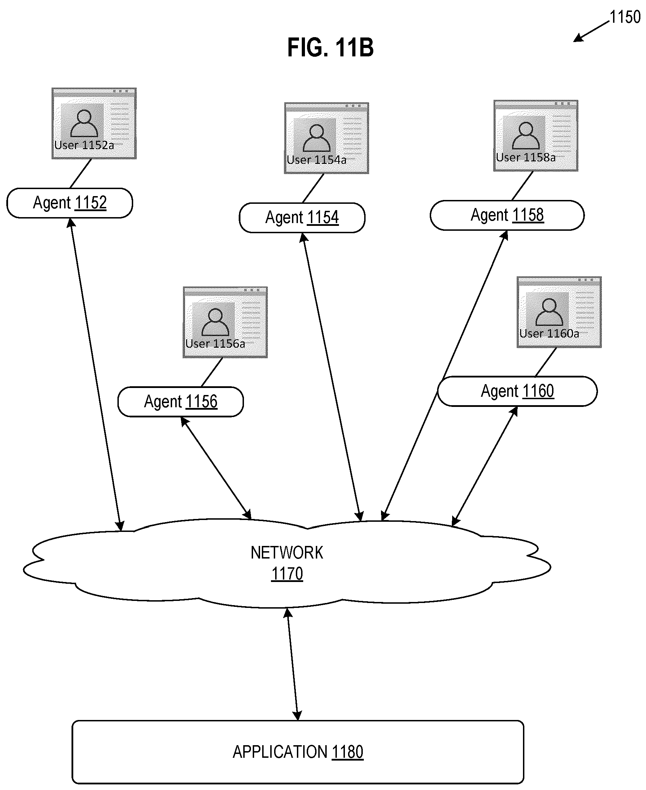

**FIG. 11B** illustrates an example of a multi-agent system in accordance with some embodiments of the present disclosure.

In the example of **FIG. 11B,** a multi-agent system 1150 includes N agents, e.g., agents 1152, 1154, 1156, 1158, and 1160, a network 1170, and at least one application 1180. The agents 1152, 1154, 1156, 1158, and 1160 can communicate, interact, or exchange information with each other, e.g., via a network 1170. The network 1170 can be any type of network or combination of networks, such as a local area network (LAN), a wide area network (WAN), a wireless network, a cellular network, a cloud network, a distributed network, a decentralized network, or any combination of any of the foregoing and/or other networks. The network 1170 can facilitate, enable, or enhance the coordination among the agents 1152, 1154, 1156, 1158, and 1160 by providing at least one medium, a channel, a protocol, or a service for data transmission, data reception, data processing, or data storage. For example, an asynchronous communication system, such as a publish and subscribe messaging system, can be implemented to enable message-based communications among the agents 1152, 1154, 1156, 1158, and 1160 and/or the one or more applications 1180.

Each agent 1152, 1154, 1156, 1158, and 1160 can be associated with a respective user and an associated user profile 1152a, 1154a, 1156a, 1158a, and 1160a. A user profile can include attribute and/or activity information for any entity (such as a person, a group, an organization, a system, a device, a component, or a resource), which can initiate, specify, request, perform, monitor, or consume output of a plan, workflow, task or sub-task. For example, a user profile can include attribute information (e.g., job title, skills, experience, geographic location, etc.) extracted from an online profile (e.g., a web page) of an online system, such as a social network system. A user can be any entity that can provide or receive information, resources, or services to or from, or cooperatively with, their respective agents 1152, 1154, 1156, 1158, and 1160. For example, a user associated with user profile 1152a can be a recruiter and the user's agent 1152 can be trained or configured to perform one or more recruiting functions in the manner and style that the user associated with user profile 1152a prefers them to be performed, while a user associated with user profile 1154a can be a hiring manager and the user's agent 1154 can be trained or configured to perform one or more hiring functions in the manner and style that the user associated with user profile 1154a prefers them to be performed, a user associated with user profile user 1156a can be a human resources specialist and the user's agent 1156 can be trained or configured to perform one or more human resources functions in the manner and style that the user associated with user profile 1156a prefers them to be performed, a user associated with user profile 1158a can be a software developer and the user's agent 1158 can be trained or configured to perform one or more software development functions in the manner and style that the user associated with user profile 1158a prefers them to be performed, and a user associated with user profile 1160a can be another software developer and the user's agent 1160 can be trained or configured to perform one or more software development functions in the manner and style that the user associated with user profile 1160a prefers them to be performed, which may be different than the preferences of the software developer user associated with the user profile 1158a. For instance, even though agents 1158 and 1160 are both software developer agents, the agents 1158, 1160 can have different associated workflows, micro-prompts, models, tools, AIs, etc., depending upon the information extracted from their respective user profiles.

The application 1180 can be any software, hardware, or firmware application that can provide or receive information, resources, or services to or from one or more of the agents of the multi-agent system 1150. For example, the application 1180 can be a web application, a mobile application, a desktop application, a cloud application, a distributed application, a decentralized application, or any combination of the foregoing and/or other applications. The application 1180 can facilitate, enable, or enhance the performance, the quality, the efficiency, or the effectiveness of the task or the sub-task by providing a user interface, a data visualization tool, etc. For example, the application 1180 can provide a conversational dialog-based interface alone or in combination with multi-media content and/or multi-model input and/or output capabilities. The application 1180 can alternatively or in addition provide a search engine that enables users to search the multi-agent system 1150 for agents that match search criteria.

One example implementation of a multi-agent system as described is to provide a dynamic, skills-focused marketplace that can meet increasing and fluctuating demands for specialized talent and the need to adapt quickly to changing requirements. Embodiments of a multi-agent system can leverage a social network, such as a network that connects businesses and other entities with a network of human professionals and workers. An AI-supported skills-based marketplace implemented using a multi-agent system as described can support human professionals and workers with AI agents and match them with job opportunities via the network. Embodiments of the multi-agent system as described can enable companies and other entities to dynamically hire and assemble teams of scalable experts on-demand.

Embodiments of the multi-agent system are based on automated agents that are driven by generative AI. These agents are designed to learn from and replicate the work styles and expertise of their associated human users. By doing so, they enable these individuals to significantly enhance their output, multiplying their productivity. This not only benefits professionals, but allows businesses and other entities to collaborate with individuals specialized in particular domains in a scalable way. Embodiments of an AI driven skills-based marketplace as described can optimize the deployment of skilled talent to the dynamic needs of businesses and other entities.

In an embodiment of the marketplace, automated agents are powered by generative AI and supervised by human workers or professionals, such as an individual who is an expert in a relevant domain. Using the techniques described herein, the automated agents can be configured and trained to understand and analyze information pertinent to particular teams and projects, and to undertake tasks. When more information is needed, the automated agents can communicate with the team or human supervisor. Over time, and with the permission and approval of the human supervisor or team, the automated agents can learn to require less clarification and guidance.

The examples shown in **FIG. 11B** and the accompanying description, above are provided for illustration purposes. This disclosure is not limited to the described examples. Additional or alternative details and implementations are described herein.

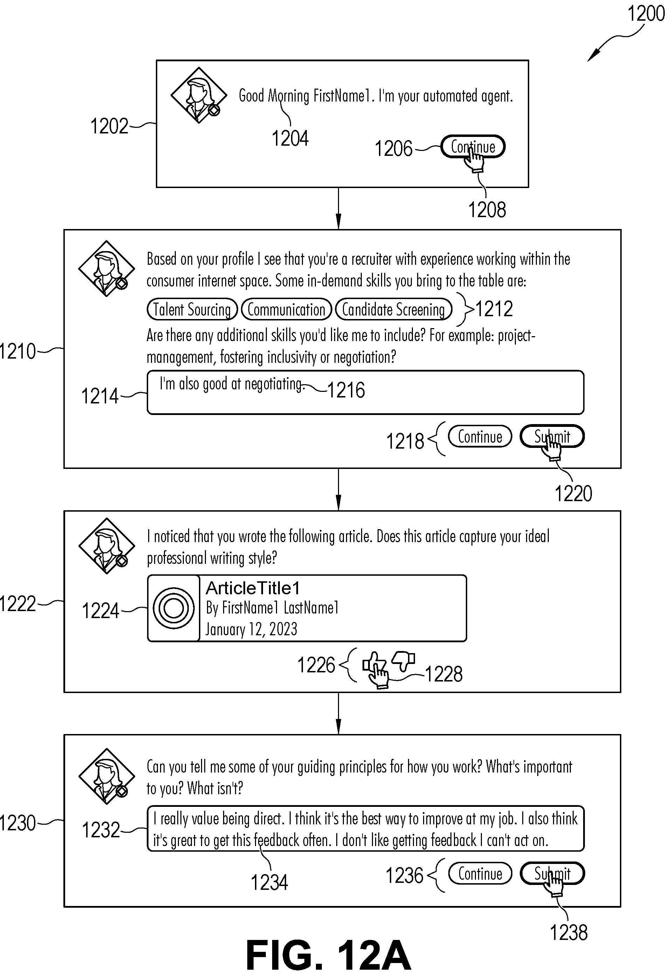

**FIG. 12A** illustrates an example of an agent onboarding process, including example depictions of graphical user interface elements, in accordance with some embodiments of the present disclosure.

In the user interface elements shown in **FIG. 12A,** certain data that would normally be displayed may be anonymized for the purpose of this disclosure. In a live example, the actual data and not the anonymized version of the data would be displayed. For instance, the text "CompanyName" would be replaced with a name of an actual company and "FirstName LastName" would be replaced with a user's actual name.

The user interface elements shown in **FIG. 12A** are presented to a user by an application system, such as automated agent 102. In some implementations, portions of the user interface elements are implemented as one or more web pages that are stored, e.g., at a user device, a server or in a cache of a user device, and then loaded into a display of a user device via the user device sending a page load request to the server or fetching data from the cache.

The graphical user interface control elements (e.g., fields, boxes, buttons, etc.) shown in the screen captures are implemented via software used to construct the user interface screens. While the screen captures illustrate examples of user interface components, e.g., visual displays, buttons, input boxes, etc., this disclosure is not limited to the illustrated embodiments, or to visual displays, or to graphical user interfaces.

In **FIG. 12A,** a user interface flow 1200 for onboarding a new automated agent (e.g., automated agent 102) is shown. The flow 1200 includes multi-modal conversational dialog elements 1202, 1210, 1222, and 1230. The dialog elements 1202, 1210, 1222, and 1230 are multi-modal in the sense that they can include any one or more of text graphics, interactive elements (e.g., buttons, text boxes, reaction icons, etc.), hyperlinks, audio, video, etc. The dialog elements 1202, 1210, 1222, and 1230 each represent a round of dialog involving the automated agent and a user during an onboarding process. The arrows between the dialog elements 1202, 1210, 1222, and 1230 indicate the conversational flow of the dialog.

The onboarding process configures the automated agent according to the user's preferences, attributes, historical activity, and current context. The onboarding process is implemented using a conversational format in which the agent iteratively presents information that it has obtained (e.g., via querying one or more memory layers of a multi-layered memory structure, into which context models have been loaded) to the user and requests feedback from the user.

At dialog element 1202, the automated agent opens the dialog, e.g., "chat session" with the user in a personalized way, with an introduction 1204 that mentions the user's name. The dialog element 1202 presents a Continue button 1206. User selection 1208 of the Continue button 1206 causes the flow to advance to dialog element 1210 and also provides the user selection 1208 as positive feedback to e.g., an adaptive machine learning process associated with the automated agent.

At dialog element 1210, the automated agent presents a list of skills 1212 to the user and an input box 1214. The automated agent can obtain the skills 1212 via, for example, information extracted from, e.g., the user's online profile, a skills graph, or a skills taxonomy, and stored in one or more memory layers of a multi-layered memory structure. For instance, skills can be extracted from a skills taxonomy using an entity identifier and one or more skills extracted from the user's online profile. As an example, skills obtained from the user's online profile can be matched with one or more skills in a skills taxonomy using a graph traversal approach and a skills graph or an embedding based retrieval approach and skill embeddings or skill-entity embeddings, wherein the embeddings can be generated using a machine learning model configured to generate embeddings (e.g., vector representations of digital content).

The dialog element 1210 requests user feedback on the skills 1212 via box 1214. In the example of **FIG. 12A,** the user has provided feedback 1216. The dialog element 1210 presents Continue and Submit options buttons 1218. User selection 1220 of the Submit option causes the flow to advance to dialog element 1222 and also provides the feedback 1216 and user selection 1220 as feedback to e.g., an adaptive machine learning process associated with the automated agent. For example, the skill of negotiating can be added to the automated agent's skill registry in response to the feedback 1216.

At dialog element 1222, the automated agent presents a link 1224 to an article written and published or posted in an online system (e.g., a social media network, etc.) by the user. The link 1224 is obtained by the automated agent by, e.g., querying one or more layers of a multi-layered memory structure in which a context model is stored, where the context model includes information about the user's historical activities in the online system. The dialog element 1222 presents selectable feedback (thumbs up and thumbs down) elements 1226, where thumbs up indicates agreement or positive feedback and thumbs down indicates disagreement or negative feedback. User selection 1228 of the thumbs up feedback option causes the flow to advance to dialog element 1230 and also provides the user selection 1228 as positive feedback to e.g., an adaptive machine learning process associated with the automated agent.

At dialog element 1230, the automated agent presents a follow-up question, e.g., a strategic question, designed to elicit user-specific preferences from the user, and an input box 1232. The follow-up or strategic question is designed to elicit information that can be used to customize the automated agent or more specifically, one or more workflows, plans, micro-prompts, or models associated with the automated agent. In the example of **FIG. 12A,** the user has provided feedback 1234. The dialog element 1230 presents Continue and Submit options buttons 1236. User selection 1238 of the Submit option causes the flow to provide the feedback 1234 and user selection 1238 as feedback to e.g., an adaptive machine learning process associated with the automated agent. For example, feedback 1234 is added to a context model used to customize the frequency with which the automated agent requests feedback from the user when performing tasks (e.g., the level of user control over the agent, or agent autonomy, is customizable based on the feedback 1234). For instance, the user's indication that they like to receive feedback often, the frequency at which the automated agent checks in with the user or provides feedback to the user can be increased (e.g., greater than a default frequency level). As another example, feedback 1234 is added to a context model used to customize the style and tone of output generated by the automated agent in accordance with the user's preferences for a direct communication style.

In some embodiments, a user can train the context model to a level of proficiency or supervision level preferred by the user. For instance, if a user wants to limit the agent's scope of valid tasks or actions to detecting bugs for software written in SQL (such that the agent is not configured to perform any other tasks like SQL code generation or bug detection in Java), the context model can be configured to reflect these preferences and limit the amount of specific events that can be ingested into memory (e.g., procedural memory) for training the agent. For example, if an input or event is received that is interpreted as a request that exceeds the agent's scope of valid tasks according to the user's preferences, such input or event can be rejected so that it is not included in the training of the context model. Alternatively or in addition, these user preferences can be used to train the agent to request confirmation from the user if an input or event is determined to exceed the agent's scope of valid tasks. In these and/or other ways, the context model can be trained so that the agent's capabilities are limited and aligned with the user's level of comfort and trust in the agent's performance.

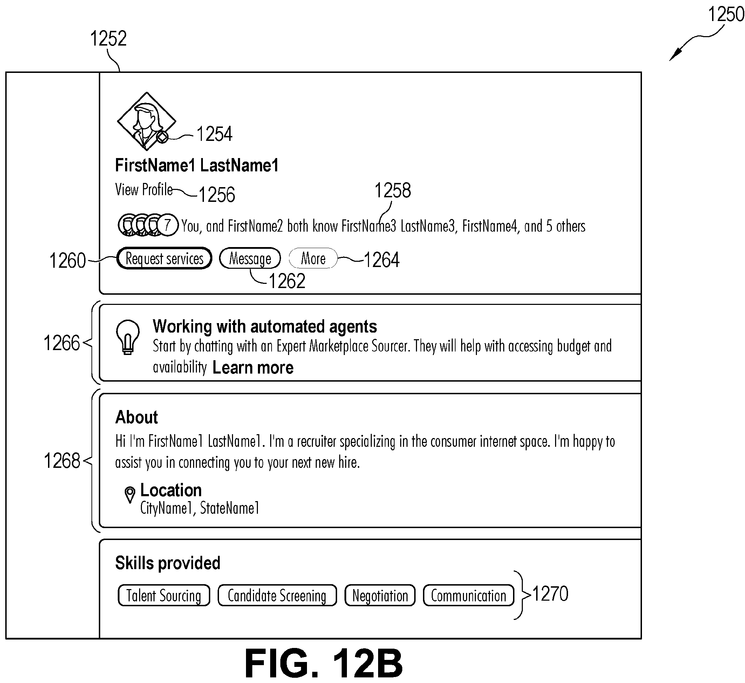

Following the user selection 1238, the information obtained by the automated agent as a result of the flow 1200 is used to configure and customize the automated agent. For example, one or more sub-agents, workflows, tools, models, and/or micro-prompts can be configured or customized using the information obtained via flow 1200. In some embodiments, configuring and customizing the automated agent includes building a profile page for the automated agent, which can be part of the user's profile page, a related page, or a separate page that reference the user's own profile page. An example of an agent profile page that can be constructed, loaded, and presented to users of an online system is shown in **FIG. 12B,** described below.

The examples shown in **FIG. 12A** and the accompanying description are provided for illustration purposes. For example, while the examples may be illustrated as user interface screens for a smaller form factor such as smart phones, tablet computers, or wearable devices, the user interfaces can be configured for other forms of electronic devices, such as desktop computers and/or laptop devices, or vice versa. This disclosure is not limited to the described examples. Additional or alternative details and implementations are described herein.

**FIG. 12B** illustrates an example of a result of the agent onboarding process of **FIG. 12A,** including example depictions of graphical user interface elements, in accordance with some embodiments of the present disclosure.

In the user interface elements shown in **FIG. 12B,** certain data that would normally be displayed may be anonymized for the purpose of this disclosure. In a live example, the actual data and not the anonymized version of the data would be displayed. For instance, the text "CompanyName" would be replaced with a name of an actual company and "FirstName LastName" would be replaced with a user's actual name.

The user interface elements shown in **FIG. 12B** are presented to a user by an application system, such as automated agent 102. In some implementations, portions of the user interface elements are implemented as one or more web pages that are stored, e.g., at a user device, a server or in a cache of a user device, and then loaded into a display of a user device via the user device sending a page load request to the server or fetching data from the cache.

The graphical user interface control elements (e.g., fields, boxes, buttons, etc.) shown in the screen captures are implemented via software used to construct the user interface screens. While the screen captures illustrate examples of user interface components, e.g., visual displays, buttons, input boxes, etc., this disclosure is not limited to the illustrated embodiments, or to visual displays, or to graphical user interfaces.

In **FIG. 12B,** a user interface 1250 includes an agent profile page 1252. The agent profile page 1252 can be generated, for example, via the agent onboarding process shown in **FIG. 12A,** described above. The agent profile page 1252 identifies the associated user, e.g., by name and image. An icon 1254 is positioned adjacent to or on the user and agent identifying content. The icon 1254 indicates that the profile page is associated with the user's automated agent. A link 1256 is presented adjacent the user and agent identifying content. The link 1256 is selectable; selection of the link 1256 loads the user's profile page.

A connections summary 1258 is positioned adjacent the user and agent identifying content. The connections summary 1258 presents a summary of the entities who have connected with the agent profile page 1252 (e.g., a social connection, friend, or follower connection). Selectable buttons 1260, 1262, 1264 are presented adjacent the connections summary 1258. Button 1260 is selectable by a user of the online system to request services of the user-associated automated agent. Button 1262 is selectable by a user of the online system to send a message (e.g., a text message, email, instant message, notification, etc.) to the user account associated with the agent. Button 1264 is selectable by a user of the online system to load additional functions associated with the agent's profile page.

A digital content panel 1266 is presented adjacent the selectable buttons 1260, 1262, 1264. The digital content panel 1266 provides general information about user-associated agents that are accessible via the online system and how users of the online system can interact with the agents.

A digital content panel 1268 is presented adjacent the digital content panel 1266. The digital content panel 1268 provides introductory information about the user-associated agent described by the profile page 1252, in particular. For example, the digital content panel 1268 presents skills, roles, and capabilities of the user-associated agent and a geographic location in which the user associated with the agent may be located or in which the agent's services can be performed.

A skill section 1270 identifies in more discrete terms skills that are associated with the automated agent. For example, each skill identified in the skill section 1270 corresponds to a keyword, phrase, or facet that can be used to facilitate searching and query formation. The skills listed in the skill section 1270 can be identified, for example, during the agent onboarding process. For instance, information extracted from the user's profile can be mapped or matched to the skills shown in skill section 1270 using, e.g., a taxonomy or an embedding-based retrieval (EBR) technique. Match or map as used herein can refer to an exact match or an inexact match. For example, match or map can refer to a machine-determined predicted or estimated degree of relevance, similarity or compatibility between entities or data items that satisfies (e.g., meets or exceeds) a threshold level of relevance, similarity or compatibility, where the threshold level of relevance, similarity or compatibility is variable based on the requirements of a particular design or implementation. The threshold level of similarity may be set lower or higher for different types of matching or mapping.

While not specifically shown in FIG. 12B, the agent can be infused with the user's style, tone, and/or personality preferences, which can be collected via, e.g., a dialog flow such as described with reference to FIG. 12A. For example, the language, syntax, tone, and/or multimodal content of the profile page can reflect the user's style, tone, and/or personality preferences. These style, tone, and/or personality preferences can be determined, with the user's content, using, e.g., portions of the user's interaction history with the automated agent and/or one or more other applications, such as articles, comments, and posts written by the user and distributed via an online system such as a social network, and/or the user's dialog history with the automated agent.

The agent profile page 1252 or portions thereof can be indexed for searching within an online system. For example, the agent profile page 1252 can be retrieved by a search of an online system and presented to the searching user via the online system.

The examples shown in **FIG. 12B** and the accompanying description are provided for illustration purposes. For example, while the examples may be illustrated as user interface screens for a smaller form factor such as smart phones, tablet computers, or wearable devices, the user interfaces can be configured for other forms of electronic devices, such as desktop computers and/or laptop devices, or vice versa. This disclosure is not limited to the described examples. Additional or alternative details and implementations are described herein.

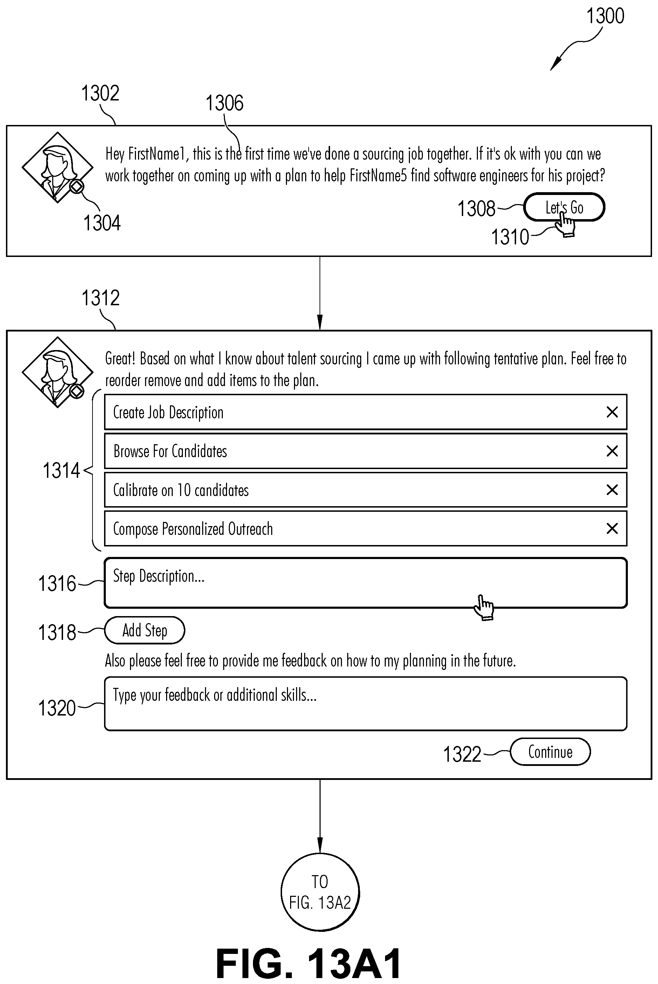

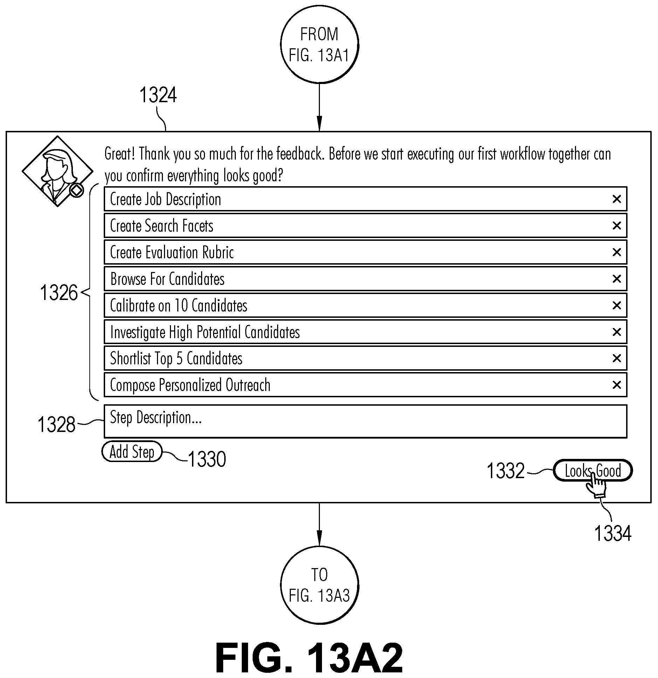

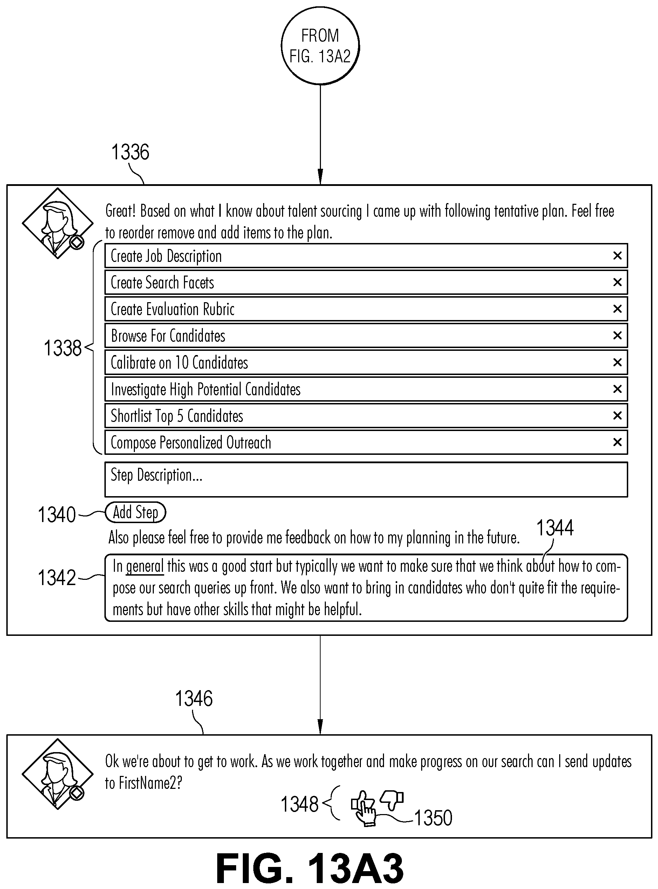

**FIG. 13A1, FIG. 13A2, FIG. 13A3** illustrates an example of a workflow creation process, including example depictions of graphical user interface elements, in accordance with some embodiments of the present disclosure.

In the user interface elements shown in **FIG. 13A1, FIG. 13A2, FIG. 13A3,** certain data that would normally be displayed may be anonymized for the purpose of this disclosure. In a live example, the actual data and not the anonymized version of the data would be displayed. For instance, the text "CompanyName" would be replaced with a name of an actual company and "FirstName LastName" would be replaced with a user's actual name.

The user interface elements shown in **FIG. 13A1, FIG. 13A2, FIG. 13A3** are presented to a user by an application system, such as automated agent 102. In some implementations, portions of the user interface elements are implemented as one or more web pages that are stored, e.g., at a user device, a server or in a cache of a user device, and then loaded into a display of a user device via the user device sending a page load request to the server or fetching data from the cache.

The graphical user interface control elements (e.g., fields, boxes, buttons, etc.) shown in the screen captures are implemented via software used to construct the user interface screens. While the screen captures illustrate examples of user interface components, e.g., visual displays, buttons, input boxes, etc., this disclosure is not limited to the illustrated embodiments, or to visual displays, or to graphical user interfaces.

In **FIG. 13A1,** a user interface flow 1300 for creating a workflow or plan using an automated agent (e.g., automated agent 102) is shown. The flow 1300 includes multi-modal conversational dialog elements 1302 and 1312, and the flow continues in **FIG. 13A2,** described below. The dialog elements 1302 and 132 are multi-modal in the sense that they can include any one or more of text graphics, interactive elements (e.g., buttons, text boxes, reaction icons, etc.), hyperlinks, audio, video, etc. The dialog elements 1302 and 1312 each represent a round of dialog involving the automated agent and a user during a workflow or plan creation process. The arrows between the dialog elements 1302 and 1312 indicate the conversational flow of the dialog.

The workflow or plan creation process configures a workflow or plan that the automated agent can perform according to the user's preferences, attributes, historical activity, and current context. The workflow or plan creation process is implemented using a conversational format in which the agent iteratively presents information that it has obtained (e.g., via querying one or more memory layers of a multi-layered memory structure, into which context models have been loaded), and/or options to the user and requests feedback from the user.

At dialog element 1302, the automated agent opens the dialog, e.g., "chat session" with the user in a personalized way, with an introduction 1306 that mentions the user's name. The automated agent is identified by an icon 1304, which signifies that the dialog is being conducted with the user's automated agent. In the example of **FIG. 13A1,** the automated agent prompts the user for assistance in creating a workflow or plan for a sourcing job, e.g., to find job candidates with software engineering experience for another user's project. Aspects of the workflow or plan creation process can be adapted to many different kinds of jobs, workflows, or plans and are not limited to the illustrative sourcing job.

The dialog element 1302 presents a Let's Go button 1308. User selection 1310 of the Let's Go button 1308 causes the flow to advance to dialog element 1312 and also provides the user selection 1310 as positive feedback to e.g., an adaptive machine learning process associated with the automated agent.

At dialog element 1312, the automated agent presents a plan that includes a list of selectable tasks 1314 to the user, along with a step input box 1316, an add step button 1318, and a feedback input box 1320. The automated agent has obtained the plan including the selectable tasks 1314 via, e.g., a large language model (LLM). For example, information extracted from the user's online profile and/or stored in one or more memory layers of a multi-layered memory structure is applied to corresponding arguments of a micro-prompt that is configured to cause the LLM to generate a list of steps commonly associated with talent sourcing. Alternatively or in addition, a retrieval-augmented generation approach is used in which the automate agent formulates a query to conduct, e.g., an Internet search for articles about job sourcing, prompts an LLM to summarize the top k search results retrieved by the query, extract tasks from the summarized content, and organize the tasks into a plan by presenting the tasks in a logical or sequential order. Any of the tasks in the plan 1314 can be removed from the plan 1314 (e.g., by the user selecting the "X" associated with the task to be removed).

Step input box 1316 enables the user to add one or more additional steps to the plan 1314 using, e.g., natural language input. Add step button 1318 is selectable by the user to add a step corresponding to the step description 1316 to the plan 1314. Selection of the add step button 1318 can cause the automated agent to invoke a process for converting the step description 1316 to a canonical or standardized task that the automated agent can recognize and execute (either alone or in combination with one or more other agents, tools, resources, AIs, etc.).

Whereas the plan 1314 prior to user customization may be considered a workflow, e.g., a pre-defined workflow, the functionality of dialog element 1312 enables workflows to be dynamically altered or customized for individual users in an intuitive and efficient way. The customized version of the plan 1314 is stored in one or more layers of a multi-layer memory structure associated with the user's automated agent so that it can be efficiently accessed and/or updated by subsequent instances of the user's automated agent.

The feedback input box 1320 requests user feedback or additional skills. In the example of **FIG. 13A1,** the user has not yet provided feedback. The dialog element 1322 presents a Continue button2. User selection of the Continue button causes the flow to advance to dialog element 1324 of **FIG. 13A2** and also provides any feedback entered into feedback input box 1320 to e.g., an adaptive machine learning process associated with the automated agent. For example, specific instructions as to the ordering of tasks in the plan or the frequency of requests for feedback can be used to update the user's context model associated with the plan 1314 and stored in the multi-layer memory structure.

Following the user selection of the Continue button 1322, the information obtained by the automated agent as a result of the portion of the flow 1300 shown in **FIG. 13A1** is used to configure and customize one or more workflows associated with the automated agent. For example, one or more sub-agents, workflows, tools, models, and/or micro-prompts can be configured or customized using the information obtained via the portion of the flow 1300 shown in **FIG. 13A1.**

In **FIG. 13A2,** the user interface flow 1300 for creating a workflow or plan using an automated agent (e.g., automated agent 102) continues. The portion of the flow 1300 shown in **FIG. 13A2** includes a multi-modal conversational dialog element 1324. The dialog element 1324 is multi-modal in the sense that it can include any one or more of text graphics, interactive elements (e.g., buttons, text boxes, reaction icons, etc.), hyperlinks, audio, video, etc. The dialog element 1324 represents a round of dialog involving the automated agent and a user during a workflow or plan creation process. The arrows between the dialog element 1324, **FIG. 13A1,** and **FIG. 13A2** indicate the conversational flow of the dialog.

At dialog element 1324, the automated agent responds to input provided by the user via the dialog element 1312. In the example of **FIG. 13A2,** the automated agent presents the updated workflow or plan 1326 including the tasks added or modified by the user and incorporating the user's feedback regarding the order of performance of the steps, etc. The automated agent prompts the user to confirm that the workflow or plan 1326 is acceptable to the user (e.g., meets the user's goals or objectives).

Dialog element 1324 provides another opportunity for the user to modify the plan or workflow 1326 by removing any of the presented steps and/or adding one or more new steps or step descriptions via step input box 1328 and add step button 1330. Selection of the add step button 1330 can cause the automated agent to invoke a process for converting the step description 1328 to a canonical or standardized task that the automated agent can recognize and execute (either alone or in combination with one or more other agents, tools, resources, AIs, etc.).

The dialog element 1324 presents a Looks Good button 1332. User selection 1334 of the Looks Good button 1332 causes the flow to advance to dialog element 1336 of **FIG. 13A3** and also provides the user selection 1334 and any additional input provided by the user via step input box 1328 and add step button 1330 or by removal of one or more steps of the plan 1326, as feedback to e.g., an adaptive machine learning process associated with the automated agent.

The user-approved customized version 1324 of the plan 1314 is stored in one or more layers of a multi-layer memory structure associated with the user's automated agent so that it can be efficiently accessed and/or updated by subsequent instances of the user's automated agent.

Following the user selection 1344, the information obtained by the automated agent as a result of the portion of the flow 1300 shown in **FIG. 13A2** is used to configure and customize one or more workflows associated with the automated agent. For example, one or more sub-agents, workflows, tools, models, and/or micro-prompts can be configured or customized using the information obtained via the portion of the flow 1300 shown in **FIG. 13A2.**

In **FIG. 13A3,** the user interface flow 1300 for creating a workflow or plan using an automated agent (e.g., automated agent 102) continues. The portion of the flow 1300 shown in **FIG. 13A3** includes multi-modal conversational dialog elements 1336 and 1346. The dialog elements 1336 and 1346 are multi-modal in the sense that they can include any one or more of text graphics, interactive elements (e.g., buttons, text boxes, reaction icons, etc.), hyperlinks, audio, video, etc. The dialog elements 1336 and 1346 each represents round of dialog involving the automated agent and a user during a workflow or plan creation process. The arrows between the dialog elements dialog elements 1336, 1346 and **FIG. 13A2** indicate the conversational flow of the dialog.

At dialog element 1336, the automated agent responds to input provided by the user via the dialog element 1324. In the example of **FIG. 13A3,** the automated agent presents the updated workflow or plan 1338 including the tasks added or modified by the user and incorporating the user's feedback regarding the order of performance of the steps, etc. The automated agent prompts the user to add steps to and/or remove steps from the plan or workflow 1338, e.g., via add step button 1340 and the associated step input box.

The dialog element 1336 prompts the user to provide more generalized feedback on the planning process (as opposed to specific feedback on the elements of the plan or workflow), at input box 1342. In the example of **FIG. 13A3,** the user has provided feedback 1344 in a conversational natural language format. In response to the feedback 1344, the automated agent can use the feedback 1344 to update one or more workflows, plans, context models, etc. For example, one or more sub-agents of the automated agent can perform entity extraction on the feedback 1344 and map the extracted entities to micro-prompts, instructions, and or arguments.

Dialog element 1346 provides another opportunity for the user to provide feedback or preferences regarding the level of control or autonomy of the automated agent. **In** the example of **FIG. 13A3,** the automated agent asks the user whether the user would like the agent to send progress updates to the user as the plan is executed.

The dialog element 1348 presents selectable feedback (thumbs up and thumbs down) elements, where thumbs up indicates agreement or positive feedback and thumbs down indicates disagreement or negative feedback. User selection 1350 of the thumbs up feedback option provides the user selection 1350 and control instructions to e.g., an adaptive machine learning process associated with the automated agent.

The user-approved customized version 1338 of the plan 1314 is stored in one or more layers of a multi-layer memory structure associated with the user's automated agent so that it can be efficiently accessed and/or updated by subsequent instances of the user's automated agent.

Additionally, the learnings obtained by the automated agent as a result of execution of the flow are stored in one or more layers of a multi-layer memory structure associated with the user's automated agent so that it can be efficiently accessed and/or updated by subsequent instances of the user's automated agent. For example, user preferences as to the amount and frequency of communications between the automated agent and the user during execution of the plan, pertaining to, e.g., the level or degree of control or autonomy of the agent, are learned and maintained in the multi-layer memory structure associated with the user's automated agent. These learnings can be updated dynamically as subsequent iterations of the automated agent executing plans with the user are performed. For example, the number of times the automated agent asks for the user's feedback may decrease on subsequent iterations.

Following the user selection 1350, the information obtained by the automated agent as a result of the portion of the flow 1300 shown in **FIG. 13A3** is used to configure and customize one or more workflows associated with the automated agent. For example, one or more sub-agents, workflows, tools, models, and/or micro-prompts can be configured or customized using the information obtained via the portion of the flow 1300 shown in **FIG. 13A3.**

The examples shown in **FIG. 13A1, FIG. 13A2, FIG. 13A3** and the accompanying description are provided for illustration purposes. For example, while the examples may be illustrated as user interface screens for a smaller form factor such as smart phones, tablet computers, or wearable devices, the user interfaces can be configured for other forms of electronic devices, such as desktop computers and/or laptop devices, or vice versa. This disclosure is not limited to the described examples. Additional or alternative details and implementations are described herein.

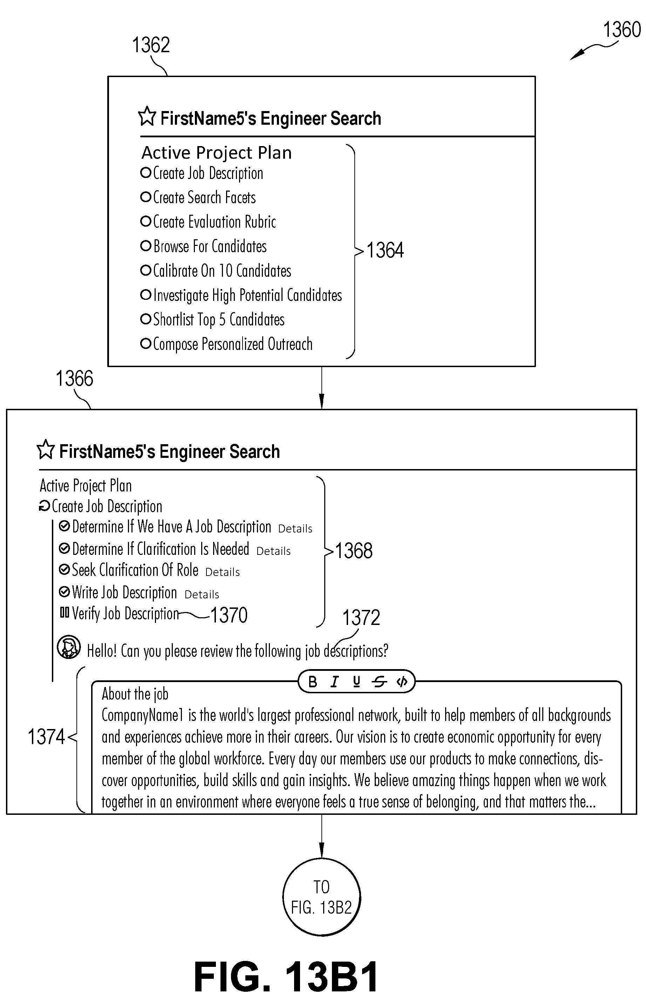

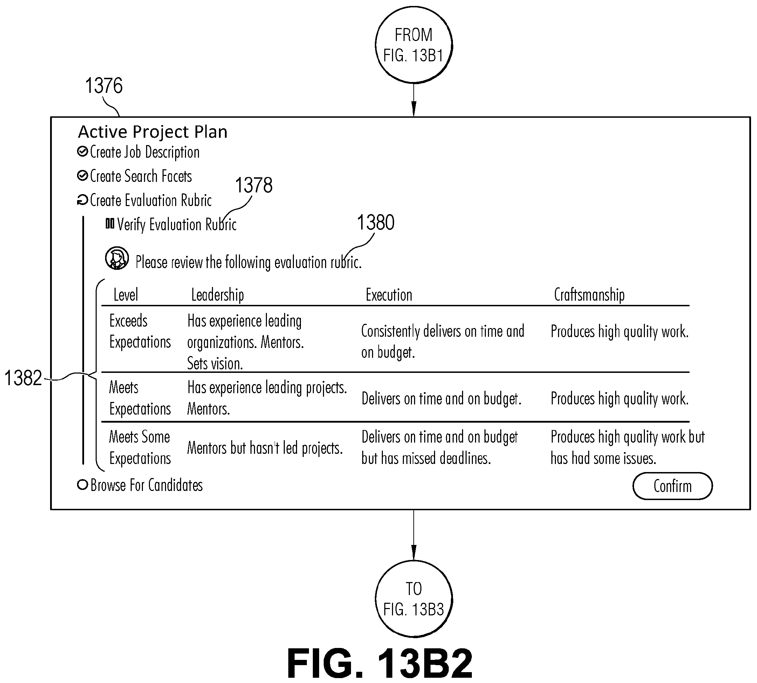

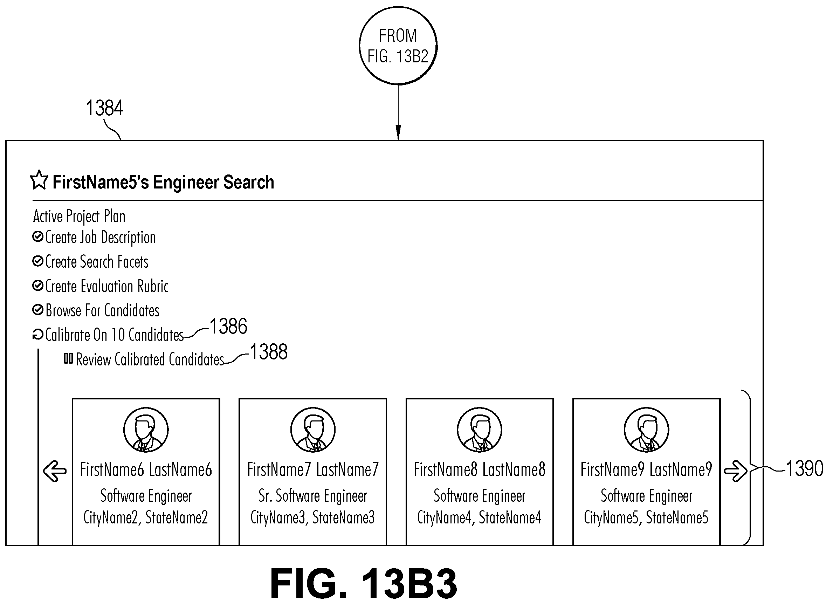

**FIG. 13B1, FIG. 13B2, FIG. 13B3** illustrates an example of a workflow execution process, including example depictions of graphical user interface elements, in accordance with some embodiments of the present disclosure.

In the user interface elements shown in **FIG. 13B1, FIG. 13B2, FIG. 13B3,** certain data that would normally be displayed may be anonymized for the purpose of this disclosure. In a live example, the actual data and not the anonymized version of the data would be displayed. For instance, the text "CompanyName" would be replaced with a name of an actual company and "FirstName LastName" would be replaced with a user's actual name.

The user interface elements shown in **FIG. 13B1, FIG. 13B2, FIG. 13B3** are presented to a user by an application system, such as automated agent 102. In some implementations, portions of the user interface elements are implemented as one or more web pages that are stored, e.g., at a user device, a server or in a cache of a user device, and then loaded into a display of a user device via the user device sending a page load request to the server or fetching data from the cache.

The graphical user interface control elements (e.g., fields, boxes, buttons, etc.) shown in the screen captures are implemented via software used to construct the user interface screens. While the screen captures illustrate examples of user interface components, e.g., visual displays, buttons, input boxes, etc., this disclosure is not limited to the illustrated embodiments, or to visual displays, or to graphical user interfaces.

In **FIG. 13B1,** a user interface flow 1360 for executing a workflow or plan using an automated agent (e.g., automated agent 102) is shown. The flow 1360 includes multi-modal conversational dialog elements 1362 and 1366, and the flow continues in **FIG. 13B2,** described below. The dialog elements 1362 and 1366 are multi-modal in the sense that they can include any one or more of text graphics, interactive elements (e.g., buttons, text boxes, reaction icons, etc.), hyperlinks, audio, video, etc. The dialog elements 1362 and 1366 each represent a round of dialog involving the automated agent and a user during a workflow or plan execution process. The arrows between the dialog elements 1362 and 1366 indicate the conversational flow of the dialog.

The workflow or plan execution process executes a workflow or plan that the automated agent can perform according to the user's preferences, attributes, historical activity, and current context. The workflow or plan execution process is implemented using a conversational format in which the agent accesses information (e.g., via querying one or more memory layers of a multi-layered memory structure, into which context models have been loaded), requests information, executes tasks, and/or coordinates execution of tasks by various sub-agents.

In the example of **FIG. 13B1, FIG. 13B2, FIG. 13B3,** the automated agent executes the plan created via, e.g., the flow 1300, described above. At dialog element 1362, the automated agent presents a summary of the plan created via, e.g., the flow 1300, for example, the plan presentation 1364 is a summary of the plan 1338.

At dialog element 1366, the automated agent presents a task decomposition 1368 of the first task in the plan 1364. In the example of **FIG. 13B1,** the first task is Create Job Description. The task decomposition 1368 includes a list of sub-tasks of the Create Job Description Task. The task decomposition 1368 is generated by, e.g., a planner agent using one or more of the techniques described herein. For example, the planner agent can use a retrieval-augmented generation (RAG)-based approach to formulate an LLM prompt to generate a list of tasks associated with the Create Job Description Task. The task decomposition 1368 can alternatively or additionally be customized using a flow similar to flow 1300, described above.

In the task decomposition 1368, the automated agent indicates the status of the sub-tasks, e.g., check marks indicate that sub-tasks have been completed. In the example of FIG. **13B1,** the current sub-task being executed by the automated agent is the Verify Job Description sub-task 1370.

In accordance with the user preferences, the automated agent generates and presents a prompt 1372 to request the user's feedback on the job description that the automated agent has generated and presented at box 1374. Box 1374 enables the user to review and edit the system-generated job description. For example, a first version of the job description is generated by a sub-agent of the automated agent instructing an LLM to generate a job description using data obtained via execution of the previous sub-tasks. The flow 1360 continues to dialog element 1376 of **FIG. 13B2.**

At dialog element 1376, the automated agent has continued executing the plan, having completed the create job description and create search facets sub-tasks. The dialog element 1376 indicates by check marks that these tasks have been completed and that the current task is the create evaluation rubric task. The create evaluation rubric task has been decomposed into sub-tasks including a verify evaluation rubric sub-task 1378. In executing the verify evaluation rubric sub-task 1378, the automated agent has generated and presented a request 1380 for feedback on the evaluation rubric 1382 that the automated agent has generated. For example, a first version of the evaluation rubric is generated by a sub-agent of the automated agent instructing an LLM to generate an evaluation rubric using data obtained via execution of the previous sub-tasks. The flow 1360 continues to dialog element 1384 of **FIG. 13B3.**

At dialog element 1384, the automated agent has continued executing the plan. The dialog element 1376 indicates by check marks which tasks have been completed and that the current task is the calibrate on 10 candidates task 1386. The calibrate on 10 candidates task 1386 has been decomposed into sub-tasks including a verify calibrated candidates sub-task 1388. In executing the verify calibrated candidates sub-task 1388, the automated agent has generated and presented a scrollable list 1390 of user profiles of the calibrated candidates for the software engineering position. Each user profile card in the scrollable list is selectable, such that the user can select one or more preferred candidates from the scrollable list 1390.

The example flows 1300 and 1360 illustrates how embodiments of the disclosed technologies can cooperate to dynamically create and execute complex workflows and plans including task decompositions while incorporating user preferences and feedback in real time.

The examples shown in **FIG. 13B1, FIG. 13B2, FIG. 13B3** and the accompanying description are provided for illustration purposes. For example, while the examples may be illustrated as user interface screens for a smaller form factor such as smart phones, tablet computers, or wearable devices, the user interfaces can be configured for other forms of electronic devices, such as desktop computers and/or laptop devices, or vice versa. This disclosure is not limited to the described examples. Additional or alternative details and implementations are described herein.

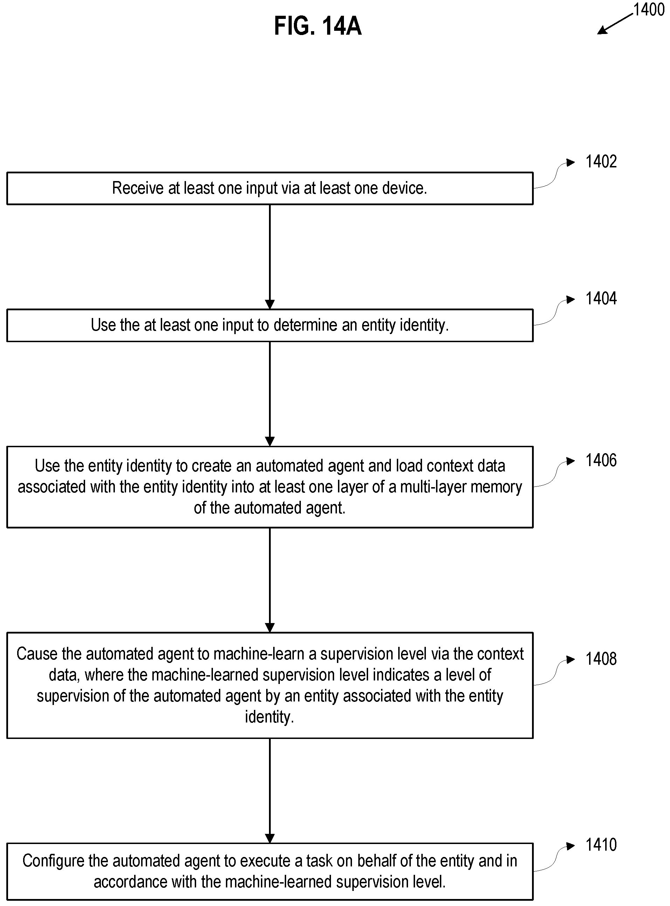

**FIG. 14A** is a flow diagram of an example method 1400 for creating and/or configuring an agent using components of an agent system in accordance with some embodiments of the present disclosure.

The method 1400 is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method 1400 is performed by one or more components of computing system 100 of **FIG. 1** or agent system 1580 of **FIG. 15.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

At operation 1402, the processing device receives at least one input via at least one device. For example, the at least one input can include an interaction with a user interface, a signal from a device, system, network, or surrounding environment (e.g., a sensor signal). The at least one input can be implicit or explicit. For example, a powering on of a device, a sensor signal, a response to a notification, or a login to an application or system can be an implicit input from which an intent, goal, or objective can be determined. Examples of explicit input can include a selection of a user interface element, entering of digital content into an input box, or a pressing of a switch or a changing position of a knob, dial, lever, or other electromechanical device.

At operation 1404, the processing device uses the at least one input to determine an entity identity. For example, the processing device extracts a unique identifier, such as a user identifier, group identifier, entity identifier, session identifier, device identifier, or network address, from the at least one input. Alternatively, the processing device maps data extracted from the at least one input to a unique identifier using, e.g., a lookup table, database, or index. The entity identifier can include any suitable unique identifier and is not limited to these illustrative examples.

At operation 1406, the processing device uses the entity identity to create an automated agent and load context data associated with the entity identity into at least one layer of a multi-layer memory of the automated agent. For example, the processing device executes one or more processes described herein to create an instance of the automated agent (e.g., processes described with reference to **FIG. 2**) and load context data into one or more layers of the multi-layer memory structure. The automated agent can be created and/or configured using one or more portions of the architectures shown in **FIG. 1, FIG. 4, FIG. 5, FIG. 6, FIG. 11A, FIG. 11B,** or any combination of any of the foregoing. The automated agent can be created and/configured collaboratively with a user, e.g., via one or more flows such as described with reference to **FIG. 12A** and **FIG. 12B.**

Context data can include data obtained using the entity identifier, such as an associated entity profile and/or an interaction log. Context data can include one or more signals from an environment (e.g., sensor signals), network (e.g., communications from servers or devices, asynchronous communications from agents, etc.), or device, such as signals logged during the same login session and/or previous login sessions (e.g., clicks, taps, views, scrolls, etc.). Context data can include digital content created, shared, or reacted-to by a user associated with the entity identifier, such as articles, posts, videos, images, graphics, comments, and reactions (e.g., likes, etc.). The context data can include other types of context data and is not limited to these examples. The multi-layer memory can include memory layers such as those described with reference to **FIG. 8A, FIG. 8B, FIG. 8C,** and/or **FIG. 11A.**

Processes for loading context data into memory layers can be implemented as workflows executed by one or more agents or tools using a messaging service, e.g., a messaging service. For example, an orchestrator or router can use a messaging service to invoke a data access or data transfer agent via one or more invocation threads as described with reference to **FIG. 2.** The context data and/or input can be processed according to the approach described with reference to **FIG. 9** and/or **FIG. 10,** for example.

At operation 1408, the processing device causes the automated agent to machine-learn a supervision level via the context data. The machine-learned supervision level indicates a level of supervision of the automated agent by an entity associated with the entity identity. For example, the supervision level can be machine-learned by the automated agent executing one or more workflows and/or adaptive machine learning processes, such as the workflow observer process described with reference to **FIG. 3,** the workflow learning process described with reference to **FIG. 7A,** the workflow execution process described with reference to **FIG. 7B,** the adaptive machine learning process described with reference to **FIG. 9,** and/or the task decomposition and evaluation process described with reference to **FIG. 10.**

At operation 1410, the processing device configures the automated agent to execute a task on behalf of the entity and in accordance with the machine-learned supervision level. In some embodiments, configuring the automated agent to execute a task includes mapping the context data to at least one argument of a prompt, and using a language model and the prompt including the at least one argument to generate and output a plan for executing the task to the automated agent.

For example, the processing device passes the machine-learned supervision level to an agent as a parameter value or argument, and the agent executes the task using the parameter value or argument containing the supervision level information. In some embodiments, the automated agent formulates a prompt that includes the machine-learned supervision level and passes the prompt to a machine learning model, such as an LM or LLM. The LM or LLM generates a workflow to execute the task using the prompt, which includes the machine-learned supervision level, and the workflow is executed by one or more agents and/or tools. For instance, the observer process described with reference to **FIG. 3** can be used to monitor the task execution to ensure that the supervision level is satisfied (e.g., met or exceeded). Operation 410 can include the workflow learning process described with reference to **FIG. 7A,** the workflow execution process described with reference to **FIG. 7B,** the adaptive machine learning process described with reference to **FIG. 9,** and/or the task decomposition and evaluation process described with reference to **FIG. 10,** for example.

In some implementations, the method 1400 includes encoding the automated agent with a first objective of executing the task in accordance with the machine-learned supervision level, and configuring the automated agent to, during execution of the task, test whether the first objective is met. For example, an automated agent can be encoded with an objective via a workflow and an instruction that cause the automated agent to execute the workflow. The objective can be included in the workflow, for example, via a parameter or argument that is included in the instruction to execute the workflow. The automated agent can be configured to test (e.g., periodically during execution of the task) whether the objective is met using, for example, an adaptive machine learning process and/or an observer agent as described.

In some implementations, the method 1400 includes identifying a workflow associated with the task, and causing the automated agent to machine-learn at least one modification to the workflow via the context data. For example, a workflow associated with a task can be identified using agent and workflow registries, e.g., by querying a registry to identify a workflow associated with the task. The automated agent can machine-learn a modification to the workflow using context data. For example, context data can be obtained via an onboarding process and/or a workflow creation process, and modifications to workflows can be machine-learned via an active learning process or workflow learning process (see, e.g., **FIG. 7A, FIG. 12A, FIG. 13A1, FIG. 13A2, FIG. 13A3**).

In some implementations, the method 1400 includes storing data obtained via an interaction between the entity and the automated agent in a first layer of the multi-layer memory, and storing a machine-learned difference between the data obtained via the interaction and a machine-generated probable interaction between the entity and the automated agent in a second layer of the multi-layer memory. For example, data obtained via an interaction can be stored in a working memory while a machine-learned difference between the data obtained via the interaction and a machine-generated probable interaction can be stored in an episodic memory, long-term memory, semantic memory, procedural memory, or collective memory. Differences between the data obtained via the interaction and a machine-generated probable interaction between the entity and the automated agent can be machine-learned via, e.g., an active learning process and/or workflow learning process as described.

In some implementations, the method 1400 includes using the machine-learned difference between the actual interaction and the machine-generated probable interaction stored in the second layer of the multi-layer memory to machine-learn at least one of the supervision level or a modification to a workflow associated with the task or a modification to the supervision level. For example, machine-learning of at least one of the supervision level or a modification to a workflow associated with the task or a modification to the supervision level can be performed using an active learning, workflow learning, and/or one or more observer agents, as described.

In some implementations, the method 1400 includes generating a prior probability distribution using historical interactions between the entity and the automated agent; and using the prior probability distribution to produce the machine-generated probable interaction. For example, the prior probability distribution can be generated and used via an active learning process, workflow learning process, and/or one or more observer agents, as described.

In some implementations, the method 1400 includes storing data obtained via an interaction between the entity and the automated agent during execution of the task in a first layer of the multi-layer memory, creating a compressed version of the data obtained via the actual interaction; and storing the compressed version of the data obtained via the actual interaction in a second layer of the multi-layer memory. For example, data obtained via an interaction between the entity and the automated agent during execution of the task can be stored in a working memory while a compressed version of the data can be stored in an episodic memory, semantic memory, procedural memory, long-term memory, or collective memory.

In some implementations, the method 1400 includes using the compressed version of the data obtained via the actual interaction stored in the second layer of the multi-layer memory to machine-learn at least one of the supervision level or a modification to a workflow associated with the task or a modification of the supervision level. For example, the compressed version can be accessed by a memory access operation that includes querying the second layer of the multi-layer memory. One or more active learning processes can be used to machine-learn a supervision level or workflow modification.

In some implementations, the method 1400 includes applying a query to at least one data resource. The at least one data resource can include at least one of entity profile data associated with the entity via an online system or entity interaction data associated with interactions of the entity with at least one of the automated agent or a different automated agent or the online system. The method 1400 can further include using a language model to select the context data from among the entity profile data and the entity interaction data. For example, a prompt or micro-prompt can be configured to cause the language model to generate a query that can be executed to query the entity profile data and/or entity interaction data that matches the query terms or search criteria.

In some implementations, the method 1400 includes causing the automated agent to execute the task in accordance with the machine-learned supervision level, and storing data obtained during execution of the task in the multi-layer memory of the automated agent. For example, the automated agent can execute a first workflow to execute the task and at least one second workflow to store data in the multi-layer memory. The first workflow and/or the second workflow can be generated or configured by a language model. For example, data obtained during workflow execution can be included in a prompt to the language model, and the language model can generate or configure a workflow to store the data in one or more particular layers of the multi-layer memory. For instance, the workflow can include a process for storing some of the data in a first layer (e.g., a working memory) and/or for storing some of the data in one or more second layers (e.g., an episodic memory, long-term memory, semantic memory, procedural memory, or collective memory.)

The examples shown in **FIG. 14A** and the accompanying description, above are provided for illustration purposes. This disclosure is not limited to the described examples. Additional or alternative details and implementations are described herein.

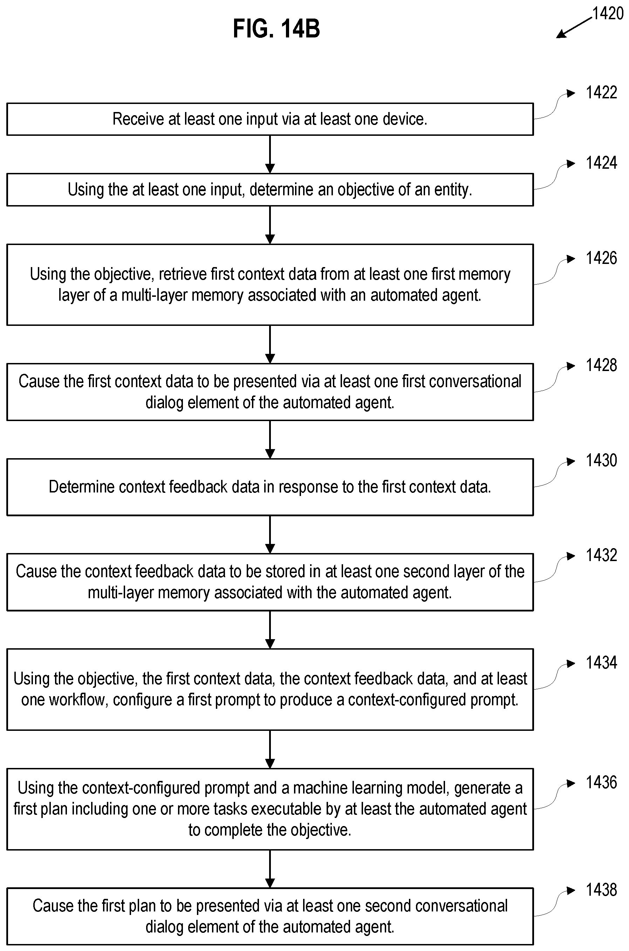

**FIG. 14B** is a flow diagram of an example method for creating and/or configuring an agent using components of an agent system in accordance with some embodiments of the present disclosure.

The method 1420 is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method 1420 is performed by one or more components of computing system 100 of **FIG. 1** or agent system 1580 of **FIG. 15.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

At operation 1422, the processing device receives at least one input via at least one device. For example, the at least one input can include an interaction with a user interface, a signal from a device, system, network, or surrounding environment (e.g., a sensor signal). The at least one input can be implicit or explicit. For example, a powering on of a device, a sensor signal, a response to a notification, or a login to an application or system can be an implicit input from which an intent, goal, or objective can be determined. Examples of explicit input can include a selection of a user interface element, entering of digital content into an input box, or a pressing of a switch or a changing position of a knob, dial, lever, or other electromechanical device.

At operation 1424, the processing device uses the at least one input to determine an objective of an entity. For example, the processing device can use one or more machine learning models to extract an objective from the at least one input or classify the at least one input as corresponding to a particular objective. The objective can be a goal, intent, or task to be achieved via the use of an automated agent. For instance, a binary classification machine learning model can be used to classify the at least one input as an objective, goal, intent, or task. Alternatively or in addition, an entity extraction process (e.g., a parser or named entity recognizer) can be used to extract one or more keywords or phrases from the at least one input and map the extracted words or phrases to a corresponding objective, goal, intent, or task.

At operation 1426, the processing device uses the objective to retrieve first context data from at least one first memory layer of a multi-layer memory associated with an automated agent. For example, the processing device causes a memory access agent to execute a read operation on the at least one first memory layer of the multi-layer memory to obtain the first context data. For instance, the memory access agent can formulate a query or read instruction that includes, e.g., the entity identity, the objective, and/or the at least one input, and initiate or cause the query or read instruction to be executed to obtain the first context data. In some embodiments, an LM or LLM can be used to generate the query or read instruction. For example, a first LM or LLM can be used to generate a prompt that includes an instruction to query the at least one first memory layer using the objective, and a second LM or LLM can process the prompt to generate the query or read instruction and output the query or read instruction to one or more tools for execution. The first LM or LLM and second LM or LLMs can include the same or different machine learning models.

At operation 1428, the processing device causes the first context data to be presented via at least one first conversational dialog element of the automated agent. For example, the processing device can output text or multimodal digital content that represents, describes, or summarizes the first context data along with an input/output mechanism that enables the entity to provide feedback relating to the first context data. An example of processes or mechanisms for presenting first context data is shown in **FIG. 12A,** e.g., dialog element 1210, 1222, and/or 1230.

At operation 1430, the processing device determines context feedback data in response to the first context data. Context feedback data can include entity feedback on context data output by the processing device, e.g., user feedback relating to the first context data. For example, the processing device receives context feedback data via one or more dialog elements of a user interface. An example of processes or mechanisms for determining context feedback data is shown in **FIG. 12A,** e.g., element 1214, 1216; 1226, 1228; 1232, 1234; 1236, 1238.

At operation 1432, the processing device causes the context feedback data to be stored in at least one second layer of the multi-layer memory associated with the automated agent. For example, the processing device causes a memory access agent to execute a write operation on the at least one second memory layer of the multi-layer memory to store the context feedback data in the at least one second memory layer. For instance, the memory access agent can formulate a write instruction that includes, e.g., the entity identity, the objective, and the context feedback data, and initiate or cause the write instruction to be executed to store the context feedback data in the at least one second memory layer. In some embodiments, an LM or LLM can be used to generate the write instruction. For example, a first LM or LLM can be used to generate a prompt that includes an instruction to generate the write instruction using the first context data and/or the context feedback data, and a second LM or LLM can process the prompt to generate the write instruction and output the write instruction to one or more tools for execution. The first LM or LLM and second LM or LLMs can include the same or different machine learning models.

At operation 1434, the processing device uses the objective, the first context data, the context feedback data, and at least one workflow to configure a first prompt to produce a context-configured prompt. For example, a first LM or LLM can be used to execute a workflow to generate or configure the first prompt to include an instruction to produce a context-configured prompt, e.g., by mapping portions of the objective, the first context data, and/or the context feedback data to parameters or arguments of, e.g., a prompt template that includes instructions and/or examples with placeholders for parameters or argument values. A second LM or LLM can process the first prompt to generate the context-configured prompt and output the context-configured prompt to a machine learning model, e.g., a third LM or LLM. The first, second, and third LMs or LLMs can include the same or different machine learning models. In some embodiments, the processing device retrieves the at least one workflow from the multi-layer memory. In embodiments, the at least one workflow includes a plurality of actions. Each action can be associated with a sub-agent of the automated agent. At least one action can be capable of being decomposed into a plurality of sub-actions.

At operation 1436, the processing device uses the context-configured prompt and a machine learning model to generate a first plan comprising one or more tasks executable by at least the automated agent to complete the objective. For example, the machine learning model can include an LM or LLM that executes a workflow to generate or configure the first plan using the context configured prompt. In some embodiments, a first LM or LLM is used to generate and output a plan generation workflow and a second LM or LLM can process the plan generation workflow to generate and output the first plan. In some embodiments, a plan generation workflow can be retrieved from a multi-layer memory structure and used as an input to an LM or LLM along with the context-configured prompt, to cause the LM or LLM to generate and output the first plan using the first plan generation workflow. The first and second LMs or LLMs can include the same or different machine learning models. The first plan can include a particular sequence or order in which actions of the workflow are to be executed. Alternatively or in addition, the first plan can include one or more actions that are not included in the workflow, and/or the first plan can include less than all of the actions that are included in the workflow.

At operation 1438, the processing device causes the first plan to be presented via at least one second conversational dialog element of the automated agent. For example, the processing device can output text or multimodal digital content that represents, describes, or summarizes the first context data along with an input/output mechanism that enables the entity to provide feedback relating to the first context data. An example of processes or mechanisms for presenting the first plan is shown in **FIG. 13A1, FIG. 13A2, FIG. 13A3,** e.g., dialog elements 1312, 1314; 1324, 1326; 1336, 1338. An example of processes or mechanisms for presenting the plan is shown in **FIG. 13B1, FIG. 13B2, FIG. 13B3,** e.g., dialog elements 1362, 1364; 1366, 1368; 1384.

In some implementations, the method 1420 includes using the first context data and the context feedback data, machine-learning at least one entity-agent preference comprising at least one of a skill, a communication style, or an agent supervision level; and including the at least one entity-agent preference in the context-configured prompt. For example, an entity-agent preference can be machine-learned by applying one or more machine learning models to an entity's interaction history with an online system, including, for instance, entity profile updates, search histories, content sharing histories, etc. In some implementations, entity-agent preferences can be machine-learned via an active learning process such as described with reference to **FIG. 12A**. In some implementations, the method 1420 includes mapping the at least one machine-learned entity-agent preference to at least one argument of the first prompt to produce the context-configured prompt. For instance, mapping can be performed using canonical tags or labels that identify portions of entity-agent preferences with arguments of the prompt (e.g., a unique argument identifier or label).

In some implementations, the method 1420 includes generating a first prior probability distribution using historical interactions between the entity and the automated agent, using the first prior probability distribution, determining probable context feedback, using the probable context feedback and the context feedback, generating a first posterior probability distribution; and using the first posterior probability distribution, machine-learning the at least one entity-agent preference. For example, an active learning process such as a Bayesian-style inference learning process can be used to machine-learn the at least one entity-agent preference as described.

In some implementations, the method 1420 includes causing presenting, via the at least one first conversational dialog element, at least one of: a plurality of selectable elements representing skills; or at least one input element; or a link to a digital content item associated with the entity via an online system; or at least one selectable icon representing feedback. In some implementations, the method 1420 include causing presenting, via the at least one second conversational dialog element, at least one of: a plurality of selectable elements representing tasks; or at least one input element; or at least one selectable icon representing feedback. Illustrative examples of selectable or interactive user interface elements are described with reference to **FIG. 12A, FIG. 12B, FIG. 13A1, FIG. 13A2, FIG. 13A3, FIG. 13B1, FIG. 13B2, FIG. 13B3.**

In some implementations, the method 1420 includes determining plan feedback in response to the plan; using the plan feedback and a second prior probability distribution, generating a second posterior probability distribution; using the second posterior probability distribution, determining at least one entity-plan preference; using the entity-plan preference, configuring a second prompt to produce a feedback-configured prompt; using the feedback-configured prompt and the machine learning model, generating a feedback-configured plan; and presenting the feedback-configured plan via at least one third conversational dialog element of the automated agent. For example, active learning processes and/or workflow learning and execution processes as described can be used to determine plan feedback and generate a feedback-configured plan. An example of plan feedback can include an addition of one or more actions to a plan, a deletion of one or more actions from the plan, a modification of an action, or a reordering of a sequence of actions in the plan.

In some implementations, the method 1420 includes determining a supervision level that indicates a level of supervision of the automated agent by the entity; determining whether the supervision level meets or exceeds a threshold supervision level; responsive to the supervision level meeting or exceeding the threshold supervision level, requesting plan feedback, receiving plan feedback, and using the plan feedback to execute at least one task of the plurality of tasks of the plan. For example, a supervision level can be machine learned via interaction histories, historical data relating to the creation and execution of workflow, and/or active learning processes. In some implementations, the method 1420 includes increasing or decreasing the supervision level in response to at least one of the plan feedback or the context feedback. For example, increasing the supervision level can include adding dialog elements to an online dialog with a user, increasing the frequency of communication with the user during execution of a workflow, or including additional feedback request actions in workflows and/or plans. Decreasing the supervision level can include removing dialog elements from an online dialog with a user, decreasing the frequency of communication with the user during execution of a workflow, or decreasing the number of feedback request actions in workflows and/or plans.

In some implementations, the method 1420 includes executing the first plan; and presenting output via at least one third conversational dialog element of the automated agent, wherein the output is generated via the execution of the plan and the output comprises at least one of an online profile of the automated agent, a list of the plurality of tasks of the plan, or multimodal output of a task. Illustrative examples of selectable or interactive user interface elements are described with reference to, e.g., **FIG. 12A, FIG. 12B, FIG. 13A1, FIG. 13A2, FIG. 13A3, FIG. 13B1, FIG. 13B2, FIG. 13B3.**

In some implementations, the method 1420 includes receiving task feedback during a first portion of an execution of the task; and incorporating the task feedback into a second portion of the execution of the task. Illustrative examples of task feedback processes are described with reference to, e.g., **FIG. 13A1, FIG. 13A2, FIG. 13A3, FIG. 13B.**

In some implementations, the method 1420 includes configuring the first prompt by: using a machine learning model, generating a first draft of the first prompt; using the machine learning model and the first draft, generating a second draft of the first prompt; using the machine learning model, generating a critique of the second draft; and using the machine learning model, synthesizing the first draft, the second draft, and the critique into the first prompt. Illustrative examples of task feedback processes are described with reference to **FIG. 8, FIG. 9, FIG. 10.**

The examples shown in **FIG. 14B** and the accompanying description, above are provided for illustration purposes. This disclosure is not limited to the described examples. Additional or alternative details and implementations are described herein.

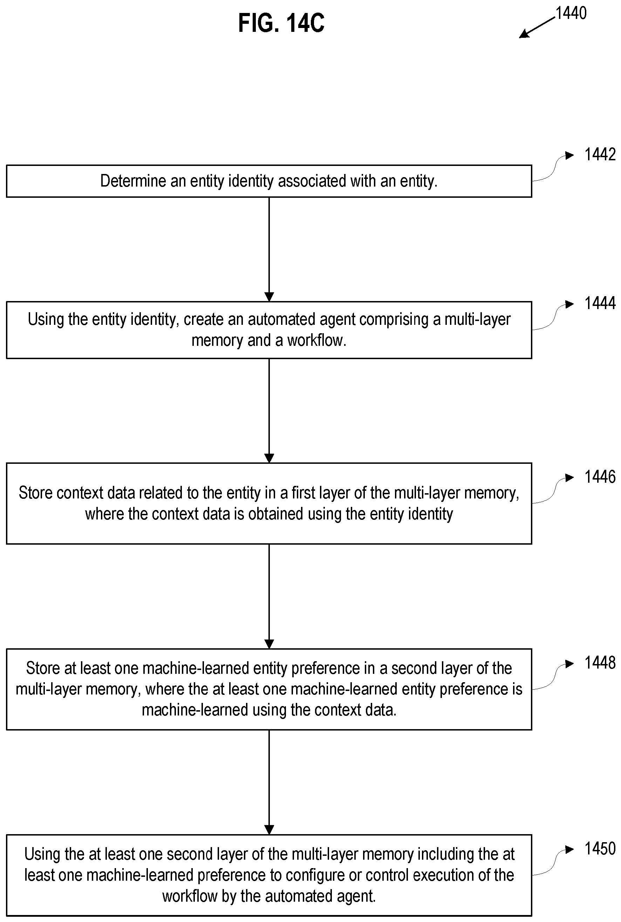

**FIG. 14C** is a flow diagram of an example method for creating and/or configuring an automated agent using components of an agent system in accordance with some embodiments of the present disclosure.

The method 1440 is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method 1440 is performed by one or more components of computing system 100 of **FIG. 1** or agent system 1580 of **FIG. 15.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

At operation 1442, the processing device determines an entity identity associated with an entity. For example, the processing device extracts a unique identifier, such as a user identifier, group identifier, entity identifier, session identifier, device identifier, or network address, from at least one input received at or obtained by the processing device. Alternatively, the processing device maps data extracted from the at least one input to a unique identifier using, e.g., a lookup table, database, or index. The entity identifier can include any suitable unique identifier and is not limited to these illustrative examples.

At operation 1444, the processing device uses the entity identity to create an automated agent comprising a multi-layer memory and a workflow. For example, the processing device executes one or more processes described herein to create an instance of the automated agent (e.g., processes described with reference to **FIG. 2**), initialize the multi-layer memory and load the workflow into one or more layers of the multi-layer memory structure. The automated agent can be created and/or configured using one or more portions of the architectures shown in **FIG. 1, FIG. 4, FIG. 5, FIG. 6, FIG. 11A, FIG. 11B,** or any combination of any of the foregoing. The automated agent can be created and/configured collaboratively with a user, e.g., via one or more flows such as described with reference to **FIG. 12A** and **FIG. 12B.**

At operation 1446, the processing device stores context data related to the entity in a first layer of the multi-layer memory. The context data can be obtained using the entity identity.

Context data can include data obtained using an entity identifier, such as an associated entity profile and/or an interaction log. Context data can include one or more signals from an environment (e.g., sensor signals), network (e.g., communications from servers or devices, asynchronous communications from agents, etc.), or device, such as signals logged during the same login session and/or previous login sessions (e.g., clicks, taps, views, scrolls, etc.). Context data can include digital content created, shared, or reacted-to by a user associated with the entity identifier, such as articles, posts, videos, images, graphics, comments, and reactions (e.g., likes, etc.). The context data can include other types of context data and is not limited to these examples. The multi-layer memory can include memory layers such as those described with reference to **FIG. 8A, FIG. 8B, FIG. 8C,** and/or **FIG. 11A.**

Processes for loading or storing workflows, context data and/or other data into the first layer of a multi-layer memory or other memory layers can be implemented as workflows executed by one or more agents or tools using a messaging service, e.g., a messaging service. For example, an orchestrator or router can use a messaging service to invoke a data access or data transfer agent via one or more invocation threads as described with reference to **FIG. 2.** The context data can be processed according to the approach described with reference to **FIG. 9** and/or **FIG. 10,** for example. For instance, lower-level workflows can be configured to execute functions like memory accesses, reads, and writes, while higher-level workflows can be configured to perform other or higher level tasks and the higher-level workflows may call the lower-level workflows to perform their respective lower-level tasks.

At operation 1448, the processing device stores at least one machine-learned entity preference in at least one second layer of the multi-layer memory. The at least one machine-learned entity preference can be machine-learned using the context data.

The machine-learned entity preference can indicate, for example, a preference related to a workflow or plan, such as the actions to be performed as part of a plan, the order in which the actions are to be performed, dependencies among actions (e.g., whether an action uses output of another action), or a level of supervision of the automated agent by an entity associated with the entity identity. For example, the entity preference can be machine-learned by the automated agent using context data and executing one or more workflows and/or adaptive machine learning processes, such as the workflow observer process described with reference to **FIG. 3,** the workflow learning process described with reference to **FIG. 7A,** the workflow execution process described with reference to **FIG. 7B,** the adaptive machine learning process described with reference to **FIG. 9,** and/or the task decomposition and evaluation process described with reference to **FIG. 10.**

The processing device causes a memory access agent to execute a write operation on the at least one second memory layer of the multi-layer memory to store the entity preference in the at least one second memory layer. For instance, the memory access agent can formulate a write instruction that includes, e.g., the entity preference, and initiate or cause the write instruction to be executed to store the entity preference in the at least one second memory layer. In some embodiments, an LM or LLM can be used to generate the write instruction. For example, a first LM or LLM can be used to generate a prompt that includes an instruction to generate the write instruction using the entity preference, and a second LM or LLM can process the prompt to generate the write instruction and output the write instruction to one or more tools for execution. The first LM or LLM and second LM or LLMs can include the same or different machine learning models.

At operation 1450, the processing device uses the at least one second layer of the multi-layer memory including the at least one machine-learned preference to configure or control execution of the workflow by the automated agent. For example, the automated agent is configured or controlled to execute a plan according to the machine-learned preference; e.g., the automated agent executes a series of actions in a particular order or sequence, the types of actions are selected according to the machine-learned preference, and/or number of actions executed by the automated agent is determined in accordance with the machine-learned preference.

In some implementations, the method 1440 includes storing data obtained via an interaction between the entity and the automated agent in the first layer of the multi-layer memory; and storing a machine-learned difference between the data obtained via the interaction and a machine-generated probable interaction between the entity and the automated agent in the second layer of the multi-layer memory. For example, data obtained via interactions between an entity and the automated agent can be stored in a working memory, and machine-learned differences between the interaction data and the probable interaction data can be stored in an episodic memory, long-term memory, procedural memory, semantic memory, or collective memory.

In some implementations, the method 1440 includes storing data obtained via an interaction between the entity and the automated agent in the first layer of the multi-layer memory; creating a compressed version of the data obtained via the actual interaction; and storing the compressed version of the data obtained via the actual interaction in the second layer of the multi-layer memory. For example, data obtained via interactions between an entity and the automated agent can be stored in a working memory, and compressed versions of that data can be stored in an episodic memory, long-term memory, procedural memory, semantic memory, or collective memory. In some implementations, the method 1440 includes querying at least one of the first layer or the second layer for argument data; mapping the argument data to at least one argument of a prompt; and applying a machine learning model to the prompt including the at least one argument to generate a plan; and causing the automated agent to execute the plan.

In some implementations, the method 1440 includes using a machine learning model, determining an order of precedence for querying the first layer and the second layer; and querying the first layer and the second layer in accordance with the order of precedence. For example, memory structures and/or processes described with reference to **FIG. 8A, FIG. 8B, FIG. 8C** can be used to determine and manage memory operations using an order of precedence. An order of precedence can be determined by, for example, querying a policy or a registry associated with an agent. For example, a first order of precedence can be specified for an agent that is included in a group of agents that collectively performs a task, and a second order of precedence can be specified for an agent that is not part of a group of agents. As another example, the order of precedence can be implemented as weight values that are applied to data retrieved from different memory layers. For instance, data retrieved from working memory can be weighted more highly than data retrieved from episodic or long-term memory or collective memory depending on its relevance to the current task, objective, goal, or intent. Conversely, data retrieved from episodic or long-term memory or collective memory can be weighted more highly than data retrieved from working memory depending on its relevance to the current task, objective, goal, or intent. As another example, order of precedence can be determined using access levels. For instance, agents that are part of a group may only have access to collective memory of an individual agent, while the individual agent itself may have access to all of its respective memory layers.

In some implementations, the method 1440 includes assigning a first access level to the first layer; moving a subset of the context data to a third layer of the multi-layer memory; and assigning a second access level to the third layer, wherein the first access level is more restrictive than the second access level. For example, a policy can specify that a first memory layer is to be accessed before any other layer of the memory structure can be accessed, or that an agent is required to have access to the first layer in order to access one or more other layers.

In some implementations, the method 1440 includes using the first layer of the multi-layer memory, machine-learning a definition or example of a term; and storing the machine-learned definition or example of the term in the second layer of the multi-layer memory. For example, definitions and examples of terminology or phrases, such as semantic meanings or embeddings, can be stored in a semantic memory.

In some implementations, the method 1440 includes using the first layer of the multi-layer memory, machine-learning a group or series of steps of the workflow; and storing the machine-learned group or series of steps of the workflow in the second layer of the multi-layer memory. For example, entity preferences regarding the performance of workflows and plans can be stored in procedural memory.

The examples shown in **FIG. 14C** and the accompanying description, above are provided for illustration purposes. This disclosure is not limited to the described examples. Additional or alternative details and implementations are described herein.

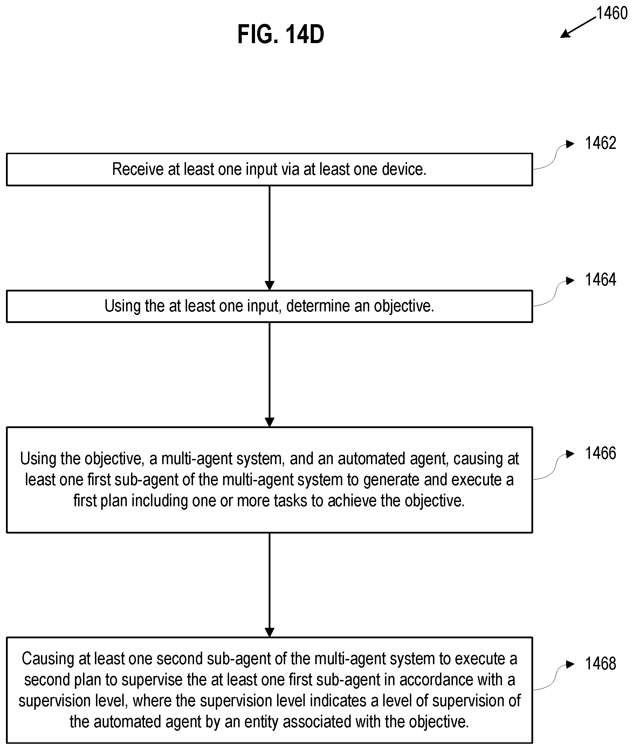

**FIG. 14D** is a flow diagram of an example method for creating and/or configuring an automated agent using components of an agent system in accordance with some embodiments of the present disclosure.

The method 1460 is performed by processing logic that includes hardware (e.g., processing device, circuitry, dedicated logic, programmable logic, microcode, hardware of a device, integrated circuit, etc.), software (e.g., instructions run or executed on a processing device), or a combination thereof. In some embodiments, the method 1460 is performed by one or more components of computing system 100 of **FIG. 1** or agent system 1580 of **FIG. 15.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, at least one process can be omitted in various embodiments. Thus, not all processes are required in every embodiment. Other process flows are possible.

At operation 1462, the processing device receives at least one input via at least one device. For example, the at least one input can include an interaction with a user interface, a signal from a device, system, network, or surrounding environment (e.g., a sensor signal). The at least one input can be implicit or explicit. For example, a powering on of a device, a sensor signal, a response to a notification, or a login to an application or system can be an implicit input from which an intent, goal, or objective can be determined. Examples of explicit input can include a selection of a user interface element, entering of digital content into an input box, or a pressing of a switch or a changing position of a knob, dial, lever, or other electromechanical device.

At operation 1464, the processing device uses the at least one input to determine an objective. For example, the processing device can use one or more machine learning models to extract an objective from the at least one input or classify the at least one input as corresponding to a particular objective. The objective can be a goal, intent, or task to be achieved via the use of an automated agent. For instance, a binary classification machine learning model can be used to classify the at least one input as an objective, goal, intent, or task. Alternatively or in addition, an entity extraction process (e.g., a parser or named entity recognizer) can be used to extract one or more keywords or phrases from the at least one input and map the extracted words or phrases to a corresponding objective, goal, intent, or task.

At operation 1466, the processing device uses the objective, a multi-agent system, and an automated agent to cause at least one first sub-agent of the multi-agent system to generate and execute a first plan comprising one or more tasks to achieve the objective. For example, the at least one first sub-agent can be or call a machine learning model to generate the first plan. The machine learning model can include an LM or LLM that executes a workflow to generate or configure the first plan using the objective. In some embodiments, a first LM or LLM is used to generate and output a plan generation prompt and a second LM or LLM can process the plan generation prompt to generate and output the first plan. In some embodiments, a plan generation workflow can be retrieved from a multi-layer memory structure and used as an input to an LM or LLM along with the plan generation prompt, to cause the LM or LLM to generate and output the first plan using the plan generation workflow. The first and second LMs or LLMs can include the same or different machine learning models. The first plan can include a particular sequence or order in which actions of the workflow are to be executed. Alternatively or in addition, the first plan can include one or more actions that are not included in the workflow, and/or the first plan can include less than all of the actions that are included in the workflow.

In some implementations, the multi-agent system includes a plurality of multi-layer memory structures, and the method 1460 includes storing output of a first sub-agent in a first multi-layer memory of the plurality of multi-layer memory structures used to store output of the first sub-agent; and storing output of a second sub-agent in a second multi-layer memory of the plurality of multi-layer memory structures used to store output of the second sub-agent.

Processes for storing output of a first sub-agent in the first multi-layer memory associated with the first sub-agent and for storing output of a second sub-agent in the second multi-layer memory associated with the second sub-agent can be implemented as workflows executed by one or more agents or tools using, e.g., a messaging service. For example, an orchestrator or router can use a messaging service to invoke a data access or data transfer agent via one or more invocation threads as described with reference to **FIG. 2.** For instance, lower-level workflows can be configured to execute functions like memory accesses, reads, and writes, while higher-level workflows can be configured to perform other or higher level tasks and the higher-level workflows may call the lower-level workflows to perform their respective lower-level tasks.

The processing device can cause a memory access agent to execute a write operation on a memory associated with a sub-agent to store the respective sub-agent output in the respective memory. For instance, the memory access agent can formulate a write instruction that includes, e.g., the sub-agent output, and initiate or cause the write instruction to be executed to store the sub-agent output in the respective sub-agent memory. In some embodiments, an LM or LLM can be used to generate the write instruction. For example, a first LM or LLM can be used to generate a prompt that includes an instruction to generate the write instruction using the sub-agent output, and a second LM or LLM can process the prompt to generate the write instruction and output the write instruction to one or more tools for execution. The first LM or LLM and second LM or LLMs can include the same or different machine learning models.

In some implementations, causing the at least one first sub-agent of the multi-agent system to generate and execute the first plan includes decomposing a task into a plurality of sub-tasks; and assigning the plurality of sub-tasks to at least one third sub-agent. For example, components and/or processes described with reference to **FIG. 5, FIG. 6, FIG. 9, FIG. 10, FIG. 11A, FIG. 11B** can be used to generate and execute the first plan.

In some implementations, causing the at least one first sub-agent of the multi-agent system to generate and execute the first plan includes using a workflow, the objective, the at least one input, and at least one machine learning model, generating the first plan. For example, components and/or processes described with reference to **FIG. 5, FIG. 6, FIG. 9, FIG. 10, FIG. 11A, FIG. 11B** can be used to generate and execute the first plan.

In some implementations, creating the automated agent includes querying at least one data registry to identify the at least one first sub-agent and the at least one second sub-agent. For example, components and/or processes described with reference to **FIG. 1, FIG. 2, FIG. 5, FIG. 6, FIG. 9, FIG. 10, FIG. 11A, FIG. 11B** can be used to create the automated agent.

At operation 1468, the processing device causes at least one second sub-agent of the multi-agent system to execute a second plan to supervise the at least one first sub-agent in accordance with a supervision level. The supervision level can indicate a level of supervision of the automated agent by an entity associated with the objective. For example, components and/or processes described with reference to **FIG. 1, FIG. 2, FIG. 5, FIG. 6, FIG. 9, FIG. 10, FIG. 11A, FIG. 11B** can be used to supervise the automated agent.

In some implementations, causing the at least one second sub-agent of the multi-agent system to execute the second plan includes determining whether the supervision level is met; and ending or modifying execution of the first plan by the at least one first sub-agent in response to determining that the supervision level is not met. For example, if the output of the first sub-agent does not satisfy a policy or criterion relating to the action performed by the first sub-agent, or feedback from the user indicates that the output produced by the first sub-agent is not approved or accepted, the execution of the first plan can be ended or modified.

In some implementations, causing the at least one second sub-agent of the multi-agent system to execute the second plan includes using data obtained from the first multi-layer memory and the second multi-layer memory to machine-learn the supervision level. For example, active machine learning processes and/or workflow learning processes described can be used to machine-learn the supervision level.

In some implementations, the method 1460 includes storing a first portion of the output of the first sub-agent in a first layer of the first multi-layer memory having a first access level, wherein the first access level enables the first sub-agent to access the first layer; storing a second portion of the output of the first sub-agent in a second layer of the first multi-layer memory having a second access level, wherein the second access level enables the second sub-agent to access the second layer and the second sub-agent is different from the first sub-agent. For example, different access levels and/or orders of priority or precedence can be assigned to different memory layers as described with reference to **FIG. 8A, FIG. 8B, FIG. 8C.**

In some implementations, the method 1460 includes coordinating communications among the at least one first sub-agent and the at least one second sub-agent using an asynchronous communication mechanism. For example, a messaging service can be used to coordinate communications, e.g., as described with reference to **FIG. 1, FIG. 2, FIG. 11A, FIG. 11B.**

The examples shown in **FIG. 14D** and the accompanying description, above are provided for illustration purposes. This disclosure is not limited to the described examples. Additional or alternative details and implementations are described herein.

**FIG. 15** is a block diagram of a computing system that includes an agent system in accordance with some embodiments of the present disclosure.

In the embodiment of **FIG. 15,** a computing system 1500 includes one or more user systems 1510, a network 1520, an application system 1530, data resources and tools 1550, an agent system 1580, a data storage system 1560, an event logging service 1570, and an AI model service 1590.

All or at least some components of agent system 1580 are implemented at the user system 1510, in some implementations. For example, portions of agent system 1580 are implemented directly upon a single client device such that communications involving applications running on user system 1510 and agent system 1580 occur on-device without the need to communicate with, e.g., one or more servers, over the Internet. Dashed lines are used in **FIG. 15** to indicate that all or portions of agent system 1580 can be implemented directly on the user system 1510, e.g., the user's client device. In other words, both user system 1510 and agent system 1580 can be implemented on the same computing device, in some implementations. In other implementations, all or portions of agent system 1580 are implemented on one or more servers and in communication with user systems 1510 via network 1520. Components of the computing system 1500 including the agent system 1580 are described in more detail herein.

A user system 1510 includes at least one computing device, such as a personal computing device, a server, a mobile computing device, a wearable electronic device, or a smart appliance, and at least one software application that the at least one computing device is capable of executing, such as an operating system or a front end of an online system. Many different user systems 1510 can be connected to network 1520 at the same time or at different times. Different user systems 1510 can contain similar components as described in connection with the illustrated user system 1510. For example, many different end users of computing system 1500 can be interacting with many different instances of application system 1530 through their respective user systems 1510, at the same time or at different times.

User system 1510 includes a user interface 1512. User interface 1512 is installed on user system 1510 or accessible to user system 1510 via network 1520. Embodiments of user interface 1512 can include a front end portion of an automated agent (e.g., automated agent 102) and/or agent system 1580.

User interface 1512 includes, for example, a graphical display screen that includes graphical user interface elements such as at least one input box or other input mechanism and at least one slot. A slot as used herein refers to a space on a graphical display such as a web page or mobile device screen, into which output, e.g., digital content such as search results, feed items, chat boxes, or threads, can be loaded for display to the user. For example, user interface 1512 may be configured with a scrollable arrangement of variable-length slots that simulates an online chat or instant messaging session and/or a scrollable arrangement of slots that contain content items or search results. The locations and dimensions of a particular graphical user interface element on a screen are specified using, for example, a markup language such as HTML (Hypertext Markup Language). On a typical display screen, a graphical user interface element is defined by two-dimensional coordinates. In other implementations such as virtual reality or augmented reality implementations, a slot may be defined using a three-dimensional coordinate system. Example screen captures of user interface screens that can be included in user interface 1512 are shown in the drawings and described herein.

User interface 1512 can be used to interact with the agent system 1580 and/or one or more application systems 1530. For example, user interface 1512 enables the user of a user system 1510 to interact with the automated agent 102 to create, edit, send, view, receive, process, and organize workflows, tasks, plans, search queries, search results, content items, news feeds, and/or portions of online dialogs. In some implementations, user interface 1512 enables the user to input requests (e.g., queries) for various different types of information, to initiate user interface events, and to view or otherwise perceive output such as data and/or digital content produced by, e.g., an application system 1530, agent system 1580, content distribution service 1538 and/or search engine 1540. For example, user interface 1512 can include a graphical user interface (GUI), a conversational voice/speech interface, a virtual reality, augmented reality, or mixed reality interface, and/or a haptic interface. User interface 1512 can include a mechanism for entering search queries and/or selecting search criteria (e.g., facets, filters, etc.), selecting GUI user input control elements, and interacting with digital content such as search results, entity profiles, posts, articles, feeds, and online dialogs. Examples of user interface 1512 include web browsers, command line interfaces, and mobile app front ends. User interface 1512 as used herein can include application programming interfaces (APIs).

Network 1520 includes an electronic communications network. Network 1520 can be implemented on any medium or mechanism that provides for the exchange of digital data, signals, and/or instructions between the various components of computing system 1500. Examples of network 1520 include, without limitation, a Local Area Network (LAN), a Wide Area Network (WAN), an Ethernet network or the Internet, or at least one terrestrial, satellite or wireless link, or a combination of any number of different networks and/or communication links.

Application system 1530 can include, for example, one or more online systems that provide social network services, general-purpose search engines, specific-purpose search engines, messaging systems, content distribution platforms, e-commerce software, enterprise software, or any combination of any of the foregoing or other types of software. Application system 1530 can include any type of application system that provides or enables the retrieval of and interactions with at least one form of digital content, including machine-generated content via user interface 1512. In some implementations, portions of agent system 1580 are components of application system 1530. An application system 1530 can include one or more of an entity graph 1532 and/or knowledge graph 1534, a user connection network 15315, a content distribution service 1538, and/or a search engine 1540. In other embodiments, application system 1530 can interact with agent system 1580 to control a physical machine or device, such as a vehicle or a robot.

In some implementations, a front end portion of application system 1530 can operate in user system 1510, for example as a plugin or widget in a graphical user interface of a web application, mobile software application, or as a web browser executing user interface 1512. In an embodiment, a mobile app or a web browser of a user system 1510 can transmit a network communication such as an HTTP request over network 1520 in response to user input that is received through a user interface provided by the web application, mobile app, or web browser, such as user interface 1512. A server running application system 1530 can receive the input from the web application, mobile app, or browser executing user interface 1512, perform at least one operation using the input, and return output to the user interface 1512 using a network communication such as an HTTP response, which the web application, mobile app, or browser receives and processes at the user system 1510.

In the example of **FIG. 15,** an application system 1530 includes an entity graph 1532 and/or a knowledge graph 1534. Entity graph 1532 and/or knowledge graph 1534 include data organized according to graph-based data structures that can be traversed via queries and/or indexes to determine relationships between entities. For instance, entity graph 1532 and/or knowledge graph 1534 can be used to compute various types of relationship weights, affinity scores, similarity measurements, and/or statistics between, among, or relating to entities.

Entity graph 1532, knowledge graph 1534 includes a graph-based representation of data stored in data storage system 1560, described herein. For example, entity graph 1532, knowledge graph 1534 represents entities, such as users, organizations (e.g., companies, schools, institutions), content items (e.g., job postings, announcements, articles, comments, and shares), and computing resources (e.g., databases, models, applications, and services), as nodes of a graph. Entity graph 1532, knowledge graph 1534 represents relationships, also referred to as mappings or links, between or among entities as edges, or combinations of edges, between the nodes of the graph. In some implementations, mappings between different pieces of data used by an application system 1530 are represented by one or more entity graphs. In some implementations, the edges, mappings, or links indicate relationships, online interactions, or activities relating to the entities connected by the edges, mappings, or links. For example, if a user clicks on a search result, an edge may be created connecting the user entity with the search result entity in the entity graph, where the edge may be tagged with a label such as "viewed." If a user viewing a list of search results skip over a search result without clicking on the search result, an edge may not be created between the user entity and the search result entity in the entity graph.

Portions of entity graph 1532, knowledge graph 1534 can be automatically regenerated or updated from time to time based on changes and updates to the stored data, e.g., updates to entity data and/or activity data. Also, entity graph 1532, knowledge graph 1534 can refer to an entire system-wide entity graph or to only a portion of a system-wide graph. For instance, entity graph 1532, knowledge graph 1534 can refer to a subset of a system-wide graph, where the subset pertains to a particular user or group of users of application system 1530.

Knowledge graph 1534 includes a graph-based representation of data stored in data storage system 1560, described herein. Knowledge graph 1534 represents relationships, also referred to as links or mappings, between entities or concepts as edges, or combinations of edges, between the nodes of the graph. In some implementations, mappings between different pieces of data used by application system 1530 or across multiple different application systems are represented by the knowledge graph 1534.

In some implementations, knowledge graph 1534 is a subset or a superset of entity graph 1532. For example, in some implementations, knowledge graph 1534 includes multiple different entity graphs 1532 that are joined by cross-application or cross-domain edges. For instance, knowledge graph 1534 can join entity graphs 1532 that have been created across multiple different databases or across different software products. In some implementations, the entity nodes of the knowledge graph 1534 represent concepts, such as product surfaces, verticals, or application domains. In some implementations, knowledge graph 1534 includes a platform that extracts and stores different concepts that can be used to establish links between data across multiple different software applications. Examples of concepts include topics, industries, and skills. As with other portions of entity graph 1532, knowledge graph 1534 can be used to compute various types of relationship weights, affinity scores, similarity measurements, and/or statistical correlations between or among entities and/or concepts.

In the example of **FIG. 15,** application system 1530 includes a user connection network 1536. User connection network 1536 includes, for instance, a social network service, professional social network system and/or other social graph-based applications. Content distribution service 1538 includes, for example, a feed, chatbot or chat-style system, or a messaging system, such as a peer-to-peer messaging system that enables the creation and exchange of messages between users of application system 1530 and the application system 1530. Search engine 1540 includes a search engine that enables users of application system 1530 to input and execute search queries to retrieve information from one or more sources of information, such as user connection network 1536, entity graph 1532, knowledge graph 1534, one or more data stores of data storage system 1560, or one or more data resources and tools 1550.

In the example of **FIG. 15,** application system 1530 includes a content distribution service 1538. The content distribution service 1538 can include a data storage service, such as a web server, which stores digital content items, and transmits digital content items to users via user interface 1512. In some embodiments, content distribution service 1538 processes requests from, for example, application system 1530 and/or agent system 1580, and distributes digital content items to user systems 1510 in response to requests.

A request includes, for example, a network message such as an HTTP (HyperText Transfer Protocol) request for a transfer of data from an application front end to the application's back end, or from the application's back end to the front end, or, more generally, a request for a transfer of data between two different devices or systems, such as data transfers between servers and user systems. A request is formulated, e.g., by a browser or mobile app at a user device, in connection with a user interface event such as a login, click on a graphical user interface element, an input of a search query, or a page load. In some implementations, content distribution service 1538 is part of application system 1530. In other implementations, content distribution service 1538 interfaces with application system 1530 and/or agent system 1580, for example, via one or more application programming interfaces (APIs).

In the example of **FIG. 15,** application system 1530 includes a search engine 1540. Search engine 1540 includes a software system designed to search for and retrieve information by executing queries on one or more data stores, such as databases, connection networks, and/or graphs. The queries are designed to find information that matches specified criteria, such as keywords and phrases contained in user input and/or system-generated queries. For example, search engine 1540 is used to retrieve data in response to user input and/or system-generated queries, by executing queries on various data stores of data storage system 1560 and/or data resources and tools 1550, or by traversing entity graph 1532, knowledge graph 1534.

Data resources and tools 1550 include computing resources, such as data stores, databases, embedding-based retrieval mechanisms, code generators, etc., that can be used to operate an agent or agent system. Data resources and tools 1550 can include computing resources that are internal to application system 1530 or external to application system 1530. Examples of data resources and tools 1550 include entity graphs, knowledge graphs, indexes, databases, networks, applications, models (e.g., large language models and/or other artificial intelligence models or machine learning models), taxonomies, data services, web pages, vectors (e.g., data stores that store embeddings), and searchable digital catalogs. Each data resource or tool 1550 enables an agent or agent system to access the data resource or tool, for example by providing an application programming interface (API). Each data resource or tool 1550 can include a monitoring service that periodically generates, publishes, or broadcasts availability and/or other performance metrics associated with the data resource. For example, a data resource or tool 1550 can provide a set of APIs that can be used by an agent or agent system to access the data resource or tool, obtain output from the data resource, and/or obtain performance metrics for the data resource or tool.

Data storage system 1560 includes data stores and/or data services that store digital data received, used, manipulated, and produced by application system 1530 and/or agent system 1580, including contextual data, state data, prompts and/or prompt templates for generative artificial intelligence models or large language models, user inputs, system-generated outputs, metadata, attribute data, activity data. Examples of databases or data stores that can be used in embodiments include vector databases, graph databases, relational databases, and key-value stores.

In the example of **FIG. 15,** data storage system 1560 includes various data stores that store, for example, entity data, context data, prompts, embeddings, etc. A data store can include a volatile memory such as a form of random access memory (RAM) and/or persistent memory, which can be available on user system 1510 or another device (e.g., one or more servers) for storing state data generated at the user system 1510 or an application system 1530. As another example, in some implementations, a separate, personalized version of each or any data store is created for each user such that data is not shared between or among the separate, personalized versions of the data stores.

In some embodiments, data storage system 1560 includes multiple different types of data storage and/or a distributed data service. As used herein, data service may refer to a physical, geographic grouping of machines, a logical grouping of machines, or a single machine. For example, a data service may be a data center, a cluster, a group of clusters, or a machine. Data stores of data storage system 1560 can be configured to store data produced by real-time and/or offline (e.g., batch) data processing. A data store configured for real-time data processing can be referred to as a real-time data store. A data store configured for offline or batch data processing can be referred to as an offline data store. Data stores can be implemented using databases, such as key-value stores, relational databases, and/or graph databases. Data can be written to and read from data stores using query technologies, e.g., SQL or NoSQL.

Data storage system 1560 resides on at least one persistent and/or volatile storage device that can reside within the same local network as at least one other device of computing system 1500 and/or in a network that is remote relative to at least one other device of computing system 1500. Thus, although depicted as being included in computing system 1500, portions of data storage system 1560 can be part of computing system 1500 or accessed by computing system 1500 over a network, such as network 1520.

Event logging service 1570 captures and records activity data generated during operation of application system 1530 and/or agent system 1580, including user interface events generated at user systems 1510 via user interface 1512, in real time, and formulates the user interface events and/or other network activity data into a data stream that can be consumed by, for example, a stream processing system. Examples of network activity data include logins, page loads, dialog inputs, input of search queries or query terms, selections of facets or filters, clicks on search results or graphical user interface control elements, scrolling lists of search results, and social action data such as likes, shares, comments, and social reactions (e.g., "insightful," "curious," "like," etc.). For instance, when a user of application system 1530 via a user system 1510 enters input or clicks on a user interface element, such as a workflow element, or a user interface control element such as a view, comment, share, or reaction button, or uploads a file, or inputs a query, or scrolls through a feed, etc., event logging service 1570 fires an event to capture and store log data including an identifier, such as a session identifier, an event type, a date/timestamp at which the user interface event occurred, and possibly other information about the user interface event, such as the impression portal and/or the impression channel involved in the user interface event. Examples of impression portals and channels include, for example, device types, operating systems, and software platforms, e.g., web applications and mobile applications.

For instance, when a user enters input or reacts to system-generated output, such as a list of search results, event logging service 1570 stores the corresponding event data in a log. Event logging service 1570 generates a data stream that includes a record of real-time event data for each user interface event that has occurred. Event data logged by event logging service 1570 can be pre-processed and anonymized as needed so that it can be used as context data to, for example, configure one or more instructions for one or more artificial intelligence models (e.g., large language models), or to modify weights, affinity scores, or similarity measurements that are assigned by the agent system to search results or data resources.

Agent system 1580 includes any one or more of the components, features, or functions described herein with respect to an automated agent or agent system. For example, agent system 1580 includes components of automated agent 102, automated agent 212, and/or distributed multi-agent system 105.

AI model service 1590 includes one or more artificial intelligence-based models, such as large language models and/or other types of machine learning models including discriminative and/or generative models, neural networks, probabilistic models, statistical models, transformer-based models, and/or any combination of any of the foregoing. AI model service 1590 enables automated agents and agent systems to access to these models, for example by providing one or more application programming interfaces (APIs). AI model service 1590 can include a monitoring service that periodically generates, publishes, or broadcasts latency and/or other performance metrics associated with the models. For example, AI model service 1590 can provide a set of APIs that can be used by an agent or agent system to obtain performance metrics for large language models and/or other machine learning models.

While not specifically shown, it should be understood that any of user system 1510, application system 1530, data resources and tools 1550, data storage system 1560, event logging service 1570, agent system 1580, and AI model service 1590 includes an interface embodied as computer programming code stored in computer memory that when executed causes a computing device to enable bidirectional communication with any other of user system 1510, application system 1530, data resources and tools 1550, data storage system 1560, event logging service 1570, agent system 1580, and AI model service 1590 using a communicative coupling mechanism. Examples of communicative coupling mechanisms include network interfaces, inter-process communication (IPC) interfaces and application program interfaces (APIs).

Each of user system 1510, application system 1530, data resources and tools 1550, data storage system 1560, event logging service 1570, agent system 1580, and AI model service 1590 is implemented using at least one computing device that is communicatively coupled to electronic communications network 1520. Any of user system 1510, application system 1530, data resources and tools 1550, data storage system 1560, event logging service 1570, agent system 1580, and AI model service 1590 can be bidirectionally communicatively coupled by network 1520. User system 1510 as well as other different user systems (not shown) can be bidirectionally communicatively coupled to application system 1530 and/or agent system 1580.

A typical user of user system 1510 can be an administrator or end user of application system 1530 or agent system 1580. User system 1510 is configured to communicate bidirectionally with any of application system 1530, data resources and tools 1550, data storage system 1560, event logging service 1570, agent system 1580, and AI model service 1590 over network 1520.

Terms such as component, system, and model as used herein refer to computer implemented structures, e.g., combinations of software and hardware such as computer programming logic, data, and/or data structures implemented in electrical circuitry, stored in memory, and/or executed by one or more hardware processors.

The features and functionality of user system 1510, application system 1530, data resources and tools 1550, data storage system 1560, event logging service 1570, agent system 1580, and AI model service 1590 are implemented using computer software, hardware, or software and hardware, and can include combinations of automated functionality, data structures, and digital data, which are represented schematically in the figures. User system 1510, application system 1530, data resources and tools 1550, data storage system 1560, event logging service 1570, agent system 1580, and AI model service 1590 are shown as separate elements in **FIG. 15** for ease of discussion but, except as otherwise described, the illustration is not meant to imply that separation of these elements is required. The illustrated systems, services, and data stores (or their functionality) of each of user system 1510, application system 1530, data resources and tools 1550, data storage system 1560, event logging service 1570, agent system 1580, and AI model service 1590 can be divided over any number of physical systems, including a single physical computer system, and can communicate with each other in any appropriate manner.

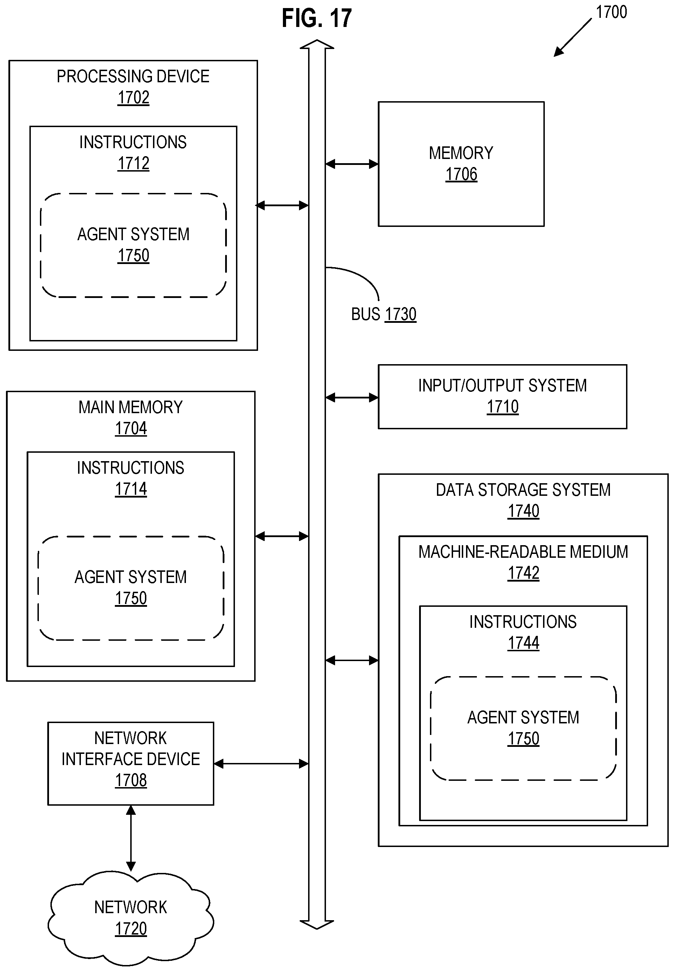

In the embodiment of **FIG. 17,** portions of agent system 1580 that may be implemented on a front end system, such as one or more user systems, and portions of agent system 1580 that may be implemented on a back end system such as one or more servers, are collectively represented as agent system 1750 for ease of discussion only. For example, portions of agent system 1580 are not required to be implemented all on the same computing device, in the same memory, or loaded into the same memory at the same time. For instance, access to portions of agent system 1580 can be limited to different, mutually exclusive sets of user systems and/or servers. For instance, in some implementations, a separate, personalized version of agent system 1580 is created for each user of the agent system 1580 such that data is not shared between or among the separate, personalized versions of the agent system 1580. Additionally, certain portions of agent system 1580 typically may be implemented on user systems while other portions of agent system 1580 typically may be implemented on a server computer or group of servers. In some embodiments, however, one or more portions of agent system 1580 are implemented on user systems. For example, agent system 1580 is entirely implemented on user systems, e.g., client devices, in some implementations. For instance, a version of agent system 1580 can be embedded in a client device's operating system or stored at the client device and loaded into memory at execution time.

The examples shown in **FIG. 15** and the accompanying description, above are provided for illustration purposes. This disclosure is not limited to the described examples. Additional or alternative details and implementations are described herein.

**FIG. 16A** is a block diagram of a machine learning modeling system that can be used by and/or included in an agent system in accordance with some embodiments of the present disclosure.

Machine learning models are computer-implemented structures that are capable of generating predictive output in response to raw input. A machine learning model includes a probabilistic or statistical algorithm that is configured to perform a specific predictive function through a training process that involves iteratively exposing the models to many samples of data and adjusting one or more model parameters until the models achieve a satisfactory prediction accuracy and reliability. The predictive accuracy and reliability of a machine learning model in relation to a particular task is dependent upon the training process and the data used in the training.

Machine learning systems include components and processes that perform data generation, model training, model evaluation (e.g., calibration and validation), and application. Data preparation includes obtaining and aggregating model input data. The preparation of training data can include labeling the aggregated data. Training data can include structured data, unstructured data, text, multimodal data, or any combination of any of the foregoing. Model training can include configuring hyperparameters, determining performance metrics, and applying the machine learning model to the training data, evaluating the performance metrics, and parameter tuning. Application includes applying the trained machine learning model to the real-world environment, e.g., in a specific use case using data not included in the training data (e.g., unlabeled data). The application phase can be referred to as inferencing or inference time.

In **FIG. 16A,** a machine learning modeling system 1600 includes a machine learning model 1606, a modeling and calibration subsystem 1602, and a model validation subsystem 1604. The machine learning model 1606 can be or include any type or combination of one or more machine learning models, such as any of the types of machine learning models shown in **FIG. 16B, FIG. 16C, FIG. 16D,** and **FIG. 16E** and/or any other types or combinations of machine learning models.

The modeling and calibration subsystem 1602 receives model input, such as input feature sets, embeddings, digital content, or prompts. The model input can be engineered to train the machine learning model 1606 to perform one or more tasks, such as discriminative tasks like classification or scoring and/or generative tasks such as content generation tasks. Modeling and calibration subsystem 1602 includes a data set creation component 1603, a model training component 1605, and a model calibration component 1607.

Data set creation component 1603 can divide the model input, e.g., input feature sets, into one or more training data sets and one or more validation data sets, e.g., training data set 1609 and validation data set 1611. Model training component 1605 and model calibration component 1607 cooperatively execute a training process. In some embodiments, the training process causes the machine learning model 1606 to develop, by iterative adjustments to weights or coefficients, a mathematical representation of the relationships between different items of data, such as relationships between different inputs (e.g., similarity estimates or estimates of user preferences), or relationships between inputs and categorical data such as classification labels, or relationships between inputs and outputs. The resulting trained model can be used to generate predictive output (e.g., scores, labels, or other output) based on subsequent model input.

One or more different approaches can be used to train the machine learning model 1606, for example, supervised machine learning, semi-supervised machine learning, or unsupervised machine learning. In supervised machine learning, the set of training data includes indications of expected model output coupled with respective model input; for example, ground-truth labeled data samples. For example, an instance of training data for supervised learning can include a model input (e.g., a set of features) and an associated expected output (e.g., a classification label), where the expected output can be human curated or machine-generated. For example, an instance of training data for supervised machine learning can include a digital image and a title or caption for the image that describes the contents of the image. In unsupervised machine learning, the training examples are unlabeled. In unsupervised machine learning, a clustering algorithm can be used to identify similarities among data samples and create clusters or groupings of similar data using one or more similarity criteria. For example, unsupervised learning can be used to group digital content items, such as images, articles, or videos, into topics, where the topics are determined based on the features of the content items themselves rather than supplied by labels. Semi-supervised machine learning combines supervised and unsupervised machine learning, using both labeled and unlabeled data to train machine learning models.

Model training component 1605 applies machine learning model 1606 to training data set 1609 iteratively and adjusts the value of one or more model parameters and/or feature coefficients of the machine learning model 1606 based on the processing of the training data set 1609 by the model 1606 until the difference between the predicted model output generated by the machine learning model 1606 and the expected model output evidenced by the training data set 1609 satisfies (e.g., meets or exceeds) model performance criteria 1608. When the model performance criteria 1608 are satisfied, modeling and calibration subsystem 1602 ends the model training process and produces a trained machine learning model 1606.

Model validation subsystem 1604 applies a model validation process to the trained machine learning model 1606 produced by modeling and calibration subsystem 1602. Model validation subsystem 1604 uses the validation data set 1611 to determine whether model validation criteria 1610 are satisfied (e.g., met or exceeded). For example, the validation data set 1611 can be created by setting aside a portion of the training data set 1609 until after training, such that the validation data set 1611 can be used to compare and evaluate the difference between the predictive output produced by the trained model to the expected model output evidenced by the set-aside portion of the training data set 1609.

A validated machine learning model 1606 can be used for inferencing, e.g., to generate predictive output, e.g., labels, scores, or other content, in response to model input. Alternatively or in addition, the output produced by the validated machine learning model 1606 can be stored for future use (e.g., for access or lookup by one or more downstream processes, systems, or services).

There are many different types and configurations of machine learning models. Illustrative, nonlimiting examples of some of the different types of machine learning models are shown in **FIG. 16B, FIG. 16C, FIG. 16D,** and **FIG. 16E,** described below. The AIs, models, and AI model services described herein can include or use any of the various types of machine learning models, including but not limited to one or more of the types of models shown in **FIG. 16B, FIG. 16C, FIG. 16D,** and **FIG. 16E.**

The examples shown in **FIG. 16A** and the accompanying description, above are provided for illustration purposes. This disclosure is not limited to the described examples. Additional or alternative details and implementations are described herein.

**FIG. 16B** is a block diagram of a machine learning model that can be used by and/or included in an agent system in accordance with some embodiments of the present disclosure.

In the example of **FIG. 16B,** a machine learning system 1612 includes a machine learning model 1615. Machine learning model 1615 is or includes a probabilistic or statistical machine learning model that uses a modeling function 1616 to model the relationship between model input 1614 (e.g., input feature set X) and model output (e.g., Y, P (Y|X)).

In some embodiments, the machine learning model 1615 is configured as a discriminative model such that the machine learning model 1615 produces output that indicates the probabilistic or statistical likelihood of an output Y given an input X. Some embodiments of the machine learning model 1615 can be alternatively or additionally configured as a generative model. For example, in some embodiments, a machine learning model can perform both discriminative and generative tasks.

One illustrative example of a discriminative model is a logistic regression function. Mathematically, a simplified form of the logistic function can be expressed as $P(X) = $ 
$$f(x) = \frac{1}{1 + e^{-(\beta_0 + \beta_1 x)}}$$
, where $e$ is the exponential constant and $\beta_0$ and $\beta_1$ are feature coefficients. During training of the logistic regression model 1615, logistic regression estimates the values of the coefficients in the linear combination based on the feature values in the training data set. The machine learning model 1615 can be configured via training, calibration, and validation processes such as those described with reference to **FIG. 16A.**

The machine learning model 1615 includes a modeling function 1616. The modeling function 1616 includes feature coefficients 1617. The values of one or more of the feature coefficients 1617 can be established via machine learning model training, calibration, and validation processes based on training data sets and/or validation data sets.

In the logistic regression example, the feature coefficients 1617 can include a regression coefficient $\beta$ for each feature input x (e.g., $f(i) = \beta_0 + \beta_1 x_{1,i} + \cdots \beta_m x_{m,i}$), where $x_i$ is a particular item of the feature set and $m$ is the number of feature inputs x in the input feature set X 1614. The regression coefficient indicates the relative effect of the particular feature input x of the feature set X on the predicted outcome P(Y|X), e.g., a predicted label or score, based on the values of the feature inputs x in the feature set X 1614. The values of the feature coefficients are initialized and adjusted during model training and calibration.

The machine learning model 1615 also includes model hyperparameters 1618. The values of hyperparameters 1618 are selected or tuned at a global level and generally are not modified based on specific instances of training data. In the logistic regression example, model hyperparameters 1618 can include a penalty or regularization parameter (e.g., L1 or L2) and the C or regularization strength parameter. The penalty or regularization parameter is tunable to adjust model generalization error and regulate overfitting. The C or regularization strength parameter regulates overfitting in conjunction with the penalty. The model hyperparameters 1618 can be tuned using, for example, a hyperparameter tuning tool or hyperparameter optimization method.

Some embodiments of the machine learning model 1615 can be configured as a binary classifier or as a scoring model. In a binary classification mode, the output of the machine learning model 1615 indicates whether the model input is or is not associated with a certain output (e.g., either 0 if the input is not mathematically likely to be associated with the output or 1 if the input is mathematically likely to be associated with the output), for a given set of input features. In a scoring mode, the output of the machine learning model 1615 includes a score, which corresponds to a probability of the predicted output (e.g., a numerical value between zero and 1, inclusive).

The model input 1614 (e.g., input feature set X) can include numerical features, categorical features, quantitative values, qualitative values, raw features, compressed representations of raw features (e.g., vector representations or embeddings, and/or other forms of digital content.

In response to an instance of features of feature set X, machine learning model 1615 computes and outputs an estimated output P(Y|X) 1619. The estimated output produced by machine learning model 1615 based on an instance of features of feature set X 1614 can be in the form of a binary output or a score. The output can be stored in a data storage for subsequent lookup or provided to one or more downstream systems, processes, devices, frameworks, and/or services.

The machine learning model 1615 can be configured and implemented as a network service. For example, the machine learning model 1615 can be configured using a machine learning library and an application programming interface (API), e.g., via an API call such as ML_library.model(*p1,p2, ...pn)*, where *p* indicates a parameter or argument of the call, such as a model hyperparameter or an input feature set identifier. Once configured, the machine learning model 1615 and/or its output can be hosted on one or more servers and/or data storage devices for accessibility to one or more requesting processes, systems, devices, frameworks, or services.

The examples shown in **FIG. 16B** and the accompanying description, above are provided for illustration purposes. This disclosure is not limited to the described examples. Additional or alternative details and implementations are described herein.

**FIG. 16C** is a block diagram of a machine learning model that can be used by and/or included in an agent system in accordance with some embodiments of the present disclosure.

A generative artificial intelligence (GAI) model or generative model uses artificial intelligence technology, e.g., machine learning, neural networks, to machine-generate digital content based on model inputs and the previously existing data with which the model has been trained. Whereas discriminative models are based on conditional probabilities P $(y \mid x)$, that is, the probability of an output $y$ given an input $x$, generative models capture joint probabilities P $(x, y)$, that is, the likelihood of $x$ and $y$ occurring together. A generative language model is a particular type of GAI model that is capable of generating content in response to model input. The model input includes a task description, also referred to as a prompt. The task description can include instructions (e.g., natural language instructions such as "please generate a summary of these search results") and/or examples of digital content (e.g., examples of summaries written using a particular writing style or tone). Portions of the task description can be in the form of natural language text, such as a question or a statement. Alternatively or in addition, a task description or prompt can include non-text forms of content, such as digital imagery and/or digital audio.

In the example of **FIG. 16C,** a machine learning system 1620 includes a machine learning model 1624. Machine learning model 1624 is or includes a probabilistic or statistical machine learning model that uses a modeling function to model the likelihood of cooccurrence of input feature set X and output Y; e.g., the likelihood of X and Y occurring together. The machine learning model 1624 can be configured via training, calibration, and validation processes such as those described with reference to **FIG. 16A.** Some embodiments of the machine learning model 1624 can be alternatively or additionally configured as a discriminative model. For example, in some embodiments, a machine learning model can perform both discriminative and generative tasks.

The machine learning model 1624 includes a modeling function 1625. The modeling function 1625 includes feature coefficients or weights 1626. The values of one or more of the feature coefficients can be established via machine learning model training, calibration, and validation processes based on training data sets and/or validation data sets. The machine learning model 1624 also includes model hyperparameters 1627. The values of model hyperparameters 1627 are selected or tuned at a global level and generally are not modified based on specific instances of training data.

The model input 1622 (e.g., input feature set X) can include numerical features, categorical features, quantitative values, qualitative values, raw features, compressed representations of raw features (e.g., vector representations or embeddings), and/or other forms of digital content.

In response to an instance of model input 1622 (e.g., instance of feature set X), machine learning model 1624 computes and outputs an estimated output P(X,Y) 1628. The estimated output produced by machine learning model 1624 based on a model input 1622 can be in the form of an input-output pair and a score or can simply include the highest scoring input-output pair. The output can be stored in a data storage for subsequent lookup or provided to one or more downstream systems, processes, devices, frameworks, and/or services.

The machine learning model 1624 can be configured and implemented as a network service. For example, the machine learning model 1624 can be configured using a machine learning library and an application programming interface (API), e.g., via an API call such as ML_library.model(*p1,p2, ...pn)*, where *p* indicates a parameter or argument of the call, such as a model hyperparameter or an input feature set identifier. Once configured, the machine learning model 1624 and/or its output can be hosted on one or more servers and/or data storage devices for accessibility to one or more requesting processes, systems, devices, frameworks, or services.

The examples shown in **FIG. 16C** and the accompanying description, above are provided for illustration purposes. This disclosure is not limited to the described examples. Additional or alternative details and implementations are described herein.

**FIG. 16D** is a block diagram of a machine learning model that can be used by and/or included in an agent system in accordance with some embodiments of the present disclosure.

A specific example of a machine learning model is a deep neural network. Some machine learning models, such as multi-task models, can include multiple interconnected deep neural networks. In the example of **FIG. 16D,** a machine learning system 1630 includes a deep neural network 1634. The deep neural network 1634 can be configured via training, calibration, and validation processes such as those described with reference to **FIG. 16A.** Some embodiments of the deep neural network 1634 can be configured as a discriminative model and/or a generative model. For example, in some embodiments, a deep neural network 1634 can perform both discriminative and generative tasks.

In computer science, deep learning refers to a class of machine learning that uses computer-implemented neural networks to generate predictive output, where the neural networks have one or more internal (or hidden) layers between and in addition to an input layer and an output layer. Each layer in a deep neural network (or deep learning model) performs a set of computational operations on the input to that layer.

Each layer of the neural network includes a set of nodes that each apply an activation function to one or more portions of the input to that layer to produce an output. The activation function performs a nonlinear transformation of the input and sends its output to the next layer of the network. For example, if the output of the activation function is equal to or exceeds a threshold value, the node passes its output to the next layer, but if the output is less than the threshold value, the output passed to the next layer is zero or a null value. The type of activation function used at a node or layer is selected based on the particular predictive task for which the model is configured and/or based on the model architecture. Examples of activation functions include the SoftMax function (for multi-class classification), the sigmoid function (for internal layers), and rectifier (e.g., ramp, ReLU (Rectified Linear Unit)) functions.

The input layer of a deep neural network receives and processes the model input, which can include raw data and/or pre-processed data such as aggregations, derivations, embeddings or vector representations of raw data. The output of a layer of the neural network can be connected to and used as the input to another layer, such that each layer of the deep learning model creates a different (e.g., progressively more highly processed) set of information relating to the original, raw input (e.g., producing a different representation of the raw input at each layer). Weights are applied to the output of each node of each layer before the output is propagated to the next layer. The weight values can be adjusted so that the outputs of some nodes or layers influences the final output more or less than the outputs of other nodes or layers. The output layer of the neural network produces the final predictive output, which can be made accessible to one or more downstream models, applications, systems, operations, processes or services.

Backpropagation is an example of a method that can be used to train a neural network model. In a feedforward step, the training data is propagated from the input layer through the internal layers to the final output by computing each successive layer's outputs up to and including the final output. A loss function (or cost function, such as cross-entropy, log loss, or squared error loss, or a logistic function) is used to compute error for the final output, for example, based on a comparison of the difference between the output predicted by the model and the expected or target output to the error computed on a previous iteration. The model weights (or parameters or coefficients) are adjusted to reduce the error, iteratively, until the error falls within an acceptable range or the error stops changing by more than a threshold amount (e.g., the model converges). In backpropagation, these iterative weight adjustments are propagated backward from the output layer through the internal layers. The gradient of the loss function or gradient descent (e.g., stochastic gradient descent) may be used in backpropagation.

Recommendation systems, for example, can apply deep learning models to generate predictive output and use the predictive output to configure one or more downstream operations. For example, recommendation systems compute statistical or probabilistic predictions that can be used to select, rank, or sort digital content items for presentation to users via electronic devices. Examples of downstream operations that can use the predictive output of deep learning recommendation systems include news feeds, automated product recommendations, and automated connection (e.g., friend, follower, or contact) recommendations for online platforms such as social networks. Other examples include systems that support human decision making, such as systems that use artificial intelligence to generate recommendations for health care, financial services, training, education, and/or other fields or topics. Still other examples include control systems that use artificial intelligence to recommend courses of action to other components of automated systems in operational environments, such as "smart" vehicles, appliances, robots, and other automated devices.

In the example of **FIG. 16D,** the deep neural network 1634 includes an input layer 1635, one or more hidden layers 1636, and an output layer 1637. The input layer 1635 receives one or more batches of model input 1623 (e.g., input feature sets X). For example, the input layer 1635 can include a number of nodes that corresponds to the number of input features in a given input feature set X. The output of the input layer 1635 becomes the input to the one or more hidden layers 1636. The output of the one or more hidden layers 1636 becomes the input to the output layer 1637. The output layer 1637 outputs the final predictive output 1638. In some embodiments, each of the layers of the deep neural network 1634 is fully connected in the sense that the output of each node of each layer is connected to the input of each node of the next subsequent layer. In other embodiments, the deep neural network 1634 can include portions that are not fully connected.

The deep neural network 1634 can be configured and implemented as a network service. For example, the deep neural network 1634 can be configured using a machine learning library and an application programming interface (API), e.g., via an API call such as ML_library.model(*p1,p2, ...pn)*, where *p* indicates a parameter or argument of the call, such as a model hyperparameter or an input feature set identifier. Once configured, the deep neural network 1634 and/or its output can be hosted on one or more servers and/or data storage devices for accessibility to one or more requesting processes, systems, devices, frameworks, or services.

The input feature set X can include numerical features, categorical features, quantitative values, qualitative values, raw features, compressed representations of raw features (e.g., vector representations or embeddings), natural language, and/or other forms of digital content. Embedding as used herein may refer to a numerical representation of a set of features. An embedding can encode information, e.g., a set of features associated with an entity and/or attribute, relative to an embedding space. Embeddings and embedding spaces can be generated by artificial intelligence (AI) models. An embedding can be expressed as a vector, where each dimension of the vector includes a numerical value that can be an integer or a real number. The numerical value assigned to a given dimension of the vector conveys information about the data represented by the embedding, relative to the embedding space, also referred to as a vector space. The embedding space (or vector space) includes all of the possible values of each dimension of the vector. The embedding space is defined by the way in which the AI model used to generate the vector has been trained and configured, including the training data used to train the AI model. In some implementations, train as used herein refers to an iterative process of applying an AI algorithm to one or more sets of training data, analyzing the output of the AI model in comparison to expected model output using a loss function (also referred to as a cost function or error function), adjusting values of one or more parameters and/or coefficients of the AI model, and repeating the process until the difference between the actual model output and the expected model output falls within an acceptable range of error or tolerance.

Embedding-based retrieval (EBR) is a method of searching for similar digital content, such as documents or portions of documents. Embedding-based retrieval involves converting digital data, e.g., sets of features, to embeddings and then using a similarity algorithm, such as nearest-neighbor search or cosine similarity, to identify embeddings that are similar to one another. Similarly, match or map as used herein can refer to an exact match or an inexact match. For example, match or map can refer to a machine-determined predicted or estimated degree of relevance, similarity or compatibility between entities or data items that satisfies (e.g., meets or exceeds) a threshold level of relevance, similarity or compatibility, where the threshold level of relevance, similarity or compatibility is variable based on the requirements of a particular design or implementation. The threshold level of similarity may be set lower or higher for different types of matching or mapping.

In response to an instance of feature set X, deep neural network 1634 computes and outputs a predictive output 1638. The predictive output 1638 can be stored in a data storage for subsequent lookup or provided to one or more downstream systems, processes, devices, frameworks, and/or services.

The deep neural network 1634 can be configured and implemented as a network service. For example, the deep neural network 1634 can be configured using a machine learning library and an application programming interface (API), e.g., via an API call such as ML_library.model($p1,p2, ...pn$), where $p$ indicates a parameter or argument of the call, such as a model hyperparameter or an input feature set identifier. Once configured, the machine learning model 306 and/or its output can be hosted on one or more servers and/or data storage devices for accessibility to one or more requesting processes, systems, devices, frameworks, or services.

The examples shown in **FIG. 16D** and the accompanying description, above are provided for illustration purposes. This disclosure is not limited to the described examples. Additional or alternative details and implementations are described herein.

**FIG. 16E** is a block diagram of a machine learning model that can be used by and/or included in an agent system in accordance with some embodiments of the present disclosure.

A specific example of a deep neural network is a sequence to sequence model, which takes sequential data such as words, phrases, or images (sequences of characters, tokens, or pixel values) or time series data as input and outputs sequential data. An example of a sequence to sequence model is an encoder-decoder model. In an encoder-decoder model, a first neural network known as an encoder transforms the model input into an encoded version of the model input, e.g., an embedding or vector. For example, an encoder can transform a sentence or an image into a sequence of numbers. A second neural network known as the decoder takes the output of the encoder (e.g., the encoded version of the model input) and decodes it. For example, a decoder can transform the sequence of numbers created by the encoder into a translated sentence or another form of output. The encoder-decoder model is suitable for sequence-to-sequence problems such as computer vision and natural language processing (NLP) tasks such as machine translation.

A specific example of an encode-decoder model is a transformer model. A transformer model is a deep neural network encoder-decoder model that uses a technique called attention or self-attention to detect relationships and dependencies among data elements in a sequence. Transformer models can be applied to various NLP tasks and other machine learning tasks, such as generating content based on input attributes or tokens. For example, the attention mechanism can facilitate the detection of semantic relationships and contextual dependencies between words and phrases.

In the example of **FIG. 16E,** a machine learning system 1640 includes a transformer model 1642. The transformer model 1642 is constructed using a neural network-based machine learning model architecture. In some embodiments, the neural network-based architecture includes one or more self-attention layers (e.g., multi-head attention layer 1645, masked multi-head attention layer 1655, and multi-head attention layer 1657) that allow the model to assign different weights to different features included in the model input. Alternatively, or in addition, the neural network architecture includes feed-forward layers (e.g., feed-forward layer 1647 and feed-forward layer 1659) and residual connections (e.g., add & norm layer 1646, add & norm layer 1648, add & norm layer 1656, add & norm layer 1658, add & norm layer 1660) that allow the model to machine-learn complex data patterns including relationships between different states, actions, and rewards in multiple different contexts. In some embodiments, transformer model 1642 is constructed using a transformer-based architecture that includes self-attention layers, feed-forward layers, and residual connections between the layers. The exact number and arrangement of layers of each type as well as the hyperparameter values used to configure the model are determined based on the requirements of a particular design or implementation of the user trajectory processing system.

As shown in **FIG. 16E,** transformer model 1642 feeds embedded subsequences 1650 into encoder 1644 and decoder 1654. For example, transformer model 1642 feeds inputs of embedded subsequences 1650 into multi-head attention layer 1645 of encoder 1644. In some embodiments, inputs of embedded subsequences 1650 are a series of tokens and the output of the encoder (e.g., encoder output representation 1652), is a fixed-dimensional representation for each of the tokens of embedded subsequences 1650 including an embedding for inputs of embedded subsequences 1650. Transformer model 1642 feeds encoder output representation 1652 and outputs of embedded subsequences 1650 into decoder 1654 which generates a sequence of tokens based on encoder output representation 1652 and the input embeddings. While a specific architecture of encoder 1644 and decoder 1654 is shown for simplicity, as explained above, the exact number and arrangement of layers of each type as well as the hyperparameter values used to configure the model are determined based on the requirements of a particular design or implementation. Transformer model 1642 can therefore include different numbers, arrangements, and types of layers, such that each input token of embedded subsequences 1650 is fed through the layers of transformer model 1642 and is dependent on other input tokens of embedded subsequences 1650.

Transformer model 1642 illustrates a generic encoder/decoder model for simplicity. In such a model, encoder 1644 encodes the input into a fixed-length vector (e.g., encoder output representation 1652) and decoder 1654 decodes the fixed-length vector into an output sequence. Encoder 1644 and decoder 1654 are trained together to maximize the conditional log-likelihood of the output given the input. For example, once trained, encoder 1644 and decoder 1654 can generate an output given an input sequence or can score a pair of input/output sequences based on their probability of coexistence.

As shown in **FIG. 16E,** encoder 1644 includes multi-head attention layer 1645, add & norm layer 604, feed-forward layer 606, and add & norm layer 608. Multi-head attention layer 1645 receives inputs of embedded subsequences 1650 and computes output representations for each of the input tokens of embedded subsequences 1650 based on the inputs of embedded subsequences 1650. For example, multi-head attention layer 1645 converts each input token of embedded subsequences 1650 into queries, keys, and values using query, key, and value matrices. Multi-head attention layer 1645 computes the output representation of the input tokens of embedded subsequences 1650 as the weighted sum of the values of all of the input tokens of embedded subsequences 1650. Multi-head attention layer 1645 computes the weights for the weighted sum by applying a compatibility function to the corresponding key and query for the value. For example, multi-head attention layer 1645 uses a scaled dot product on the key and query of an input token to determine a weight to apply to a value of the input token. Multi-head attention layer 1645 includes multiple attention blocks which each compute an output representation for the input token. Multi-head attention layer 1645 aggregates the output representations of these attention blocks to generate a final output representation for multi-head attention layer 1645.

Inputs of embedded subsequences 1650 includes the state of the online system at a given timestamp and the action taken at that state. For example, inputs of embedded subsequences 1650 includes the state features and actions of embedded subsequences 1650. Transformer model 1642 feeds the output representation generated by multi-head attention layer 1645 and residual connections from the inputs of embedded subsequences 1650 into add & norm layer 604. By including these residual connections, transformer model 1642 ensures that it does not "forget" features of embedded subsequences 1650 during training. Forgetting in the context of machine learning can mean that as the model continues to be sequentially trained on different datasets, the model continually adjusts the values of feature coefficients based on the most recent datasets, thereby losing or diluting the effect on those coefficient values of the datasets used earlier in training.

Add & norm layer 1646 sums the output representation generated by multi-head attention layer 1645 and the residual connections from inputs of embedded subsequences 1650 and applies a layer normalization to the result. In some embodiments, the add & normal layers also apply a SoftMax function to generate action probabilities for the inputs of embedded subsequences 1650. For example, add & norm layer 1646 generates estimated probabilities $\hat{p}(a_k|s)$, where $a_k$ is the action policy and s is the state features.

Transformer model 1642 feeds the normalized output of add & norm layer 1646 into feed-forward layer 1647. Feed-forward layer 1647 is a feed-forward network that receives the normalized output, feeds it through the hidden layers of feed-forward layer 1647, and then feeds the output of feed-forward layer 1647 into add & norm layer 1648. Feed-forward layer 1647 processes the information received from add & norm layer 1646 and can update the hidden layers of feed-forward layer 1647 based on the information (e.g., during training) and/or generate an output based on the hidden layers processing the information (e.g., during evaluation and/or inference). For example, during training, transformer model 1642 updates the weights of the hidden layers of feed-forward layer 1647 based on the inputs and the loss of the transformer system. Further details with regard to the loss of the transformer system as well as training objectives and metrics are discussed below. As an alternative example, during evaluation and/or inference, the weights of the hidden layers of feed-forward layer 1647 are used to determine the output representation 1652 of each of the input tokens of embedded subsequences 1650.

Transformer model 1642 feeds the output of feed-forward layer 1647 into add & norm layer 1648 as well as residual connections from the output of add & norm layer 1646. Add & norm layer 1648 sums the output of feed-forward layer 1647 with the residual connections from add & norm layer 1646 and applies a layer normalization to the result to generate encoder output representation 1652. Transformer model 1642 feeds encoder output representation 1652 into multi-head attention layer 1657 of decoder 1654 as explained below.

Masked multi-head attention layer 1655 receives outputs of embedded subsequences 1650 and computes representations for each of the output tokens of embedded subsequences 1650 based on masked outputs of embedded subsequences 1650. For example, masked multi-head attention layer 1655 computes representations for each of the output tokens of embedded subsequences 1650 based on previous output tokens while masking future output tokens. Masked multi-head attention layer 1655 therefore only computes representations using tokens that come before the token masked multi-head attention layer 1655 is trying to predict.

Transformer model 1642 feeds the representation generated by masked multi-head attention layer 1655 and residual connections from the outputs of embedded subsequences 1650 into add & norm layer 1656. Add & norm layer 1656 sums the representation generated by masked multi-head attention layer 1655 and the residual connections from outputs of embedded subsequences 1650 and applies a layer normalization to the result.

Transformer model 1642 feeds the normalized output of add & norm layer 1656 into multi-head attention layer 1657. Multi-head attention layer 1657 receives the normalized output of add & norm layer 1656 as well as encoder output representation 1652 from encoder 1644 and generates a representation based on both.

Transformer model 1642 feeds the representation generated by multi-head attention layer 1657 and residual connections from the output of add & norm layer 1656 into add & norm layer 1658. Add & norm layer 1658 sums the representation generated by multi-head attention layer 1657 and the residual connections from the output of add & norm layer 1656 and applies a layer normalization to the result.

Transformer model 1642 feeds the normalized output of add & norm layer 1658 into feed-forward layer 1659. Feed-forward layer 1659 is a feed-forward network that receives the normalized output, feeds it through the hidden layers of feed-forward layer 1659, and then feeds the output of feed-forward layer 1659 into add & norm layer 1669. Feed-forward layer 1659 processes the information received from add & norm layer 1658 and can update the hidden layers of feed-forward layer 1659 based on the information (e.g., during training) and/or generate an output based on the hidden layers processing the information (e.g., during evaluation and/or inference). For example, during training, transformer model 1642 updates the weights of the hidden layers of feed-forward layer 1659 based on the inputs and the loss of the transformer system. Further details with regard to the loss of the transformer system as well as training objectives and metrics are discussed below. As an alternative example, during evaluation and/or inference, the weights of the hidden layers of feed-forward layer 1659 are used to determine the output of feed-forward layer 1659.

Transformer model 1642 feeds the output of feed-forward layer 1659 into add & norm layer 1660 as well as residual connections from the output of add & norm layer 1658. Add & norm layer 1660 sums the output of feed-forward layer 1659 with the residual connections from add & norm layer 1658 and applies a layer normalization to the result to generate an output.

Transformer model 1642 generates output probabilities 1662 from the output of add & norm layer 1660. For example, transformer model 1642 applies a linear transformation and a SoftMax function to the output of add & norm layer 1660 to generate a normalized vector of output probabilities 1662.

In some embodiments, such as during training, transformer model 1642 determines a loss for the system based on output probabilities 1662. For example, transformer model 1642 uses deep quantile regression for training. In such an example, output probabilities 1662 includes a mean prediction probability and estimations for the upper and lower bounds of the range of prediction such that output probabilities 626 includes an uncertainty range. In one embodiment, the loss function of transformer model 1642 using deep quantile regression is represented by the following equation:

$$\mathcal{L}(\xi_i|\alpha) = \begin{cases} \alpha\xi_i \ if \ \xi_i \geq 0, \\ (\alpha - 1)\xi_i \ if \ \xi_i < 0 \end{cases}$$

, where $\alpha$ is

the required quantile (a value between 0 and 1 representing the desired quantile) and $\xi_i = y_i - f(x_i)$, where $f(x_i)$ is the mean predicted by output probabilities 1662, $y_i$ are the outputs of embedded subsequences 1650 and $x_i$ are the inputs of embedded subsequences 1650. The loss over the entirety of a dataset of embedded subsequences 1650 where embedded subsequences 1650 has a length of N can be represented by the following equation:

$$\mathcal{L}(y, f|\alpha) = \frac{1}{N}\sum_{i=1}^{N}\mathcal{L}(y_i - f(x_i)|\alpha)$$

. In such

embodiments, output probabilities 1662 includes three values: a mean prediction, a lower bound quantile, and an upper bound quantile. In some embodiments, transformer model 1642 uses upper confidence bound or Thompson sampling. For example, transformer model 1642 can determine model output 1664 based on the mean prediction, the lower bound quantile, and the upper bound quantile based on upper confidence bound and/or Thompson sampling.

In some embodiments, transformer model 1642 is trained to optimize the model parameters with trajectory-specific normalizations using cross-entropy loss. For example, transformer model 1642 uses a loss function represented by the following equation: $L(\theta) =$

$$\frac{1}{N_{traj}}\sum_{i}^{N_{traj}}\sum_{t=1}^{T_i} w_i \sum_k \log\left(\hat{p}\left(a_k^{(it)}\big|s^{(it)}\right)\right)$$

, where $N_{traj}$ is the trajectory count, $w_i$ is the normalization weight, $a_k^{(it)}$ is the predicted action for the trajectory i at timestep $t$, and $s^{(it)}$ is the state of the online system for the trajectory $i$ at timestep $t$. In some embodiments, transformer model 1642 uses trajectory-wise normalization. For example, the add & norm layers of transformer model 1642 normalize the weights according to the following equation: $w_i = \frac{1}{T_i}$, where $T_i$ is the length of trajectory $i$.

In some embodiments, transformer model 1642 uses global normalization. For example, the add & norm layers of transformer model 1642 normalize the weights according to the following equation: $w_i = c$, where $c$ is a positive scalar. In some embodiments, the scalar c is predetermined.

Language models, including large language models and other generative models, can be implemented using transformer models. A generative model can be constructed using a neural network-based machine learning model architecture. In some implementations, the neural network-based architecture includes one or more input layers that receive task descriptions (or prompts), generate one or more embeddings based on the task descriptions, and pass the one or more embeddings to one or more other layers of the neural network. In other implementations, the one or more embedding are generated based on the task description by a pre-processor, the embeddings are input to the generative language model, and the generative language model outputs digital content, e.g., natural language text or a combination of natural language text and non-text output, based on the embeddings.

The neural network-based machine learning model architecture of the generative model can include one or more self-attention layers that allow the model to assign different weights to different portions of the model input (e.g., different words or phrases included in the model input). Alternatively or in addition, the neural network architecture includes feed-forward layers and residual connections that allow the model to machine-learn complex data patterns including relationships between different words or phrases in multiple different contexts. The language model or other type of generative model can be constructed using a transformer-based architecture that includes self-attention layers, feed-forward layers, and residual connections between the layers. The exact number and arrangement of layers of each type as well as the hyperparameter values used to configure the model are determined based on the requirements of a particular design or implementation.

In some examples, the neural network-based machine learning model architecture of a generative model includes or is based on one or more generative transformer models, one or more generative pre-trained transformer (GPT) models, one or more bidirectional encoder representations from transformers (BERT) models, one or more large language models (LLMs), one or more XLNet models, and/or one or more other natural language processing (NL) models that significantly advance the state-of-the-art in various linguistic tasks such as machine translation, sentiment analysis, question answering and sentence similarity. In some examples, the neural network-based machine learning model architecture includes or is based on one or more predictive content neural models that can receive digital content input and generate one or more outputs based on processing the digital content with one or more neural network models. Examples of predictive neural models include, but are not limited to, Generative Pre-Trained Transformers (GPT), BERT, and/or Recurrent Neural Networks (RNNs). In some examples, one or more types of neural network-based machine learning model architecture includes or is based on one or more multimodal neural networks capable of outputting different modalities (e.g., text, image, sound, etc.) separately and/or in combination based on digital content input. Accordingly, in some examples, a multimodal neural network is capable of outputting digital content that includes a combination of two or more of text, images, video or sound.

A generative language model can be trained on a large dataset of natural language text. For example, training samples of natural language text extracted from publicly available data sources can be used to train a generative language model. The size and composition of the dataset used to train the generative language model can vary according to the requirements of a particular design or implementation. In some implementations, the dataset used to train the generative language model 106 includes hundreds of thousands to millions or more different natural language text training samples. In some embodiments, a generative language model includes multiple generative language models trained on differently sized datasets. For example, a generative language model can include a comprehensive but low capacity model that is trained on a large data set and used for generating examples, and the same generative language model also can include a less comprehensive but high capacity model that is trained on a smaller data set, where the high capacity model is used to generate outputs based on examples obtained from the low capacity model. In some implementations, reinforcement learning is used to further improve the output of the generative language model. In reinforcement learning, ground-truth examples of desired model output are paired with respective prompts, and these prompt-output pairs are used to train or fine tune the generative language model.

Prompt engineering is a technique used to optimize the structure and/or content of a prompt input to a generative model. Some prompts can include examples of outputs to be generated by the generative model (e.g., few-shot prompts), while other prompts can include no examples of outputs to be generated by the generative model (e.g., zero-shot prompts). Chain of thought prompting is a prompt engineering technique where the prompt includes a request that the model explain reasoning in the output. For example, the generative model performs the task described in the prompt using a series of steps and outputs reasoning as to each step performed.

Supervised learning is a method of training (or fine-tuning) a machine learning model given input-output pairs, where the output of the input-output pair is known (e.g., an expected output, a labeled output, a ground truth). Other training methods including semi-supervised learning or federated learning can be used to train a machine learning model or to fine-tune a pretrained machine learning model.

To train or fine tune a language model, a prompt is provided as input to the machine learning model. The prompt can include natural language instructions, queries, examples, etc. The machine learning model generates output by applying the weights and nodes of the machine learning model to the prompt. Error can be determined by comparing the model output to a reference or expected output. For example, the similarity between the model output and the expected output is evaluated using a similarity metric or model performance metric. The error is used to adjust the value of weights in a weight matrix included in the machine learning model and/or the number of layers and/or arrangement of layers included in the machine learning model.

A machine learning model can be trained using a backpropagation algorithm. The backpropagation algorithm operates by propagating the error through each of the algorithmic weights of the machine learning model such that the algorithmic weights are adjusted based on the amount of error. The error can be calculated at each iteration, batch, and/or epoch. The error is computed using a loss function. An example loss function includes the cross-entropy error function. After a number of training iterations, the machine learning model iteratively converges, e.g., adjusts weight values over time until the model output achieves an acceptable level of accuracy or reliability (e.g., accuracy satisfies a defined tolerance or confidence level). The values of the weights of the trained model (e.g., after convergence) are stored such that the machine learning model can be deployed during inference time.

The machine learning model 1642 can be configured and implemented as a network service. For example, the machine learning model 1632 can be configured using a machine learning library and an application programming interface (API), e.g., via an API call such as ML_library.model($p1,p2,...pn$), where $p$ indicates a parameter or argument of the call, such as a model hyperparameter or an input feature set identifier. Once configured, the machine learning model 1642 and/or its output can be hosted on one or more servers and/or data storage devices for accessibility to one or more requesting processes, systems, devices, frameworks, or services.

The examples shown in **FIG. 16E** and the accompanying description, above are provided for illustration purposes. This disclosure is not limited to the described examples. Additional or alternative details and implementations are described herein.

**FIG. 17** is a block diagram of an example computer system including components of an agent system in accordance with some embodiments of the present disclosure.

In **FIG. 17,** an example machine of a computer system 1700 is shown, within which a set of instructions for causing the machine to perform any of the methodologies discussed herein can be executed. In some embodiments, the computer system 1700 can correspond to a component of a networked computer system (e.g., as a component of the computing system 100 of **FIG. 1** or the computer system 1500 of **FIG. 15**) that includes, is coupled to, or utilizes a machine to execute an operating system to perform operations corresponding to one or more components of the computing system 100 of **FIG. 1** or the agent system 1580 of **FIG. 15.** For example, computer system 1700 corresponds to a portion of computing system 100 or computing system 1500 when the computing system is executing a portion of automated agent 102 or distributed multi-agent system 105 or agent system 1580.

The machine is connected (e.g., networked) to other machines in a network, such as a local area network (LAN), an intranet, an extranet, and/or the Internet. The machine can operate in the capacity of a server or a client machine in a client-server network environment, as a peer machine in a peer-to-peer (or distributed) network environment, or as a server or a client machine in a cloud computing infrastructure or environment.

The machine is a personal computer (PC), a smart phone, a tablet PC, a set-top box (STB), a Personal Digital Assistant (PDA), a cellular telephone, a web appliance, a wearable device, a server, or any machine capable of executing a set of instructions (sequential or otherwise) that specify actions to be taken by that machine. Further, while a single machine is illustrated, the term "machine" includes any collection of machines that individually or jointly execute a set (or multiple sets) of instructions to perform any of the methodologies discussed herein.

The example computer system 1700 includes a processing device 1702, a main memory 1704 (e.g., read-only memory (ROM), flash memory, dynamic random access memory (DRAM) such as synchronous DRAM (SDRAM) or Rambus DRAM (RDRAM), etc.), a memory 1703 (e.g., flash memory, static random access memory (SRAM), etc.), an input/output system 1710, and a data storage system 1740, which communicate with each other via a bus 1730.

Processing device 1702 represents at least one general-purpose processing device such as a microprocessor, a central processing unit, or the like. More particularly, the processing device can be a complex instruction set computing (CISC) microprocessor, reduced instruction set computing (RISC) microprocessor, very long instruction word (VLIW) microprocessor, or a processor implementing other instruction sets, or processors implementing a combination of instruction sets. Processing device 1702 can also be at least one special-purpose processing device such as an application specific integrated circuit (ASIC), a field programmable gate array (FPGA), a digital signal processor (DSP), network processor, or the like. The processing device 1702 is configured to execute instructions 1712 for performing the operations and steps discussed herein.

In some embodiments of **FIG. 17,** agent system 1750 represents portions of automated agent 102 or distributed multi-agent system 105 or agent system 1580 while the computer system 1700 is executing those portions of automated agent 102 or distributed multi-agent system 105 or agent system 1580. Instructions 1712 include portions of agent system 1750 when those portions of the agent system 1750 are being executed by processing device 1702. Thus, the agent system 1750 is shown in dashed lines as part of instructions 1712 to illustrate that, at times, portions of the agent system 1750 are executed by processing device 1702. For example, when at least some portion of the agent system 1750 is embodied in instructions to cause processing device 1702 to perform the method(s) described herein, some of those instructions can be read into processing device 1702 (e.g., into an internal cache or other memory) from main memory 1704 and/or data storage system 1740. However, it is not required that all of the agent system 1750 be included in instructions 1712 at the same time and portions of the agent system 1750 are stored in at least one other component of computer system 1700 at other times, e.g., when at least one portion of the agent system 1750 are not being executed by processing device 1702.

The computer system 1700 further includes a network interface device 1708 to communicate over the network 1720. Network interface device 1708 provides a two-way data communication coupling to a network. For example, network interface device 1708 can be an integrated-services digital network (ISDN) card, cable modem, satellite modem, or a modem to provide a data communication connection to a corresponding type of telephone line. As another example, network interface device 1708 can be a local area network (LAN) card to provide a data communication connection to a compatible LAN. Wireless links can also be implemented. In any such implementation network interface device 1708 can send and receives electrical, electromagnetic, or optical signals that carry digital data streams representing various types of information.

The network link can provide data communication through at least one network to other data devices. For example, a network link can provide a connection to the world-wide packet data communication network commonly referred to as the "Internet," for example through a local network to a host computer or to data equipment operated by an Internet Service Provider (ISP). Local networks and the Internet use electrical, electromagnetic, or optical signals that carry digital data to and from computer system computer system 1700.

Computer system 1700 can send messages and receive data, including program code, through the network(s) and network interface device 1708. In the Internet example, a server can transmit a requested code for an application program through the Internet and network interface device 1708. The received code can be executed by processing device 1702 as it is received, and/or stored in data storage system 1740, or other non-volatile storage for later execution.

The input/output system 1710 includes an output device, such as a display, for example a liquid crystal display (LCD) or a touchscreen display, for displaying information to a computer user, or a speaker, a haptic device, or another form of output device. The input/output system 1710 can include an input device, for example, alphanumeric keys and other keys configured for communicating information and command selections to processing device 1702. An input device can, alternatively or in addition, include a cursor control, such as a mouse, a trackball, or cursor direction keys for communicating direction information and command selections to processing device 1702 and for controlling cursor movement on a display. An input device can, alternatively or in addition, include a microphone, a sensor, or an array of sensors, for communicating sensed information to processing device 1702. Sensed information can include voice commands, audio signals, geographic location information, haptic information, and/or digital imagery, for example.

The data storage system 1740 includes a machine-readable storage medium 1742 (also known as a computer-readable medium) on which is stored at least one set of instructions 1744 or software embodying any of the methodologies or functions described herein. The instructions 1744 can also reside, completely or at least partially, within the main memory 1704 and/or within the processing device 1702 during execution thereof by the computer system 1700, the main memory 1704 and the processing device 1702 also constituting machine-readable storage media. In one embodiment, the instructions 1744 include instructions to implement functionality corresponding to an automated agent or agent system (e.g., portions of computing system 100 of FIG. 1 or agent system 1580 of **FIG. 15**).

Dashed lines are used in **FIG. 17** to indicate that it is not required that the agent system be embodied entirely in instructions 1712, 1714, and 1744 at the same time. In one example, portions of the agent system are embodied in instructions 1714, which are read into main memory 1704 as instructions 1714, and portions of instructions 1712 are read into processing device 1702 as instructions 1712 for execution. In another example, some portions of the agent system are embodied in instructions 1744 while other portions are embodied in instructions 1714 and still other portions are embodied in instructions 1712.

While the machine-readable storage medium 1742 is shown in an example embodiment to be a single medium, the term "machine-readable storage medium" should be taken to include a single medium or multiple media that store the instructions. The term "machine-readable storage medium" shall also be taken to include any medium that is capable of storing or encoding a set of instructions for execution by the machine and that cause the machine to perform any of the methodologies of the present disclosure. The term "machine-readable storage medium" shall accordingly be taken to include, but not be limited to, solid-state memories, optical media, and magnetic media.

The examples shown in **FIG. 17** and the accompanying description, above are provided for illustration purposes. This disclosure is not limited to the described examples.

Some portions of the preceding detailed description have been presented in terms of algorithms and symbolic representations of operations on data bits within a computer memory. These algorithmic descriptions and representations are the ways used by those skilled in the data processing arts to convey the substance of their work most effectively to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. The present disclosure can refer to the action and processes of a computer system, or similar electronic computing device, which manipulates and transforms data represented as physical (electronic) quantities within the computer system's registers and memories into other data similarly represented as physical quantities within the computer system memories or registers or other such information storage systems.

The present disclosure also relates to an apparatus for performing the operations herein. This apparatus can be specially constructed for the intended purposes, or it can include a general-purpose computer selectively activated or reconfigured by a computer program stored in the computer. For example, a computer system or other data processing system, such as the computing system 100 or the computing system 1500, can carry out the above-described computer-implemented methods in response to its processor executing a computer program (e.g., a sequence of instructions) contained in a memory or other non-transitory machine-readable storage medium. Such a computer program can be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, each coupled to a computer system bus.

The algorithms and displays presented herein are not inherently related to any particular computer or other apparatus. Various general-purpose systems can be used with programs in accordance with the teachings herein, or it can prove convenient to construct a more specialized apparatus to perform the method. The structure for a variety of these systems will appear as set forth in the description below. In addition, the present disclosure is not described with reference to any particular programming language. It will be appreciated that a variety of programming languages can be used to implement the teachings of the disclosure as described herein.

The present disclosure can be provided as a computer program product, or software, which can include a machine-readable medium having stored thereon instructions, which can be used to program a computer system (or other electronic devices) to perform a process according to the present disclosure. A machine-readable medium includes any mechanism for storing information in a form readable by a machine (e.g., a computer). In some embodiments, a machine-readable (e.g., computer-readable) medium includes a machine (e.g., a computer) readable storage medium such as a read only memory ("ROM"), random access memory ("RAM"), magnetic disk storage media, optical storage media, flash memory components, etc.

The techniques described herein may be implemented with privacy safeguards to protect user privacy. Furthermore, the techniques described herein may be implemented with user privacy safeguards to prevent unauthorized access to personal data and confidential data. The training of the AI models described herein is executed to benefit all users fairly, without causing or amplifying unfair bias.

According to some embodiments, the techniques for the models described herein do not make inferences or predictions about individuals unless requested to do so through an input. According to some embodiments, the models described herein do not learn from and are not trained on user data without user authorization. In instances where user data is permitted and authorized for use in AI features and tools, it is done in compliance with a user's visibility settings, privacy choices, user agreement and descriptions, and the applicable law. According to the techniques described herein, users may have full control over the visibility of their content and who sees their content, as is controlled via the visibility settings. According to the techniques described herein, users may have full control over the level of their personal data that is shared and distributed between different AI platforms that provide different functionalities.

According to the techniques described herein, users may choose to share personal data with different platforms to provide services that are more tailored to the users. In instances where the users choose not to share personal data with the platforms, the choices made by the users will not have any impact on their ability to use the services that they had access to prior to making their choice.

According to the techniques described herein, users may have full control over the level of access to their personal data that is shared with other parties. According to the techniques described herein, personal data provided by users may be processed to determine prompts when using a generative AI feature at the request of the user, but not to train generative AI models. In some embodiments, users may provide feedback while using the techniques described herein, which may be used to improve or modify the platform and products. In some embodiments, any personal data associated with a user, such as personal information provided by the user to the platform, may be deleted from storage upon user request. In some embodiments, personal information associated with a user may be permanently deleted from storage when a user deletes their account from the platform.

According to the techniques described herein, personal data may be removed from any training dataset that is used to train AI models. The techniques described herein may utilize tools for anonymizing member and customer data. For example, user's personal data may be redacted and minimized in training datasets for training AI models through delexicalization tools and other privacy enhancing tools for safeguarding user data. The techniques described herein may minimize use of any personal data in training AI models, including removing and replacing personal data. According to the techniques described herein, notices may be communicated to users to inform how their data is being used and users are provided controls to opt-out from their data being used for training AI models.

According to some embodiments, tools are used with the techniques described herein to identify and mitigate risks associated with AI in all products and AI systems. In some embodiments, notices may be provided to users when AI tools are being used to provide features.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

Illustrative examples of the technologies disclosed herein are provided below. An embodiment of the technologies may include any of the examples described herein, or any combination of any of the examples described herein, or any combination of any portions of the examples described herein.

In some aspects, the techniques described herein relate to a method including: receiving at least one input via at least one device; using the at least one input, determining an objective; using the objective, a multi-agent system, and an automated agent, causing at least one first sub-agent of the multi-agent system to generate and execute a first plan including one or more tasks to achieve the objective; and causing at least one second sub-agent of the multi-agent system to execute a second plan to supervise the at least one first sub-agent in accordance with a supervision level that indicates a level of supervision of the automated agent by an entity associated with the objective.

In some aspects, the techniques described herein relate to a method, wherein the multi-agent system includes a plurality of multi-layer memory structures, and the method includes: storing output of a first sub-agent in a first multi-layer memory of the plurality of multi-layer memory structures to store output of a first sub-agent; and storing output of a second sub-agent in a second multi-layer memory of the plurality of multi-layer memory structures.

In some aspects, the techniques described herein relate to a method, further including: storing a first portion of the output of the first sub-agent in a first layer of the first multi-layer memory having a first access level, wherein the first access level enables the first sub-agent to access the first layer; storing a second portion of the output of the first sub-agent in a second layer of the first multi-layer memory having a second access level, wherein the second access level enables the second sub-agent to access the second layer and the second sub-agent is different from the first sub-agent.

In some aspects, the techniques described herein relate to a method, wherein causing the at least one second sub-agent of the multi-agent system to execute the second plan includes: using data obtained from the first multi-layer memory and the second multi-layer memory, machine-learning the supervision level.

In some aspects, the techniques described herein relate to a method, wherein causing the at least one first sub-agent of the multi-agent system to generate and execute the first plan includes: decomposing a task into a plurality of sub-tasks; and assigning the plurality of sub-tasks to at least one third sub-agent.

In some aspects, the techniques described herein relate to a method, further including: coordinating communications among the at least one first sub-agent and the at least one second sub-agent using an asynchronous communication mechanism.

In some aspects, the techniques described herein relate to a method, wherein creating the automated agent includes: querying at least one data registry to identify the at least one first sub-agent and the at least one second sub-agent.

In some aspects, the techniques described herein relate to a method, wherein causing the at least one first sub-agent of the multi-agent system to generate and execute the first plan includes: using a workflow, the objective, the at least one input, and at least one machine learning model, generating the first plan.

In some aspects, the techniques described herein relate to a method, wherein causing the at least one second sub-agent of the multi-agent system to execute the second plan includes: determining whether the supervision level is met; and ending or modifying execution of the first plan by the at least one first sub-agent in response to determining that the supervision level is not met.

In some aspects, the techniques described herein relate to a system including: at least one processor; and at least one memory coupled to the at least one processor, wherein the at least one memory includes at least one instruction that, when executed by the at least one processor, causes the at least one processor to be capable of performing at least one operation including: receiving at least one input via at least one device; using the at least one input, determining an objective; using the objective, a multi-agent system, and an automated agent, causing at least one first sub-agent of the multi-agent system to generate and execute a first plan including one or more tasks to achieve the objective; and causing at least one second sub-agent of the multi-agent system to execute a second plan to supervise the at least one first sub-agent in accordance with a supervision level that indicates a level of supervision of the automated agent by an entity associated with the objective.

In some aspects, the techniques described herein relate to a system, wherein the at least one instruction, when executed by the at least one processor, causes the at least one processor to be capable of performing at least one operation further including: storing output of a first sub-agent in a first multi-layer memory of a plurality of multi-layer memory structures to store output of a first sub-agent; and storing output of a second sub-agent in a second multi-layer memory of the plurality of multi-layer memory structures.

In some aspects, the techniques described herein relate to a system, wherein the at least one instruction, when executed by the at least one processor, causes the at least one processor to be capable of performing at least one operation further including: storing a first portion of the output of the first sub-agent in a first layer of the first multi-layer memory having a first access level, wherein the first access level enables the first sub-agent to access the first layer; storing a second portion of the output of the first sub-agent in a second layer of the first multi-layer memory having a second access level, wherein the second access level enables the second sub-agent to access the second layer and the second sub-agent is different from the first sub-agent.

In some aspects, the techniques described herein relate to a system, wherein the at least one instruction, when executed by the at least one processor, causes the at least one processor to be capable of performing at least one operation further including: using data obtained from the first multi-layer memory and the second multi-layer memory, machine-learning the supervision level.

In some aspects, the techniques described herein relate to a system, wherein the at least one instruction, when executed by the at least one processor, causes the at least one processor to be capable of performing at least one operation further including: decomposing a task into a plurality of sub-tasks; and assigning the plurality of sub-tasks to at least one third sub-agent.

In some aspects, the techniques described herein relate to a system, wherein the at least one instruction, when executed by the at least one processor, causes the at least one processor to be capable of performing at least one operation further including: coordinating communications among the at least one first sub-agent and the at least one second sub-agent using an asynchronous communication mechanism.

In some aspects, the techniques described herein relate to a system, wherein the at least one instruction, when executed by the at least one processor, causes the at least one processor to be capable of performing at least one operation further including: querying at least one data registry to identify the at least one first sub-agent and the at least one second sub-agent.

In some aspects, the techniques described herein relate to a system, wherein the at least one instruction, when executed by the at least one processor, causes the at least one processor to be capable of performing at least one operation further including: using a workflow, the objective, the at least one input, and at least one machine learning model, generating the first plan.

In some aspects, the techniques described herein relate to at least one non-transitory machine-readable storage medium including at least one instruction that, when executed by at least one processor, causes the at least one processor to: receive at least one input via at least one device; using the at least one input, determine an objective; using the objective, a multi-agent system, and an automated agent, cause at least one first sub-agent of the multi-agent system to generate and execute a first plan including one or more tasks to achieve the objective; and cause at least one second sub-agent of the multi-agent system to execute a second plan to supervise the at least one first sub-agent in accordance with a supervision level that indicates a level of supervision of the automated agent by an entity associated with the objective.

In some aspects, the techniques described herein relate to an at least one non-transitory machine-readable storage medium, wherein the at least one instruction, when executed by the at least one processor, causes the at least one processor to: store output of a first sub-agent in a first multi-layer memory of a plurality of multi-layer memory structures to store output of a first sub-agent; and store output of a second sub-agent in a second multi-layer memory of the plurality of multi-layer memory structures.

In some aspects, the techniques described herein relate to an at least one non-transitory machine-readable storage medium, wherein the at least one instruction, when executed by the at least one processor, causes the at least one processor to: store a first portion of the output of the first sub-agent in a first layer of the first multi-layer memory having a first access level, wherein the first access level enables the first sub-agent to access the first layer; store a second portion of the output of the first sub-agent in a second layer of the first multi-layer memory having a second access level, wherein the second access level enables the second sub-agent to access the second layer and the second sub-agent is different from the first sub-agent.

Clause 1. A computer-implemented method comprising: receiving (1462) at least one input via at least one device; using (1464) the at least one input, determining an objective; using (1466) the objective, a multi-agent system, and an automated agent, causing at least one first sub-agent of the multi-agent system to generate and execute a first plan comprising one or more tasks to achieve the objective; and causing (1468) at least one second sub-agent of the multi-agent system to execute a second plan to supervise the at least one first sub-agent in accordance with a supervision level that indicates a level of supervision of the automated agent by an entity associated with the objective.

Clause 2. The computer-implemented method of clause 1, wherein the multi-agent system comprises a plurality of multi-layer memory structures, and the method comprises: storing output of a first sub-agent in a first multi-layer memory of the plurality of multi-layer memory structures to store output of a first sub-agent; and storing output of a second sub-agent in a second multi-layer memory of the plurality of multi-layer memory structures.

Clause 3. The computer-implemented method of clause 2, further comprising: storing a first portion of the output of the first sub-agent in a first layer of the first multi-layer memory having a first access level, wherein the first access level enables the first sub-agent to access the first layer; storing a second portion of the output of the first sub-agent in a second layer of the first multi-layer memory having a second access level, wherein the second access level enables the second sub-agent to access the second layer and the second sub-agent is different from the first sub-agent.

Clause 4. The computer-implemented method of clause 2, wherein causing the at least one second sub-agent of the multi-agent system to execute the second plan comprises: using data obtained from the first multi-layer memory and the second multi-layer memory, machine-learning the supervision level.

Clause 5. The computer-implemented method of any of clauses 1-4, wherein causing the at least one first sub-agent of the multi-agent system to generate and execute the first plan comprises: decomposing a task into a plurality of sub-tasks; and assigning the plurality of sub-tasks to at least one third sub-agent.

Clause 6. The computer-implemented method of any of clauses 1-5, further comprising: coordinating communications among the at least one first sub-agent and the at least one second sub-agent using an asynchronous communication mechanism.

Clause 7. The computer-implemented method of any of clauses 1-6, wherein creating the automated agent comprises: querying at least one data registry to identify the at least one first sub-agent and the at least one second sub-agent.

Clause 8. The computer-implemented method of any of clauses 1-7, wherein causing the at least one first sub-agent of the multi-agent system to generate and execute the first plan comprises: using a workflow, the objective, the at least one input, and at least one machine learning model, generating the first plan.

Clause 9. The computer-implemented method of any of clauses 1-8, wherein causing the at least one second sub-agent of the multi-agent system to execute the second plan comprises: determining whether the supervision level is met; and ending or modifying execution of the first plan by the at least one first sub-agent in response to determining that the supervision level is not met.

Clause 10. A system comprising: at least one processor; and at least one memory coupled to the at least one processor, wherein the at least one memory comprises at least one instruction that, when executed by the at least one processor, causes the at least one processor to be capable of performing at least one operation comprising: receiving (1462) at least one input via at least one device; using (1464) the at least one input, determining an objective; using (1466) the objective, a multi-agent system, and an automated agent, causing at least one first sub-agent of the multi-agent system to generate and execute a first plan comprising one or more tasks to achieve the objective; and causing (1468) at least one second sub-agent of the multi-agent system to execute a second plan to supervise the at least one first sub-agent in accordance with a supervision level that indicates a level of supervision of the automated agent by an entity associated with the objective.

Clause 11. The system of clause 10, wherein the at least one instruction, when executed by the at least one processor, causes the at least one processor to be capable of performing at least one operation further comprising: storing output of a first sub-agent in a first multi-layer memory of a plurality of multi-layer memory structures to store output of a first sub-agent; and storing output of a second sub-agent in a second multi-layer memory of the plurality of multi-layer memory structures.

Clause 12. The system of clause 11, wherein the at least one instruction, when executed by the at least one processor, causes the at least one processor to be capable of performing at least one operation further comprising: storing a first portion of the output of the first sub-agent in a first layer of the first multi-layer memory having a first access level, wherein the first access level enables the first sub-agent to access the first layer; storing a second portion of the output of the first sub-agent in a second layer of the first multi-layer memory having a second access level, wherein the second access level enables the second sub-agent to access the second layer and the second sub-agent is different from the first sub-agent.

Clause 13. The system of clause 11 or clause 12, wherein the at least one instruction, when executed by the at least one processor, causes the at least one processor to be capable of performing at least one operation further comprising: using data obtained from the first multi-layer memory and the second multi-layer memory, machine-learning the supervision level.

Clause 14. The system of any of clauses 10-13, wherein the at least one instruction, when executed by the at least one processor, causes the at least one processor to be capable of performing at least one operation further comprising: decomposing a task into a plurality of sub-tasks; and assigning the plurality of sub-tasks to at least one third sub-agent.

Clause 15. The system of any of clauses 10-14, wherein the at least one instruction, when executed by the at least one processor, causes the at least one processor to be capable of performing at least one operation further comprising: coordinating communications among the at least one first sub-agent and the at least one second sub-agent using an asynchronous communication mechanism.

Clause 16. The system of any of clauses 10-15, wherein the at least one instruction, when executed by the at least one processor, causes the at least one processor to be capable of performing at least one operation further comprising: querying at least one data registry to identify the at least one first sub-agent and the at least one second sub-agent.

Clause 17. The system of any of clauses 10-16, wherein the at least one instruction, when executed by the at least one processor, causes the at least one processor to be capable of performing at least one operation further comprising: using a workflow, the objective, the at least one input, and at least one machine learning model, generating the first plan.

Clause 18. At least one non-transitory machine-readable storage medium comprising at least one instruction that, when executed by at least one processor, causes the at least one processor to: receive (1462) at least one input via at least one device; using (1464) the at least one input, determine an objective; using (1466) the objective, a multi-agent system, and an automated agent, cause at least one first sub-agent of the multi-agent system to generate and execute a first plan comprising one or more tasks to achieve the objective; and cause (1468) at least one second sub-agent of the multi-agent system to execute a second plan to supervise the at least one first sub-agent in accordance with a supervision level that indicates a level of supervision of the automated agent by an entity associated with the objective.

Clause 19. The at least one non-transitory machine-readable storage medium of clause 18, wherein the at least one instruction, when executed by the at least one processor, causes the at least one processor to: store output of a first sub-agent in a first multi-layer memory of a plurality of multi-layer memory structures to store output of a first sub-agent; and store output of a second sub-agent in a second multi-layer memory of the plurality of multi-layer memory structures.

Clause 20. The at least one non-transitory machine-readable storage medium of clause 19, wherein the at least one instruction, when executed by the at least one processor, causes the at least one processor to: store a first portion of the output of the first sub-agent in a first layer of the first multi-layer memory having a first access level, wherein the first access level enables the first sub-agent to access the first layer; store a second portion of the output of the first sub-agent in a second layer of the first multi-layer memory having a second access level, wherein the second access level enables the second sub-agent to access the second layer and the second sub-agent is different from the first sub-agent.

Embodiments of the disclosure have been described with reference to specific example embodiments thereof. It will be evident that various modifications can be made thereto without departing from the broader spirit and scope of embodiments of the disclosure as set forth in the following claims. The specification and drawings are, accordingly, to be regarded in an illustrative sense rather than a restrictive sense.

**Claims**

1.  A computer-implemented method comprising:

    receiving (1462) at least one input via at least one device;
    using (1464) the at least one input, determining an objective;
    using (1466) the objective, a multi-agent system, and an automated agent, causing at least one first sub-agent of the multi-agent system to generate and execute a first plan comprising one or more tasks to achieve the objective; and
    causing (1468) at least one second sub-agent of the multi-agent system to execute a second plan to supervise the at least one first sub-agent in accordance with a supervision level that indicates a level of supervision of the automated agent by an entity associated with the objective.

2.  The method of claim 1, wherein the multi-agent system comprises a plurality of multi-layer memory structures, and the method comprises:

    storing output of a first sub-agent in a first multi-layer memory of the plurality of multi-layer memory structures to store output of a first sub-agent; and
    storing output of a second sub-agent in a second multi-layer memory of the plurality of multi-layer memory structures.

3.  The method of claim 2, further comprising:

    storing a first portion of the output of the first sub-agent in a first layer of the first multi-layer memory having a first access level, wherein the first access level enables the first sub-agent to access the first layer;
    storing a second portion of the output of the first sub-agent in a second layer of the first multi-layer memory having a second access level, wherein the second access level enables the second sub-agent to access the second layer and the second sub-agent is different from the first sub-agent.

4. The method of claim 2, wherein causing the at least one second sub-agent of the multi-agent system to execute the second plan comprises: using data obtained from the first multi-layer memory and the second multi-layer memory, machine-learning the supervision level.

5. The method of any of claims 1 to 4, wherein causing the at least one first sub-agent of the multi-agent system to generate and execute the first plan comprises:

decomposing a task into a plurality of sub-tasks; and
assigning the plurality of sub-tasks to at least one third sub-agent.

6. The method of any of claims 1 to 5, further comprising:
coordinating communications among the at least one first sub-agent and the at least one second sub-agent using an asynchronous communication mechanism.

7. The method of any of claims 1 to 6, wherein creating the automated agent comprises:
querying at least one data registry to identify the at least one first sub-agent and the at least one second sub-agent.

8. The method of any of claims 1 to 7, wherein causing the at least one first sub-agent of the multi-agent system to generate and execute the first plan comprises:
using a workflow, the objective, the at least one input, and at least one machine learning model, generating the first plan.

9. The method of any of claims 1 to 8, wherein causing the at least one second sub-agent of the multi-agent system to execute the second plan comprises:

determining whether the supervision level is met; and
ending or modifying execution of the first plan by the at least one first sub-agent in response to determining that the supervision level is not met.

10. A system comprising:

at least one processor; and
at least one memory coupled to the at least one processor, wherein the at least one memory comprises at least one instruction that, when executed by the at least one processor, causes the at least one processor to be capable of performing at least one operation comprising:

receiving (1462) at least one input via at least one device;
using (1464) the at least one input, determining an objective;
using (1466) the objective, a multi-agent system, and an automated agent, causing at least one first sub-agent of the multi-agent system to generate and execute a first plan comprising one or more tasks to achieve the objective; and
causing (1468) at least one second sub-agent of the multi-agent system to execute a second plan to supervise the at least one first sub-agent in accordance with a supervision level that indicates a level of supervision of the automated agent by an entity associated with the objective.

11. The system of claim 10, wherein the at least one instruction, when executed by the at least one processor, causes the at least one processor to be capable of performing at least one operation further comprising:

storing output of a first sub-agent in a first multi-layer memory of a plurality of multi-layer memory structures to store output of a first sub-agent; and
storing output of a second sub-agent in a second multi-layer memory of the plurality of multi-layer memory structures.

12. The system of claim 11, wherein the at least one instruction, when executed by the at least one processor, causes the at least one processor to be capable of performing at least one operation further comprising:

storing a first portion of the output of the first sub-agent in a first layer of the first multi-layer memory having a first access level, wherein the first access level enables the first sub-agent to access the first layer;
storing a second portion of the output of the first sub-agent in a second layer of the first multi-layer memory having a second access level, wherein the second access level enables the second sub-agent to access the second layer and the second sub-agent is different from the first sub-agent.

13. The system of claim 11 or claims 12, wherein the at least one instruction, when executed by the at least one processor, causes the at least one processor to be capable of performing at least one operation further comprising:
using data obtained from the first multi-layer memory and the second multi-layer memory, machine-learning the supervision level.

14. The system of any of claims 10 to 13, wherein the at least one instruction, when executed by the at least one processor, causes the at least one processor to be capable of performing at least one operation further comprising:

decomposing a task into a plurality of sub-tasks; and
assigning the plurality of sub-tasks to at least one third sub-agent.

15. The system of any of claims 10 to 14, wherein the at least one instruction, when executed by the at least one processor, causes the at least one processor to be capable of performing at least one operation further comprising:
coordinating communications among the at least one first sub-agent and the at least one second sub-agent using an asynchronous communication mechanism.

## FIG. 1

**AUTOMATED AGENT 102**

**APPLICATIONS 104**

SEARCH ENGINE 104A

SOCIAL NETWORK 104B

DOMAIN APPLICATION 104C

**DISTRIBUTED MULTI-AGENT SYSTEM 105**

SUB-AGENT 1 106A

PROFILE
PLANNER
WORKFLOW
MEMORY

SUB-AGENT 2 106B

SUB-AGENT N 106C

COMMUNICATION SERVICE 108

ADAPTIVE MACHINE LEARNING SERVICE 110

MULTI-LAYER MEMORY STRUCTURE 111

WORKING 112A

EPISODIC 112B

COLLECTIVE 112C

CONTEXT MODEL 1 113A

CONTEXT MODEL 2 113B

CONTEXT MODEL N 113C

**ARTIFICIAL INTELLIGENCE (AI) SERVICES 114**

LLM 114A
MODEL
ARGS
MICRO-PROMPT
BIL 114B
ML 114C

**DATA RESOURCES 116**

WORKFLOWS 116A

REGISTRIES 116B

DATA STORES 116C

**TOOLS 118**

APIS 118A

SEARCH 118B

FUNCTIONS 118C

# FIG. 2

200

201 {
201A
201B
201C

Start Automated Agent
202

206

205

Create Instance
of Automated
Agent 208

Messaging Service
210

204

236b

234

Automated Agent 212

Agent Definition 214

Adaptive Machine
Learning-Based
Orchestrator 216

236a

Multi-Layer Memory
218

Memory 1 220a

Memory 2 220b

Memory 3 220c

Memory N 220d

244

242

238

Router 222

240

Data Registries 224

Registry 1 224a

Registry 2 224b

Registry N 224c

Invocation
Threads 228

ARTIFICIAL
INTELLIGENCE
(AI) SERVICES
230

TOOLS 232

DATA
RESOURCES 226

# FIG. 3

_300_

Detect event.
302

Obtain context model via one or more memory layers and determine objective.
304

Load workflow to accomplish the objective given the event and context.
306

Invoke a planner to use the workflow to generate or update a plan to accomplish the objective.
308

Cause execution of one or more actions from the plan via one or more agents and monitor the status of the plan.
310

N          Objective achieved?          Y
312

Initiate an action from the plan using a portion of the context model associated with the action.
314

Update a working memory layer of the context model.
322

Y          Action achieved?          N
316

Update the plan status via the working memory layers.
318

Update the portion of the context model used to perform the action.
320

# FIG. 4

400

## Hierarchical Pluggable Planning 402

Agent Planners 404 ↔ Workflows 406

Agent Planners 404 ↕ Action Planners 408

Action Planners 408 ↔ Plans 410

## Function Definitions 420

### Tools 422

Pluggable Modules 424

AIs 426

Microprompts 428

Code Generators 430

### Skills 432

Services 434

Agents 436

Swarms 438

## Structured Layered Memory 440

Working 442

Episodic 444

Semantic 446

Procedural 448

Collective 450

## Asynchronous Distributed Coordination 460

### Pluggable Messaging Service 462

Public 464

Local 466

### Service Endpoint 468

APIs 470

Runtime Environments 472

500

# FIG. 5

600

# FIG. 6

Planner 608

Microprompt 604

Workflow 606

AI 616

Skill 602

Tool 614

Agent 612

Action 610

Group 618

## FIG. 7A

700

Create an instance of an automated agent, including loading a user interface, invoking a first planner with a first workflow, first microprompts, and a first context model, and setting up memory.
710

Initiate a first execution of the automated agent using the first microprompts, the first planner, the first workflow, the first context model, and the memory.
712

Create a second workflow, second microprompts, and a second context model by applying an adaptive learning process during the first execution of the automated agent.
714

Store the second workflow, second microprompts, and second context model using the memory.
716

## FIG. 7B

750

Create an instance of an automated agent, including loading a user interface, obtaining the second workflow, the second microprompts, and the second context model via the memory, and invoking a second planner with the second workflow, the second microprompts, and the second context model.
752

Execute the automated agent using the second microprompts, the second planner, the second workflow, and the memory.
754

# FIG. 8A

800

WORKING MEMORY 802

Task Context 804

Communications 806

LONG-TERM MEMORY
810

Semantic 812

Procedural 814

Episodic 816

COLLECTIVE MEMORY
820

# FIG. 8B

850

ACCESS LEVEL 1 MEMORY
852

ACCESS LEVEL 2 MEMORY
854

ACCESS LEVEL *N* MEMORY
856

# FIG. 8C

870

**Kernel 872**

**Create 874**

Draft 874a

Re-Draft 874b

Critique 874c

Synthesis 874d

**Revise 876**

Feedback 876a

Integration 876b

Critique 876c

Synthesis 876d

Conceptual Model 880

Kernel 880a

Semantic Model 882

Kernel 882a

Syntactic Model 884

Kernel 884a

# FIG. 9

900

**Adaptive Learning 902**

| Assessment 904 | Prediction 910 | Evaluation 916 | Refinement 922 |
|---|---|---|---|
| Current Model 906 | Predicted Response 912 | Actual Response 918 | Reconciliation 924 |
| Strategic Question 908 | Reasoning 914 | Error 920 | Model Update 926 |

# FIG. 10

1000

Message 1002

| Task Intake 1004 | Decomposition 1006 | Execution 1008 | Completion 1010 |
|---|---|---|---|
| Detect Task | Atomic? | Context Preparation | Result Validation |
| Validate | Sub-Task Creation | Action Preparation | Result Aggregation |
| Reformulate | Dependency Mapping | Action Invocation | Error Handling |
| Evaluate | Sub-Task Scheduling | Self-Correction | Response Formulation |

Response 1012

1100

# FIG. 11A

Skill-Based Agents 1102

Agent 1108

Agent 1110

Agent 1112

Agent 1114

Agent Team 1104

Agent 1108

Agent 1112

Agent 1124

Collective Memory 1106

1150

# FIG. 11B

User 1152a

Agent 1152

User 1154a

Agent 1154

User 1158a

Agent 1158

User 1156a

Agent 1156

User 1160a

Agent 1160

NETWORK
1170

APPLICATION 1180

1200

1202

Good Morning FirstName1. I'm your automated agent.

1204

1206 — Continue

1208

1210

Based on your profile I see that you're a recruiter with experience working within the consumer internet space. Some in-demand skills you bring to the table are:

Talent Sourcing  Communication  Candidate Screening  1212

Are there any additional skills you'd like me to include? For example: project-management, fostering inclusivity or negotiation?

1214 — I'm also good at negotiating. 1216

1218 { Continue  Submit

1220

1222

I noticed that you wrote the following article. Does this article capture your ideal professional writing style?

1224 — ArticleTitle1
By FirstName1 LastName1
January 12, 2023

1226 { 1228

1230

Can you tell me some of your guiding principles for how you work? What's important to you? What isn't?

1232 — I really value being direct. I think it's the best way to improve at my job. I also think it's great to get this feedback often. I don't like getting feedback I can't act on.

1234

1236 { Continue  Submit

1238

# FIG. 12A

1250

1252

FirstName1 LastName1
View Profile 1256

1254

1258

(7) You, and FirstName2 both know FirstName3 LastName3, FirstName4, and 5 others

1260 — Request services   Message   More — 1264
1262

1266

**Working with automated agents**
Start by chatting with an Expert Marketplace Sourcer. They will help with accessing budget and availability **Learn more**

1268

**About**
Hi I'm FirstName1 LastName1. I'm a recruiter specializing in the consumer internet space. I'm happy to assist you in connecting you to your next new hire.

**Location**
CityName1, StateName1

**Skills provided**

Talent Sourcing   Candidate Screening   Negotiation   Communication   1270

# FIG. 12B

1300

1302    1306

Hey FirstName1, this is the first time we've done a sourcing job together. If it's ok with you can we work together on coming up with a plan to help FirstName5 find software engineers for his project?

1304

1308 — ( Let's Go )
1310

1312

Great! Based on what I know about talent sourcing I came up with following tentative plan. Feel free to reorder remove and add items to the plan.

| Create Job Description | × |
| Browse For Candidates | × |
| Calibrate on 10 candidates | × |
| Compose Personalized Outreach | × |

1314

1316 — | Step Description... |

1318 — ( Add Step )

Also please feel free to provide me feedback on how to my planning in the future.

1320 — | Type your feedback or additional skills... |

1322 — ( Continue )

TO
FIG. 13A2

# FIG. 13A1

EP 4 657 315 A1

FROM
FIG. 13A1

1324

Great! Thank you so much for the feedback. Before we start executing our first workflow together can you confirm everything looks good?

| Create Job Description | × |
| Create Search Facets | × |
| Create Evaluation Rubric | × |
| Browse For Candidates | × |
| Calibrate on 10 Candidates | × |
| Investigate High Potential Candidates | × |
| Shortlist Top 5 Candidates | × |
| Compose Personalized Outreach | × |

1326

1328 — Step Description...

Add Step — 1330

1332 — Looks Good

1334

TO
FIG. 13A3

**FIG. 13A2**

FROM
FIG. 13A2

1336

Great! Based on what I know about talent sourcing I came up with following tentative plan. Feel free to reorder remove and add items to the plan.

| Create Job Description | × |
|---|---|
| Create Search Facets | × |
| Create Evaluation Rubric | × |
| Browse For Candidates | × |
| Calibrate on 10 Candidates | × |
| Investigate High Potential Candidates | × |
| Shortlist Top 5 Candidates | × |
| Compose Personalized Outreach | × |

1338

Step Description...

1340 Add Step

Also please feel free to provide me feedback on how to my planning in the future. 1344

1342 In general this was a good start but typically we want to make sure that we think about how to compose our search queries up front. We also want to bring in candidates who don't quite fit the requirements but have other skills that might be helpful.

1346

Ok we're about to get to work. As we work together and make progress on our search can I send updates to FirstName2?

1348 1350

# FIG. 13A3

1360

1362

☆ **FirstName5's Engineer Search**

**Active Project Plan**
○ Create Job Description
○ Create Search Facets
○ Create Evaluation Rubric
○ Browse For Candidates
○ Calibrate On 10 Candidates
○ Investigate High Potential Candidates
○ Shortlist Top 5 Candidates
○ Compose Personalized Outreach

> 1364

1366

☆ **FirstName5's Engineer Search**

Active Project Plan
↺ Create Job Description
⊘ Determine If We Have A Job Description  Details
⊘ Determine If Clarification Is Needed  Details
⊘ Seek Clarification Of Role  Details
⊘ Write Job Description  Details
⊞ Verify Job Description  1370

> 1368

1372

🔵 Hello! Can you please review the following job descriptions?

B  *I*  U̲  S̶  ‹/›

1374 < About the job
CompanyName1 is the world's largest professional network, built to help members of all backgrounds and experiences achieve more in their careers. Our vision is to create economic opportunity for every member of the global workforce. Every day our members use our products to make connections, discover opportunities, build skills and gain insights. We believe amazing things happen when we work together in an environment where everyone feels a true sense of belonging, and that matters the...

TO
FIG. 13B2

# FIG. 13B1

FROM
FIG. 13B1

1376

**Active Project Plan**
⊘ Create Job Description
⊘ Create Search Facets
↺ Create Evaluation Rubric

1378

▯▯ Verify Evaluation Rubric

1380

Please review the following evaluation rubric.

| Level | Leadership | Execution | Craftsmanship |
|---|---|---|---|
| Exceeds Expectations | Has experience leading organizations. Mentors. Sets vision. | Consistently delivers on time and on budget. | Produces high quality work. |
| Meets Expectations | Has experience leading projects. Mentors. | Delivers on time and on budget. | Produces high quality work. |
| Meets Some Expectations | Mentors but hasn't led projects. | Delivers on time and on budget but has missed deadlines. | Produces high quality work but has had some issues. |

1382

○ Browse For Candidates

Confirm

TO
FIG. 13B3

# FIG. 13B2

EP 4 657 315 A1

FROM
FIG. 13B2

1384

☆ **FirstName5's Engineer Search**

Active Project Plan
⊘ Create Job Description
⊘ Create Search Facets
⊘ Create Evaluation Rubric
⊘ Browse For Candidates
↻ Calibrate On 10 Candidates —1386
  ❚❚ Review Calibrated Candidates —1388

| FirstName6 LastName6 | FirstName7 LastName7 | FirstName8 LastName8 | FirstName9 LastName9 |
|---|---|---|---|
| Software Engineer | Sr. Software Engineer | Software Engineer | Software Engineer |
| CityName2, StateName2 | CityName3, StateName3 | CityName4, StateName4 | CityName5, StateName5 |

1390

# FIG. 13B3

# FIG. 14A

1400

| Receive at least one input via at least one device. | 1402 |

| Use the at least one input to determine an entity identity. | 1404 |

| Use the entity identity to create an automated agent and load context data associated with the entity identity into at least one layer of a multi-layer memory of the automated agent. | 1406 |

| Cause the automated agent to machine-learn a supervision level via the context data, where the machine-learned supervision level indicates a level of supervision of the automated agent by an entity associated with the entity identity. | 1408 |

| Configure the automated agent to execute a task on behalf of the entity and in accordance with the machine-learned supervision level. | 1410 |

# FIG. 14B

1420

1422 Receive at least one input via at least one device.

1424 Using the at least one input, determine an objective of an entity.

1426 Using the objective, retrieve first context data from at least one first memory layer of a multi-layer memory associated with an automated agent.

1428 Cause the first context data to be presented via at least one first conversational dialog element of the automated agent.

1430 Determine context feedback data in response to the first context data.

1432 Cause the context feedback data to be stored in at least one second layer of the multi-layer memory associated with the automated agent.

1434 Using the objective, the first context data, the context feedback data, and at least one workflow, configure a first prompt to produce a context-configured prompt.

1436 Using the context-configured prompt and a machine learning model, generate a first plan including one or more tasks executable by at least the automated agent to complete the objective.

1438 Cause the first plan to be presented via at least one second conversational dialog element of the automated agent.

# FIG. 14C

1440

1442

Determine an entity identity associated with an entity.

1444

Using the entity identity, create an automated agent comprising a multi-layer memory and a workflow.

1446

Store context data related to the entity in a first layer of the multi-layer memory, where the context data is obtained using the entity identity

1448

Store at least one machine-learned entity preference in a second layer of the multi-layer memory, where the at least one machine-learned entity preference is machine-learned using the context data.

1450

Using the at least one second layer of the multi-layer memory including the at least one machine-learned preference to configure or control execution of the workflow by the automated agent.

# FIG. 14D

1460

| |
|---|
| Receive at least one input via at least one device. |

1462

| |
|---|
| Using the at least one input, determine an objective. |

1464

| |
|---|
| Using the objective, a multi-agent system, and an automated agent, causing at least one first sub-agent of the multi-agent system to generate and execute a first plan including one or more tasks to achieve the objective. |

1466

| |
|---|
| Causing at least one second sub-agent of the multi-agent system to execute a second plan to supervise the at least one first sub-agent in accordance with a supervision level, where the supervision level indicates a level of supervision of the automated agent by an entity associated with the objective. |

1468

**FIG. 15**

1500

## USER SYSTEM 1510

### USER INTERFACE 1512

### AGENT SYSTEM 1580

AGENT SYSTEM 1580

DATA STORAGE SYSTEM 1560

NETWORK 1520

## APPLICATION SYSTEM 1530

### ENTITY GRAPH 632

#### KNOWLEDGE GRAPH 634

### CONNECTION NETWORK 1536

### CONTENT DISTRIBUTION SERVICE 1538

### SEARCH ENGINE 1540

EVENT LOGGING SERVICE 1570

DATA RESOURCES AND TOOLS 1550

AI MODEL SERVICE 1590

# FIG. 16A

1600

MODEL PERFORMANCE CRITERIA 1608

TRAINING DATA SET 1609

MODELING AND CALIBRATION SUBSYSTEM 1602

Data Set Creation 1603

Model Training 1605

Model Calibration 1607

MACHINE LEARNING MODEL 1606

MODEL VALIDATION CRITERIA 1610

VALIDATION DATA SET 1611

MODEL VALIDATION SUBSYSTEM 1604

# FIG. 16B

1612

Input Feature Set X —— 1614

MACHINE LEARNING MODEL
1615

Modeling Function
1616

Feature Coefficients
1617

Model Hyperparameters
1618

1619

P(Y| X)

Where Y is an output (e.g., a label or score)
and P(Y|X) indicates a likelihood of an output Y
given an input X

*To Data Storage or Requesting Process,*
*System, Device, Framework, or Service*

1620

# FIG. 16C

1622

Input Feature Set X

MACHINE LEARNING MODEL
1624

Modeling Function
1625

Feature Coefficients
1626

Model Hyperparameters
1627

1628

P(X, Y)

Where Y is an output and P(X,Y) indicates a
likelihood of cooccurrence of an input X and an
output Y

*To Data Storage or Requesting Process,
System, Device, Framework, or Service*

# FIG. 16D

1630

1632

Input Feature Set X

DEEP NEURAL
NETWORK
1634

INPUT LAYER 1635

HIDDEN LAYERS
1636

OUTPUT LAYER 1637

1638

Predictive Output

*To Data Storage or Requesting Process,
System, Device, Framework, or Service*

## FIG. 16E

1640

**TRANSFORMER MODEL**
**1642**

**Encoder**
**1644**

Embedded
Subsequences
1650

**Decoder**
**1654**

Multi-head
Attention
1645

Encoder
Output
Representation
1652

Masked
Multi-head
Attention
1655

Add & Norm
1646

Add & Norm
1656

Feed Forward
1647

Multi-head
Attention
1657

Add & Norm
1648

Add & Norm
1658

Feed Forward
1659

Add & Norm
1660

Output
Probabilities
1662

Model Output 1664

*To Data Storage or Requesting Process,*
*System, Device, Framework, or Service*

## FIG. 17

1700

PROCESSING DEVICE
1702

INSTRUCTIONS
1712

AGENT SYSTEM
1750

MEMORY
1706

BUS 1730

MAIN MEMORY
1704

INSTRUCTIONS
1714

AGENT SYSTEM
1750

INPUT/OUTPUT SYSTEM
1710

DATA STORAGE SYSTEM
1740

MACHINE-READABLE MEDIUM
1742

INSTRUCTIONS
1744

AGENT SYSTEM
1750

NETWORK
INTERFACE DEVICE
1708

NETWORK
1720

Europäisches
Patentamt

European
Patent Office

Office européen
des brevets

## EUROPEAN SEARCH REPORT

**Application Number**

EP 25 17 2894

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A<br><br><br><br><br>A | US 2022/108068 A1 (DATLA VIVEK VARMA [US] ET AL) 7 April 2022 (2022-04-07)<br>* abstract *<br>* paragraph [0003] - paragraph [0012] *<br>* paragraph [0026] - paragraph [0041] *<br>* figures 1-5 *<br>-----<br>RAZA SAYYED JAFFAR ALI ET AL: "Constructive Policy: Reinforcement Learning Approach for Connected Multi-Agent Systems", 2019 IEEE 15TH INTERNATIONAL CONFERENCE ON AUTOMATION SCIENCE AND ENGINEERING (CASE), IEEE, 22 August 2019 (2019-08-22), pages 257-262, XP033618493, DOI: 10.1109/COASE.2019.8843223 [retrieved on 2019-09-17]<br>* the whole document *<br>----- | 1,5-10, 14,15<br>2-4, 11-13<br><br><br><br><br>1-15 | INV.<br>G06N3/006<br>G06N3/09<br><br><br><br><br><br><br><br><br><br><br>TECHNICAL FIELDS SEARCHED (IPC)<br><br>G06N<br>G06Q |

The present search report has been drawn up for all claims

| Place of search | Date of completion of the search | Examiner |
|---|---|---|
| The Hague | 6 October 2025 | Renault, Sophie |

EPO FORM 1503 03.82 (P04C01)

## ANNEX TO THE EUROPEAN SEARCH REPORT
## ON EUROPEAN PATENT APPLICATION NO.

EP 25 17 2894

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2025

| Patent document cited in search report | Publication date | Patent family member(s) | | Publication date |
|---|---|---|---|---|
| US 2022108068 A1 | 07-04-2022 | CN | 113519000 A | 19-10-2021 |
| | | EP | 3912098 A1 | 24-11-2021 |
| | | US | 2022108068 A1 | 07-04-2022 |
| | | US | 2024143921 A1 | 02-05-2024 |
| | | WO | 2020148355 A1 | 23-07-2020 |

EPO FORM P0459

For more details about this annex : see Official Journal of the European Patent Office, No. 12/82